# EUROPEAN PATENT SPECIFICATION

(11) **EP 2 169 018 B1**
(45) Date of publication and mention of the grant of the patent: **18.01.2012**
(21) Application number: 09170625.9
(22) Date of filing: 18.09.2009
(51) Int. Cl.: C09D 11/10

(54) **Ink composition and inkjet recording method**
Tintenzusammensetzung und Tintenaufzeichnungsverfahren
Composition d'encre et procédé d'enregistrement à jet d'encre

(30) Priority: 26.09.2008 JP 2008249169; 26.09.2008 JP 2008249172
(43) Date of publication of application: 31.03.2010
(73) Proprietor: Fujifilm Corporation, Minato-ku Tokyo (JP)
(72) Inventor: Araki, Kenjiro, Ashigarakami-gun Kanagawa (JP); Oshima, Yasuhito, Ashigarakami-gun Kanagawa (JP)
(74) Representative: Grünecker, Kinkeldey, Stockmair & Schwanhäusser

(56) References cited:
- EP-A- 1 614 730
- EP-A- 1 829 939
- EP-A1- 1 905 792
- WO-A-2007/029468
- WO-A1-2006/049012
- US-A1- 2004 052 967

## Description

The present invention relates to an ink composition suitably used for inkjet recording, and an inkjet recording method.

As image recording methods for forming an image on a recording medium such as paper based on an image data signal, there are an electrophotographic system, sublimation type and melt type thermal transfer systems, an inkjet system, etc. In the electrophotographic system, a process of forming an electrostatic latent image on a photosensitive drum by electrically charging and exposing is required, and the system is complicated; as a result, there is the problem that the production cost is high. With regard to the thermal transfer system, although the equipment is inexpensive, due to the use of an ink ribbon there is the problem that the running cost is high and waste material is generated.

On the other hand, with regard to the inkjet system, since an image is formed directly on a recording medium by discharging an ink composition only on a required image area using inexpensive equipment, the ink composition can be used efficiently and the running cost is low. Furthermore, there is little noise and it is excellent as an image recording system.

Furthermore, JP-A-2007-137923 (JP-A denotes a Japanese unexamined patent application publication) discloses a cationically curable reactive diluent comprising, as an acid-polymerizable compound that polymerizes in the presence of an acid, a vinyl ether compound and limonene dioxide.

Moreover, JP-A-2004-143136 discloses an oxetane compound having an electron-donating group and an electron-attracting group in the molecule and having a substituent at the 2-position.

Furthermore, JP-A-2006-232989 discloses an inkjet ink comprising an ionic compound and a pigment dispersion comprising a resin dispersant, an organic dispersion medium containing a polymerizable compound, and a black pigment having an average particle size of no greater than 200 nm at a content of at least 2 wt % but no greater than 30 wt % relative to the organic dispersion medium, the black pigment having a zeta potential, relative to the organic dispersion medium or at least one component of the organic dispersion medium, of at least -10 mV but no greater than +100 mV.

It is an object of the present invention to provide an ink composition that has excellent discharge stability, storage stability, curability, and flexibility at high pigment concentration and that gives excellent image quality for a cured image, and an inkjet recording method employing the ink composition.

The object has been attained by means <1>, <12>, <15>, or <22> below. They are described below together with <2> to <11>, <13>, <14>, <16> to <21>, <23>, and <24>, which are preferred embodiments.
<1> An ink composition comprising (A) a pigment other than titanium oxide, (B) a cationically polymerizable compound, and (C) a photo-acid generator, the pigment (A) having a content of 3.5 to 20 wt %, the cationically polymerizable compound (B) comprising only an oxirane compound and/or an oxetane compound, the oxirane compound and/or the oxetane compound comprising a low-viscosity compound having a viscosity at 25°C of no greater than 12 mPa·s, and the low-viscosity compound having a total content of 65 to 100 wt % relative to the total weight of the cationically polymerizable compound (B),
<2> the ink composition according to <1> above, wherein 60 to 100 wt % of the low-viscosity compound is a polyfunctional monomer,
<3> the ink composition according to <1> or <2> above, wherein the oxirane compound and the oxetane compound are compounds comprising only carbon, hydrogen, and ethereal oxygen atoms,
<4> the ink composition according to any one of <1> to <3> above, wherein it has a viscosity at 25°C of 7 to 35 mPa·s,
<5> the ink composition according to any one of <1> to <4> above, wherein it comprises (D) an amine compound,
<6> the ink composition according to <5> above, wherein the amine compound (D) is a hindered amine compound,
<7> the ink composition according to any one of <1> to <6> above, wherein the pigment (A) is a copper phthalocyanine pigment, an azo pigment, a quinacridone pigment, or a carbon black pigment,
<8> the ink composition according to any one of <1> to <7> above, wherein the pigment (A) is a copper phthalocyanine pigment, and the copper phthalocyanine pigment has a content of 3.5 to 10 wt %,
<9> the ink composition according to any one of <1> to <7> above, wherein the pigment (A) is an azo pigment, and the azo pigment has a content of 7.5 to 20 wt %,
<10> the ink composition according to any one of <1> to <7> above, wherein the pigment (A) is a quinacridone pigment, and the quinacridone pigment has a content of 7.5 to 20 wt %,
<11> the ink composition according to any one of <1> to <7> above, wherein the pigment (A) is a carbon black pigment, and the carbon black pigment has a content of 6.0 to 10 wt %,
<12> an inkjet recording method comprising (a¹) a step of discharging the ink composition according to any one of <1> to <11> above onto a recording medium and (b¹) a step of curing the ink composition by irradiating the discharged ink composition with actinic radiation,
<13> the inkjet recording method according to <12> above, wherein the discharging is carried out using an inkjet head that discharges an ink composition by means of deformation of a piezoelectric element,
<14> the inkjet recording method according to <12> or <13> above, wherein the discharging is carried out with a liquid droplet volume of 1 to 10 pL and at 1,200 x 1,200 to 4,800 x 4,800 dpi,
<15> an ink composition comprising (A') titanium oxide, (B) a cationically polymerizable compound, and (C) a photo-acid generator, the titanium oxide (A') having a content of 35 to 45 wt %, the cationically polymerizable compound (B) comprising an oxirane compound, oxetane compound, or vinyl ether compound having a viscosity at 25°C of no greater than 12 mPa·s, and the oxirane compound, oxetane compound, and vinyl ether compound having a viscosity at 25°C of no greater than 12 mPa·s having a total content of 65 to 100 wt % relative to the total weight of the cationically polymerizable compound (B),
<16> the ink composition according to <15> above, wherein 60 to 100 wt % of the total weight of the oxirane compound, oxetane compound, and vinyl ether compound having a viscosity at 25°C of no greater than 12 mPa·s is a polyfunctional monomer,
<17> the ink composition according to <15> or <16> above, wherein the cationically polymerizable compound (B) is a compound comprising only carbon, hydrogen, and ethereal oxygen atoms,
<18> the ink composition according to any one of <15> to <17> above, wherein the cationically polymerizable compound (B) comprises only an oxirane compound, an oxetane compound, and/or a vinyl ether compound,
<19> the ink composition according to any one of <15> to <18> above, wherein it has a viscosity at 25°C of 7 to 35 mPa·s,
<20> the ink composition according to any one of <15> to <19> above, wherein it comprises (D) an amine compound,
<21> the ink composition according to <20> above, wherein the amine compound (D) is a hindered amine compound,
<22> an inkjet recording method comprising (a¹) a step of discharging the ink composition according to any one of <15> to <21> above onto a recording medium and (b¹) a step of curing the ink composition by irradiating the discharged ink composition with actinic radiation,
<23> the inkjet recording method according to <22> above, wherein the discharging is carried out using an inkjet head that discharges an ink composition by means of deformation of a piezoelectric element, and
<24> the inkjet recording method according to <22> or <23> above, wherein the discharging is carried out with a liquid droplet volume of 1 to 10 pL and at 1,200 x 1,200 to 4,800 x 4,800 dpi.

In accordance with the present invention, there can be provided an ink composition that has excellent discharge stability, storage stability, curability, and flexibility at high pigment concentration and that gives excellent image quality for a cured image, and an inkjet recording method employing the ink composition.

### (1) Ink composition

The ink composition (hereinafter, also simply called an 'ink') of the present invention in accordance with a first aspect of the present invention comprises (A) a pigment other than titanium oxide, (B) a cationically polymerizable compound, and (C) a photo-acid generator, the pigment (A) having a content of 3.5 to 20 wt %, the cationically polymerizable compound (B) comprising only an oxirane compound and/or an oxetane compound, the oxirane compound and/or the oxetane compound comprising a low-viscosity compound having a viscosity at 25°C of no greater than 12 mPa·s, and the low-viscosity compound having a total content of 65 to 100 wt % relative to the total weight of the cationically polymerizable compound (B).

Furthermore, the ink composition of the present invention in accordance with a second aspect of the present invention comprises (A') titanium oxide, (B) a cationically polymerizable compound, and (C) a photo-acid generator, the titanium oxide (A') having a content of 35 to 45 wt %, the cationically polymerizable compound (B) comprising an oxirane compound, oxetane compound, or vinyl ether compound having a viscosity at 25°C of no greater than 12 mPa·s, and the oxirane compound, oxetane compound, and vinyl ether compound having a viscosity at 25°C of no greater than 12 mPa·s having a total content of 65 to 100 wt % relative to the total weight of the cationically polymerizable compound (B).

The ink compositions of the present invention in accordance with the first and second aspects of the present invention may be used suitably as ink compositions for inkjet recording.

The present invention is explained in detail below.

The ink compositions of the present invention in accordance with the first and second aspects of the present invention are ink compositions that can be cured by radiation, and are oil-based ink compositions.

The 'radiation' referred to in the present invention is not particularly limited as long as it is actinic radiation that can provide energy that enables an initiating species to be generated in the ink composition when irradiated, and broadly includes α rays, y rays, X rays, UV rays, visible light, and an electron beam; among these, UV rays and an electron beam are preferable from the viewpoint of curing sensitivity and the availability of equipment, and UV rays are particularly preferable. The ink composition of the present invention is therefore preferably an ink composition that is curable upon exposure to UV rays as radiation.

Components of the ink composition that can be used in the first aspect of the present invention are first explained, components of the ink composition that can be used in the second aspect of the present invention are then explained, and components of the ink composition that can be used in both the first and second aspects of the present invention are subsequently explained.

The components of the ink composition that can be used in the first aspect of the present invention are first explained below.

### (A) Pigment other than titanium oxide

The ink composition of the present invention in accordance with the first aspect of the present invention comprises (A) a pigment other than titanium oxide (hereinafter, also simply called a 'pigment').

The content of the pigment in the ink composition of the present invention in accordance with the first aspect of the present invention is 3.5 to 20 wt % relative to the entire ink composition.

The pigment is not particularly limited as long as it is one other than titanium oxide, and can be selected appropriately according to an intended application; examples thereof include known organic and inorganic pigments, resin particles dyed with a dye, a commercial pigment dispersion, and a surface-treated pigment (e.g. one obtained by dispersing a pigment in an insoluble resin, etc. as a dispersion medium or one obtained by grafting a resin on the surface of a pigment). Specific examples of the pigment include those described in, for example, 'Ganryo no Jiten' (Dictionary of Pigments) Ed. by Seijirou Ito (2000), W. Herbst, K. Hunger 'Industrial Organic Pigments', JP-A-2002-12607, JP-A-2002-188025, JP-A-2003-26978, and JP-A-2003-342503.

A pigment generally means a colorant that is sparingly soluble in various types of solvents (organic solvents, water), and with regard to a usual ink composition, the amount of pigment dissolved in the ink composition relative to the total solids content of the pigment contained therein is no greater than 10 wt %.

Examples of the organic pigment and inorganic pigment include a yellow pigment, a magenta pigment, a cyan pigment, a green pigment, an orange pigment, a black pigment, and a white pigment.

The yellow pigment is a pigment exhibiting a yellow color, and examples thereof include monoazo pigments such as C.I. Pigment Yellow 1 (Fast Yellow G, etc.) and C.I. Pigment Yellow 74, disazo pigments such as C.I. Pigment Yellow 12 (Disazo Yellow AAA, etc.) and C.I. Pigment Yellow 17, benzidine-free azo pigments such as C.I. Pigment Yellow 180, azo lake pigments such as C.I. Pigment Yellow 100 (Tartrazine Yellow Lake, etc.), condensed azo pigments such as C.I. Pigment Yellow 95 (Azo Condensation Yellow GR, etc.), acidic dye lake pigments such as C.I. Pigment Yellow 115 (Quinoline Yellow Lake, etc.), basic dye lake pigments such as C.I. Pigment Yellow 18 (Thioflavine Lake, etc.), anthraquinone pigments such as Flavanthrone Yellow (Y-24), isoindolinone pigments such as Isoindolinone Yellow 3RLT (Y-110), quinophthalone pigments such as Quinophthalone Yellow (Y-138), isoindoline pigments such as Isoindoline Yellow (Y-139), nitroso pigments such as C.I. Pigment Yellow 153 (Nickel Nitroso Yellow, etc.), and metal complex azomethine pigments such as C.I. Pigment Yellow 117 (Copper Azomethine Yellow, etc.).

The magenta pigment is a pigment exhibiting a red or magenta color, and examples thereof include monoazo pigments such as C.I. Pigment Red 3 (Toluidine Red, etc.), disazo pigments such as C.I. Pigment Red 38 (Pyrazolone Red B, etc.), azo lake pigments such as C.I. Pigment Red 53:1 (Lake Red C, etc.) and C.I. Pigment Red 57:1 (Brilliant Carmine 6B), condensed azo pigments such as C.I. Pigment Red 144 (Azo Condensation Red BR, etc.), acidic dye lake pigments such as C.I. Pigment Red 174 (Phloxine B Lake, etc.), basic dye lake pigments such as C.I. Pigment Red 81 (Rhodamine 6G' Lake, etc.), anthraquinone pigments such as C.I. Pigment Red 177 (Dianthraquinonyl Red, etc.), thioindigo pigments such as C.I. Pigment Red 88 (Thioindigo Bordeaux, etc.), perinone pigments such as C.I. Pigment Red 194 (Perinone Red, etc.), perylene pigments such as C.I. Pigment Red 149 (Perylene Scarlet, etc.), quinacridone pigments such as C.I. Pigment Violet 19 (unsubstituted quinacridone) and C.I. Pigment Red 122 (Quinacridone Magenta, etc.), isoindolinone pigments such as C.I. Pigment Red 180 (Isoindolinone Red 2BLT, etc.), and alizarin lake pigments such as C.I. Pigment Red 83 (Madder Lake, etc.).

The cyan pigment is a pigment exhibiting a blue or cyan color, and examples thereof include disazo pigments such as C.I. Pigment Blue 25 (Dianisidine Blue, etc.), phthalocyanine pigments such as C.I. Pigment Blue 15 (Phthalocyanine Blue, etc.), acidic dye lake pigments such as C.I. Pigment Blue 24 (Peacock Blue Lake, etc.), basic dye lake pigments such as C.I. Pigment Blue 1 (Victoria Pure Blue BO Lake, etc.), anthraquinone pigments such as C.I. Pigment Blue 60 (Indanthrone Blue, etc.), and alkali blue pigments such as C.I. Pigment Blue 18 (Alkali Blue V-5:1).

The green pigment is a pigment exhibiting a green color, and examples thereof include phthalocyanine pigments such as C.I. Pigment Green 7 (Phthalocyanine Green) and C.I. Pigment Green 36 (Phthalocyanine Green), and azo metal complex pigments such as C.I. Pigment Green 8 (Nitroso Green). The orange pigment is a pigment exhibiting an orange color, and examples thereof include isoindoline pigments such as C.I. Pigment Orange 66 (Isoindoline Orange) and anthraquinone pigments such as C.I. Pigment Orange 51 (Dichloropyranthrone Orange).

The black pigment is a pigment exhibiting a black color, and examples thereof include carbon black, titanium black, and aniline black.

Examples of the white pigment include basic lead carbonate (2PbCO₃Pb(OH)₂, also known as silver white), zinc oxide (ZnO, also known as zinc white), and strontium titanate (SrTiO₃, also known as titan strontium white).

Among them, the ink composition of the present invention preferably comprises at least one type of pigment selected from the group consisting of a yellow pigment, a magenta pigment, a cyan pigment, and a black pigment, more preferably a magenta pigment, a cyan pigment, a yellow pigment, or a black pigment, and particularly preferably a copper phthalocyanine pigment, an azo pigment, a quinacridone pigment, or a carbon black pigment.

Furthermore, it is preferable not to use a white pigment as a pigment that can be used in the present invention.

When a copper phthalocyanine pigment is used as the pigment, the content of the copper phthalocyanine pigment is preferably 3.5 to 10 wt % relative to the total weight of the ink composition.

When an azo pigment is used as the pigment, the content of the azo pigment is preferably 7.5 to 20 wt % relative to the total weight of the ink composition.

When a quinacridone pigment is used as the pigment, the content of the quinacridone pigment is preferably 7.5 to 20 wt % relative to the total weight of the ink composition.

When a carbon black pigment is used as the pigment, the content of the carbon black pigment is preferably 6.0 to 10 wt % relative to the total weight of the ink composition.

For dispersion of the pigment, for example, dispersing equipment such as a ball mill, a sand mill, an attritor, a roll mill, a jet mill, a homogenizer, a paint shaker, a kneader, an agitator, a Henschel mixer, a colloidal mill, an ultrasonic homogenizer, a pearl mill, or a wet-type jet mill may suitably be used.

In the present invention, when dispersing the pigment, it is particularly preferable to add a polymer compound.

Furthermore, when the pigment is dispersed, as a dispersion adjuvant it is also possible to use a synergist as necessary according to the various types of pigment. The content of the dispersion adjuvant in the ink composition is preferably 1 to 50 parts by weight relative to 100 parts by weight of the pigment.

A dispersion medium used when dispersing the pigment in the ink composition is not particularly limited and may be selected appropriately according to an intended application and, for example, the polymerizable compound, which has a low molecular weight, may be used as the dispersion medium, or a solvent may be used as the dispersion medium. However, since the ink composition of the present invention is a radiation curing type ink composition and is cured after the ink composition is applied onto a recording medium, it is preferable for it not to contain the solvent and to be free from solvent. When it is free from solvent, there is no residual solvent in a cured ink image, sufficient solvent resistance is obtained, and a VOC (Volatile Organic Compound) problem due to residual solvent can be prevented. Because of this, it is preferable to use the polymerizable compound as the dispersion medium by selecting, in particular, a polymerizable compound having the lowest viscosity from the viewpoint of improving dispersion suitability and handling properties of the ink composition.

The average particle size of the pigment is not particularly limited and may be selected appropriately according to an intended application, but since the finer the particle size the better the coloring properties, it is preferably on the order of 0.01 to 0.4 µm, and more preferably 0.02 to 0.2 µm. The maximum particle size of the pigment is preferably no greater than 3 µm, and more preferably no greater than 1 µm. The particle size of the pigment may be adjusted by selection of the pigment, dispersant, and dispersion medium and setting of dispersion conditions and filtration conditions, etc., and by controlling the particle size of the pigment it is possible to suppress clogging of a head nozzle and maintain storage stability, transparency, and curing sensitivity of the ink composition. Since the present invention comprises a polymeric dispersant, which has excellent dispersing properties and stability, even when the pigment, which is particulate, is used, a uniform and stable ink composition can be prepared.

The particle size of the pigment in the ink composition may be measured by a known measurement method. Specifically, it may be measured by a centrifugal sedimentation light transmission method, an X-ray transmission method, a laser diffraction/scattering method, or a dynamic light scattering method. (B) Cationically polymerizable compound

The ink composition of the present invention in accordance with the first aspect of the present invention comprises (B) a cationically polymerizable compound.

Furthermore, the cationically polymerizable compound in the ink composition of the present invention in accordance with the first aspect of the present invention comprises only an oxirane compound and/or an oxetane compound.

Moreover, the oxirane compound and/or the oxetane compound in the ink composition of the present invention in accordance with the first aspect of the present invention comprise a low-viscosity compound having a viscosity at 25°C of no greater than 12 mPa·s. That is, the ink composition of the present invention in accordance with the first aspect of the present invention comprises a low-viscosity compound having a viscosity at 25°C of no greater than 12 mPa·s. Needless to say, the low-viscosity compound is an oxirane compound having a viscosity at 25°C of no greater than 12 mPa·s and/or an oxetane compound having a viscosity at 25°C of no greater than 12 mPa·s.

Furthermore, the total content of the low-viscosity compound in the ink composition of the present invention in accordance with the first aspect of the present invention is 65 to 100 wt % relative to the total weight of the cationically polymerizable compound. Since the cationically polymerizable compound in the ink composition of the present invention in accordance with the first aspect of the present invention comprises only an oxirane compound and/or an oxetane compound, the total content of the low-viscosity compound can in other words be said to be 65 to 100 wt % relative to the total weight of the oxirane compound and the oxetane compound.

The cationically polymerizable compound that can be used in the present invention is not particularly limited as long as it is a compound having an oxirane ring (also called an 'epoxy ring') (also called an 'oxirane compound' or an 'epoxy compound') and a compound having an oxetane ring (also called an 'oxetane compound').

Examples of the cationically polymerizable compound include epoxy compounds and oxetane compounds described in JP-A-6-9714, JP-A-2001-31892, JP-A-2001-40068, JP-A-2001-55507, JP-A-2001-310938, JP-A-2001-310937, JP-A-2001-220526, etc.

Examples of epoxy compounds include an aromatic epoxide, an alicyclic epoxide, and an aliphatic epoxide; examples of the aromatic epoxide include a di- or poly-glycidyl ether formed by a reaction between epichlorohydrin and a polyhydric phenol having at least one aromatic nucleus or an alkylene oxide adduct thereof, and specific examples thereof include a di- or poly-glycidyl ether of bisphenol A or an alkylene oxide adduct thereof, a di- or poly-glycidyl ether of hydrogenated bisphenol A or an alkylene oxide adduct thereof, and a novolac epoxy resin. Examples of the alkylene oxide include ethylene oxide and propylene oxide.

Preferred examples of the alicyclic epoxide include a cyclohexene oxide- or cyclopentene oxide-containing compound obtained by epoxidizing a compound having at least one cycloalkane ring such as a cyclohexene ring or a cyclopentene ring by means of an appropriate oxidizing agent such as hydrogen peroxide or a peracid.

Examples of the aliphatic epoxide include a di- or poly-glycidyl ether of an aliphatic polyhydric alcohol or an alkylene oxide adduct thereof, and representative examples thereof include an alkylene glycol diglycidyl ether such as ethylene glycol diglycidyl ether, propylene glycol diglycidyl ether, or 1,6-hexanediol diglycidyl ether, a polyhydric alcohol polyglycidyl ether such as a di- or triglycidyl ether of glycerol or an alkylene oxide adduct thereof, and a diglycidyl ether of a polyalkylene glycol represented by a diglycidyl ether of polyethylene glycol or an alkylene oxide adduct thereof, or a diglycidyl ether of polypropylene glycol or an alkylene oxide adduct thereof. Examples of the alkylene oxide include ethylene oxide and propylene oxide.

Monofunctional and polyfunctional epoxy compounds that can be used in the present invention are illustrated in detail below.

Examples of monofunctional epoxy compounds include phenyl glycidyl ether, *p-tert-*butylphenyl glycidyl ether, butyl glycidyl ether, 2-ethylhexyl glycidyl ether, allyl glycidyl ether, 1,2-butylene oxide, 1,3-butadiene monooxide, 1,2-epoxydodecane, epichlorohydrin, 1,2-epoxydecane, styrene oxide, cyclohexene oxide, 3-methacryloyloxymethylcyclohexene oxide, 3-acryloyloxymethylcyclohexene oxide, 3-vinylcyclohexene oxide, and 4-vinylcyclohexene oxide.

Furthermore, examples of polyfunctional epoxy compounds include bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolac resins, hydrogenated bisphenol A diglycidyl ether, hydrogenated bisphenol F diglycidyl ether, hydrogenated bisphenol S diglycidyl ether, 3,4-epoxycyclohexylmethyl 3',4'-epoxycyclohexanecarboxylate, 2-(3,4-epoxycyclohexyl-5,5- spiro-3,4-epoxy)cyclohexane-meta-dioxane, bis(3,4-epoxycyclohexylmethyl) adipate, bis(3,4-epoxy-6-methylcyclohexylmethyl) adipate, 3,4-epoxy-6-methylcyclohexyl 3',4'-epoxy-6'-methylcyclohexanecarboxylate, methylenebis(3,4-epoxycyclohexane), dicyclopentadiene diepoxide, the di(3,4-epoxycyclohexylmethyl) ether of ethylene glycol, ethylenebis(3,4-epoxycyclohexanecarboxylate), dioctyl epoxyhexahydrophthalate, di-2-ethylhexyl epoxyhexahydrophthalate, 1,4-butanediol diglycidyl ether, 1,6-hexanediol diglycidyl ether, glycerol triglycidyl ether, trimethylolpropane triglycidyl ether, polyethylene glycol diglycidyl ether, polypropylene glycol diglycidyl ether, 1,13-tetradecadiene dioxide, limonene dioxide, 1,2,7,8-diepoxyoctane, and 1,2,5,6-diepoxycyclooctane.

Among these epoxy compounds, the aromatic epoxides and the alicyclic epoxides are preferable from the viewpoint of excellent curing speed, and the alicyclic epoxides are particularly preferable.

The oxetane compound that can be used in the present invention means a compound having at least one oxetane ring, and a known oxetane compound such as one described in JP-A-2001-220526, JP-A-2001-310937, or JP-A-2003-341217 may be selected freely.

As the compound having an oxetane ring that can be used in the ink composition of the present invention, a compound having 1 to 4 oxetane rings in the structure is preferable. In accordance with the use of such a compound, it becomes easy to maintain the viscosity of the ink composition in a range that gives good handling properties and, furthermore, high adhesion of a cured ink composition to a recording medium can be obtained.

Examples of compounds having 1 to 2 oxetane rings in the molecule include compounds represented by Formulae (1) to (3) below.

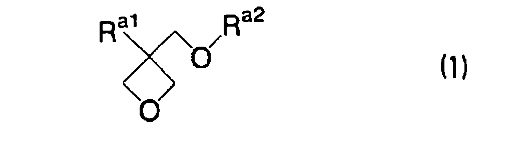

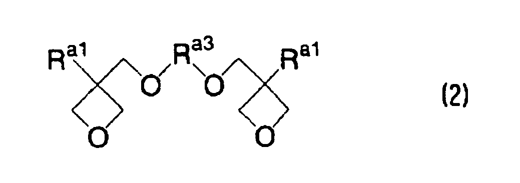

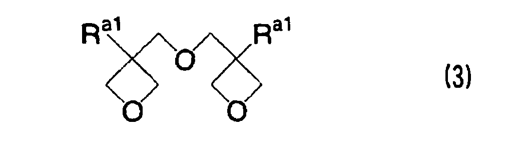

R^{a1} denotes a hydrogen atom, an alkyl group having 1 to 6 carbon atoms, a fluoroalkyl group having 1 to 6 carbon atoms, an allyl group, an aryl group, a furyl group, or a thienyl group. When there are two R^{a1}s in the molecule, they may be identical to or different from each other.

Examples of the alkyl group include a methyl group, an ethyl group, a propyl group, and a butyl group, and preferred examples of the fluoroalkyl group include those obtained by replacing any of the hydrogen atoms of the above alkyl groups with a fluorine atom.

R^{a2} denotes a hydrogen atom, an alkyl group having 1 to 6 carbon atoms, an alkenyl group having 2 to 6 carbon atoms, a group having an aromatic ring, an alkylcarbonyl group having 2 to 6 carbon atoms, an alkoxycarbonyl group having 2 to 6 carbon atoms, or an *N*-alkylcarbamoyl group having 2 to 6 carbon atoms. Examples of the alkyl group include a methyl group, an ethyl group, a propyl group, and a butyl group, examples of the alkenyl group include a 1-propenyl group, a 2-propenyl group, a 2-methyl-1-propenyl group, a 2-methyl-2-propenyl group, a 1-butenyl group, a 2-butenyl group, and a 3-butenyl group, and examples of the group having an aromatic ring include a phenyl group, a benzyl group, a fluorobenzyl group, a methoxybenzyl group, and a phenoxyethyl group. Examples of the alkylcarbonyl group include an ethylcarbonyl group, a propylcarbonyl group, and a butylcarbonyl group, examples of the alkoxycarbonyl group include an ethoxycarbonyl group, a propoxycarbonyl group, and a butoxycarbonyl group, and examples of the N-alkylcarbamoyl group include an ethylcarbamoyl group, a propylcarbamoyl group, a butylcarbamoyl group, and a pentylcarbamoyl group. Furthermore, R^{a2} may have a substituent, and examples of the substituent include a fluorine atom and an alkyl group having 1 to 6 carbon atoms.

R^{a3} denotes a linear or branched alkylene group, a linear or branched poly(alkyleneoxy) group, a linear or branched unsaturated hydrocarbon group, a carbonyl group, a carbonyl group-containing alkylene group, a carboxy group-containing alkylene group, a carbamoyl group-containing alkylene group, or a group shown below. Examples of the alkylene group include an ethylene group, a propylene group, and a butylene group, and examples of the poly(alkyleneoxy) group include a poly(ethyleneoxy) group and a poly(propyleneoxy) group. Examples of the unsaturated hydrocarbon group include a propenylene group, a methylpropenylene group, and a butenylene group.

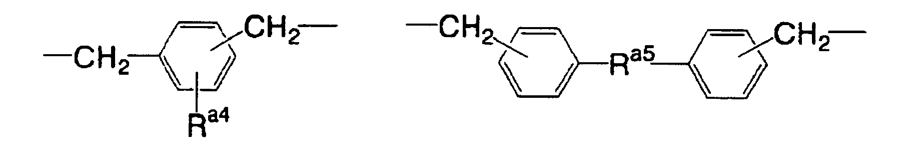

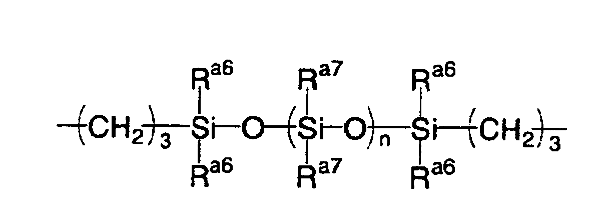

When R^{a3} is the above-mentioned polyvalent group, R^{a4} denotes a hydrogen atom, an alkyl group having 1 to 4 carbon atoms, an alkoxy group having 1 to 4 carbon atoms, a halogen atom, a nitro group, a cyano group, a mercapto group, a lower alkylcarboxy group, a carboxy group, or a carbamoyl group.

R^{a5} denotes an oxygen atom, a sulfur atom, a methylene group, NH, SO, SO₂, C(CF₃)₂, or C(CH₃)₂.

R^{a6} denotes an alkyl group having 1 to 4 carbon atoms or an aryl group, and n is an integer of 0 to 2,000. R^{a7} denotes an alkyl group having 1 to 4 carbon atoms, an aryl group, or a monovalent group having the structure below. In the formula, R^{a8} denotes an alkyl group having 1 to 4 carbon atoms or an aryl group, and m is an integer of 0 to 100.

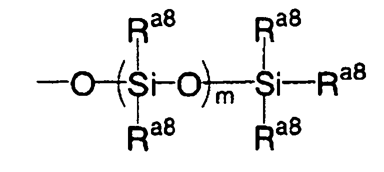

Examples of compounds represented by Formula (1) include 3-ethyl-3-hydroxymethyloxetane (OXT-101: Toagosei Co., Ltd.), 3-ethyl-3-(2-ethylhexyloxymethyl)oxetane (OXT-212: Toagosei Co., Ltd.), and 3-ethyl-3-phenoxymethyloxetane (OXT-211: Toagosei Co., Ltd.). Examples of compounds represented by Formula (2) include 1,4-bis[(3-ethyl-3-oxetanylmethoxy)methyl]benzene (OXT-121: Toagosei Co., Ltd.). Furthermore, examples of compounds represented by Formula (3) include bis(3-ethyl-3-oxetanylmethyl) ether (OXT-221: Toagosei Co., Ltd.).

Examples of compounds having 3 to 4 oxetane rings in the molecule include compounds represented by Formula (4) below.

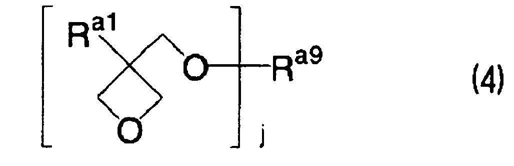

In Formula (4), R^{a1} denotes the same as in Formula (1) above. Furthermore, examples of R^{a9}, which is a polyvalent linking group, include a branched alkylene group having 1 to 12 carbon atoms such as a group represented by A to C below, a branched poly(alkyleneoxy) group such as a group represented by D below, and a branched polysiloxane group such as a group represented by E below. j is 3 or 4.

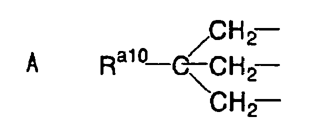

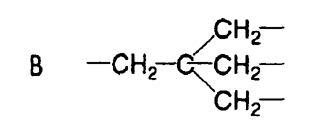

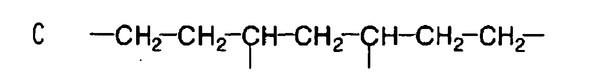

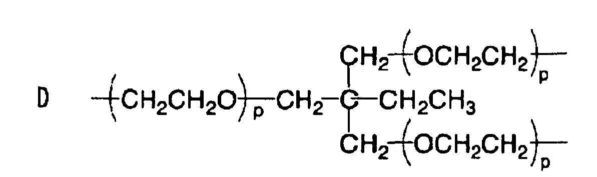

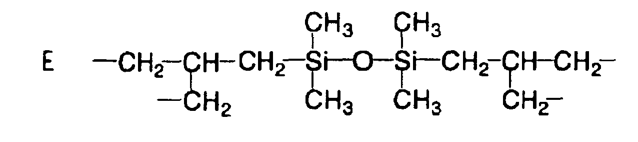

In A above, R^{a10} denotes a methyl group, an ethyl group, or a propyl group. Furthermore, in D above, p is an integer of 1 to 10.

Moreover, as another mode of the oxetane compound that can be suitably used in the present invention, a compound having an oxetane ring in a side chain, represented by Formula (5) below, can be cited.

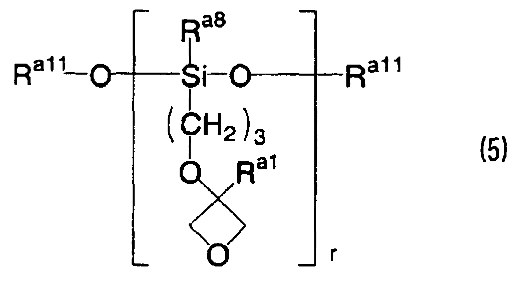

In Formula (5), R^{a1} and R^{a8} denote the same as in the above-mentioned formulae. R^{a11} is an alkyl group having 1 to 4 carbons such as a methyl group, an ethyl group, a propyl group, or a butyl group, or a trialkylsilyl group, and r is 1 to 4.

Such compounds having an oxetane ring are described in detail in paragraph Nos. 0021 to 0084 of JP-A-2003-341217 above, and the compounds described therein may be suitably used in the present invention.

Oxetane compounds described in JP-A-2004-91556 may also be used in the present invention. They are described in detail in paragraph Nos. 0022 to 0058 of JP-A-2004-91556.

Among the oxetane compounds used in the present invention, from the viewpoint of ink composition viscosity and tackiness, it is preferable to use a compound having one oxetane ring.

### Low-viscosity compound

The low-viscosity compound in accordance with the first aspect of the present invention is an oxirane compound having a viscosity at 25°C of no greater than 12 mPa·s and/or an oxetane compound having a viscosity at 25°C of no greater than 12 mPa·s.

The method for measuring viscosity at 25°C of a cationically polymerizable compound or an ink composition is not particularly limited, but is preferably a measurement method in accordance with JIS Z8803.

Furthermore, as an instrument for measuring viscosity, it is preferable to use a rotational viscometer, and particularly preferably a B or E type rotational viscometer.

As a specific method for measuring viscosity at 25°C of a cationically polymerizable compound and an ink composition, for example, it is preferably measured using a model RE80 viscometer (Toki Sangyo Co., Ltd.) at a liquid temperature of 25°C after stabilizing by rotating for 2 minutes by means of a rotor.

Furthermore, it is preferable that of the low-viscosity compound in the ink composition of the present invention 60 to 100 wt % is a polyfunctional monomer, it is more preferable that of the low-viscosity compound 65 to 95 wt % is a polyfunctional monomer, and it is yet more preferable that of the low-viscosity compound 70 to 80 wt % is a polyfunctional monomer. When in the above-mentioned range, an ink composition that has particularly excellent curability and high flexibility can be obtained.

Moreover, it is preferable that the low-viscosity compound in the ink composition of the present invention is a compound comprising only carbon, hydrogen, and ethereal oxygen atoms, and it is more preferable that all of the oxirane compound and the oxetane compound in the ink composition of the present invention are compounds comprising only carbon, hydrogen, and ethereal oxygen atoms. When the above-mentioned mode is employed, storage stability is particularly good.

Specific examples of the low-viscosity compound include (LM-1) to (LM-16) below. Furthermore, the viscosity value given on the right-hand side in the specific examples below is the viscosity at 25°C (mPa·s). In the present invention, in some of the chemical structural formulae a hydrocarbon chain is represented by a simplified structural formula in which symbols for carbon (C) and hydrogen (H) are omitted.

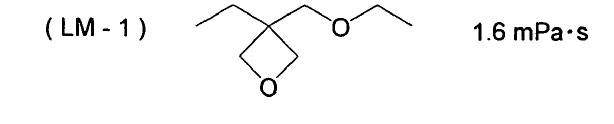

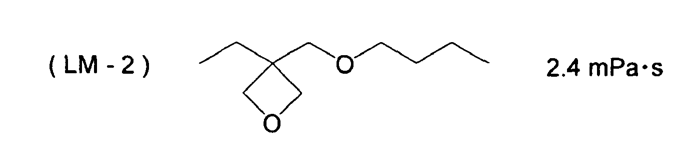

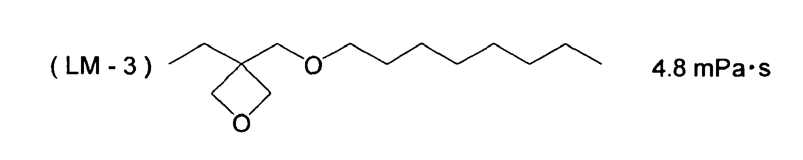

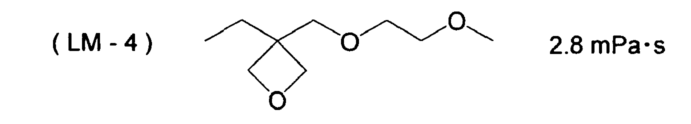

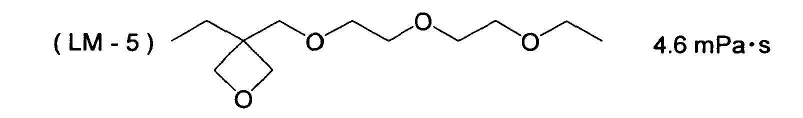

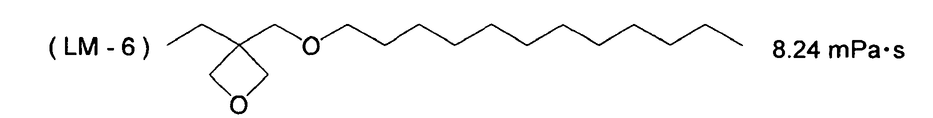

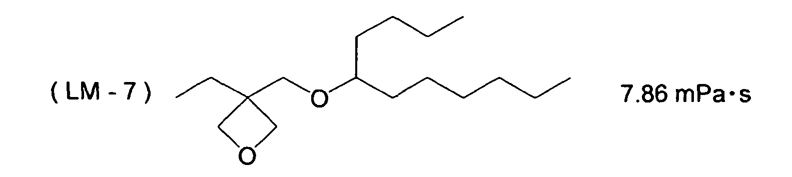

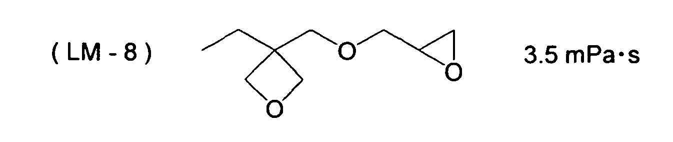

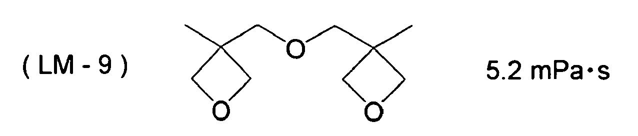

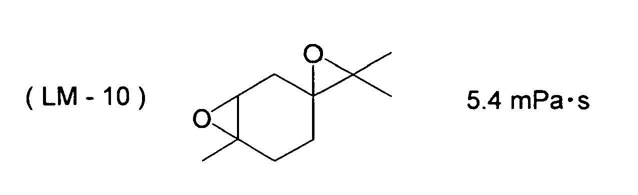

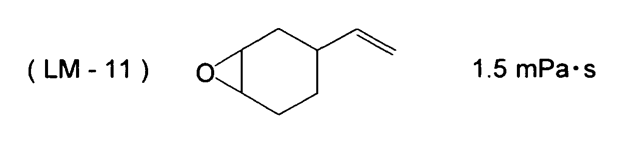

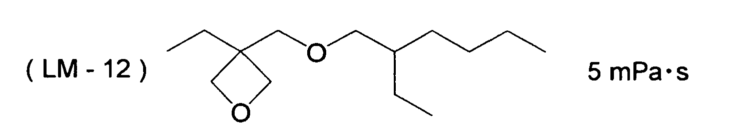

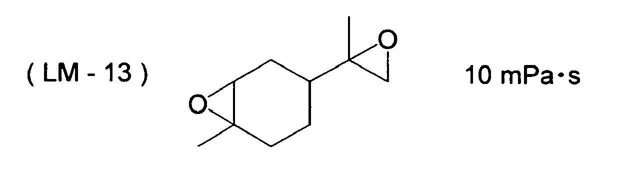

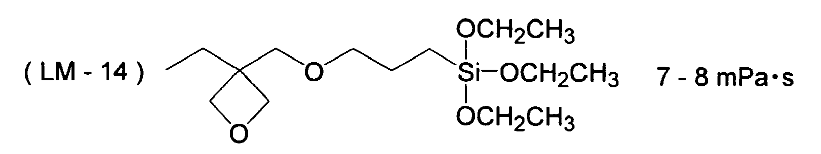

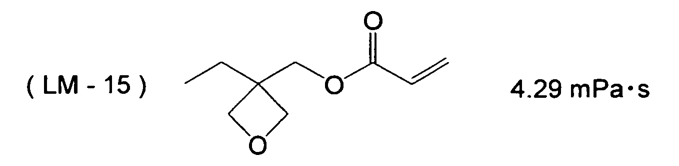

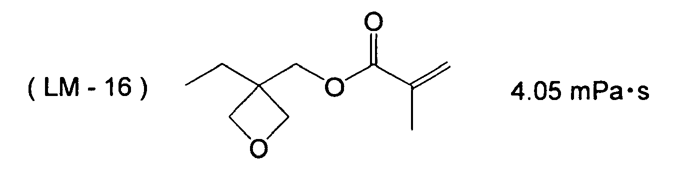

Among them, it is preferable to use (LM-1) to (LM-13).

The molecular weight of the low-viscosity compound is preferably 98 to 300, and more preferably 124 to 294.

Furthermore, the low-viscosity compound is preferably an aliphatic compound having no aromatic ring.

### High viscosity compound

As the cationically polymerizable compound, an oxirane compound having a viscosity at 25°C of greater than 12 mPa·s and/or an oxetane compound having a viscosity at 25°C of greater than 12 mPa·s (also together called 'high viscosity compounds') may be used.

When an oxirane compound or an oxetane compound has, for example, an aromatic ring or a polar group such as a hydroxy group or an amino group, it is often a compound having a viscosity at 25°C of greater than 12 mPa·s.

Specific examples of the high viscosity compound include (HM-1) to (HM-17) below. Furthermore, the viscosity value given on the right-hand side in the specific examples below is the viscosity at 25°C (mPa·s).

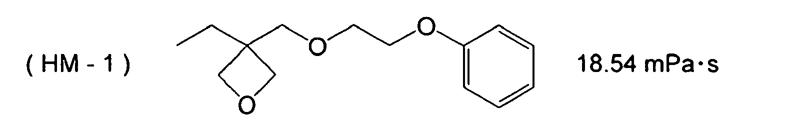

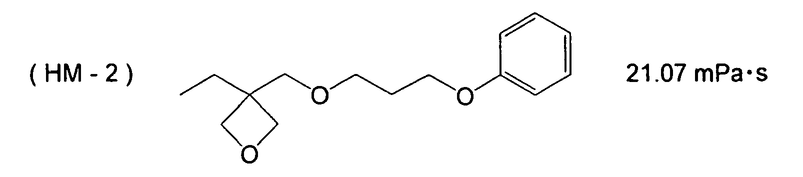

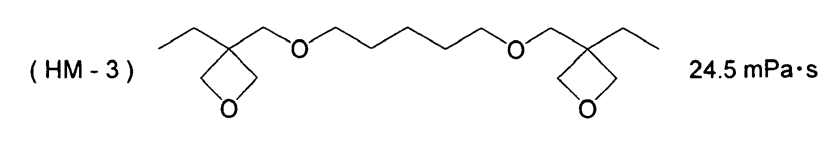

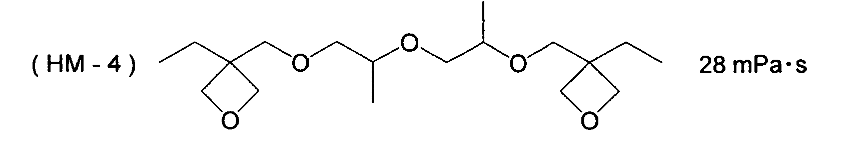

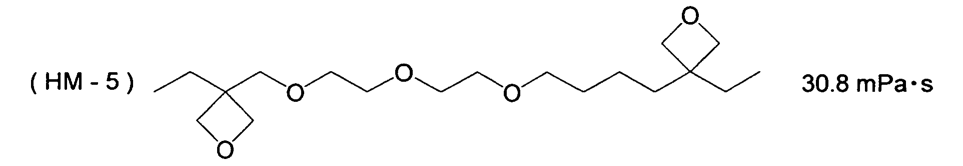

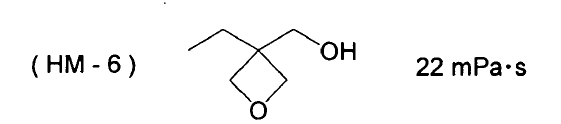

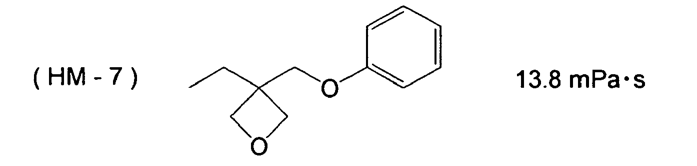

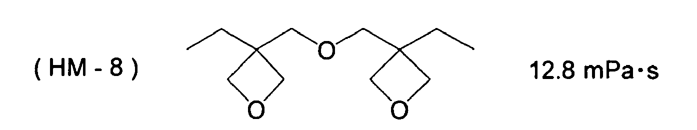

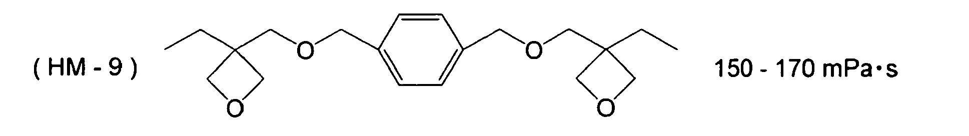

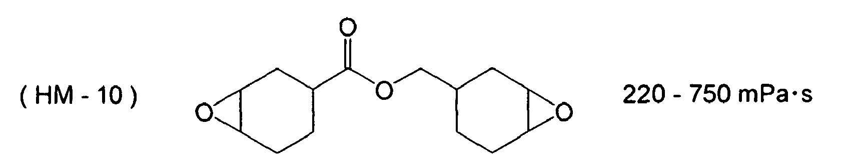

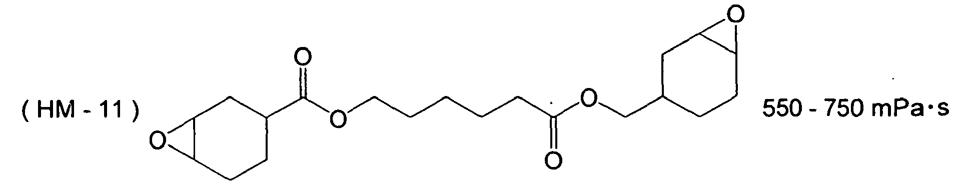

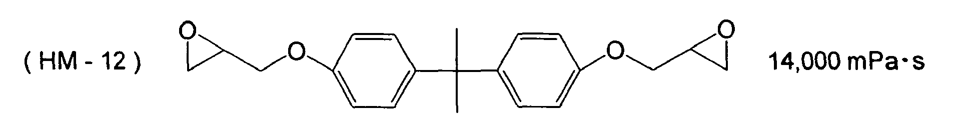

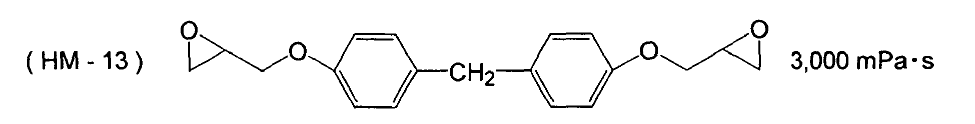

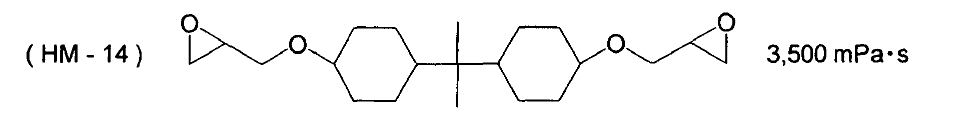

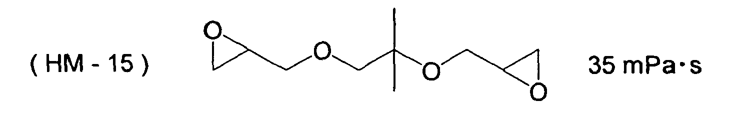

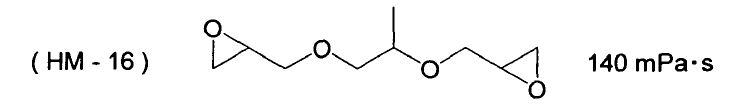

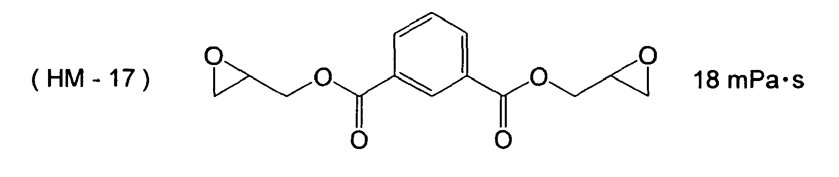

The cationically polymerizable compound preferably comprises an oxirane compound and an oxetane compound, more preferably comprises a polyfunctional oxirane compound and a polyfunctional oxetane compound, yet more preferably comprises a monofunctional oxetane compound, a polyfunctional oxirane compound, and a polyfunctional oxetane compound, and particularly preferably comprises only a monofunctional oxetane compound, a polyfunctional oxirane compound, and a polyfunctional oxetane compound.

The content of the cationically polymerizable compound in the ink composition is preferably 10 to 95 wt %, more preferably 30 to 90 wt %, and yet more preferably 50 to 85 wt %, relative to the total solids content of the ink composition.

Components of the ink composition that can be used in the second aspect of the present invention are now explained.

### (A') Titanium oxide

The ink composition of the present invention in accordance with the second aspect of the present invention comprises (A') titanium oxide.

Since titanium oxide has a low specific gravity and a large refractive index and is chemically and physically stable compared with other white pigments, it has high hiding power and coloring power as a pigment and has excellent durability toward acid, alkali, and other environments.

The titanium oxide is not particularly limited and may be selected appropriately from known titanium oxides used as white pigments. Either rutile type titanium dioxide or anatase type titanium dioxide may be used, but rutile type titanium dioxide is preferably used from the viewpoint of low catalytic activity and excellent stability over time.

Titanium oxide is commercially available, and examples thereof include Tipaque CR60-2 and Tipaque A-220 (both from Ishihara Sangyo Kaisha Ltd.), and KRONOS 1001, 1014, 1071, 1074, 1075, 1077, 1078, 1080, 1171, 2044, 2047, 2056, 2063, 2080, 2081, 2084, 2087, 2160, 2190, 2211, 2220, 2222, 2225, 2230, 2233, 2257, 2300, 2310, 2450, 2500, 3000, and 3025 (all from KRONOS).

The titanium oxide may be subjected to a surface treatment as necessary. Specifically, it is treated with silica, alumina, zinc, zirconia, or an organic substance, and the weatherability and oleophilicity are varied according to the treatment method. In the present invention, one treated with alumina, zinc, zirconia, or a basic organic substance is preferable.

In the second aspect of the present invention, the amount of titanium oxide added to the ink composition is preferably 35 to 45 wt %, more preferably 36 to 45 wt %, and yet more preferably 36 to 44 wt %, relative to the total weight of the ink composition.

In a conventional white ink composition, when a large amount of titanium oxide is added degradation in sensitivity toward actinic radiation, degradation in discharge stability and storage stability, graininess in a cured image, and poor image quality are sometimes observed.

By the use of a specific cationically polymerizable compound in the ink composition of the present invention, even when the amount of titanium oxide added to the ink composition is 35 to 45 wt % relative to the total weight of the ink composition, high sensitivity toward actinic radiation can be maintained, excellent discharge stability and storage stability can be obtained, and a cured image having excellent image quality can be obtained.

For dispersion of titanium oxide, for example, dispersing equipment such as a ball mill, a sand mill, an attritor, a roll mill, a jet mill, a homogenizer, a paint shaker, a kneader, an agitator, a Henschel mixer, a colloidal mill, an ultrasonic homogenizer, a pearl mill, or a wet-type jet mill may be used.

Furthermore, when titanium oxide is added to the ink composition, as a dispersion adjuvant it is also possible to use a synergist as necessary according to the various types of pigment.

The dispersion adjuvant is preferably added at 1 to 50 parts by weight relative to 100 parts by weight of titanium oxide.

In the ink composition, as a dispersion medium for various components such as titanium oxide a solvent may be added, or a cationically polymerizable compound, which is a low molecular weight component and is described later, may be used as a dispersion medium without using a solvent, but since the ink composition of the present invention is a radiation curing type ink composition and is cured after being applied onto a recording medium, it is preferable for it to be solvent-free. This is because, if solvent remains in the cured image, the solvent resistance is degraded and a VOC (Volatile Organic Compound) problem of residual solvent occurs. From this viewpoint, it is preferable to use the cationically polymerizable compound as a dispersion medium and it is particularly preferable to select a cationically polymerizable compound having the lowest viscosity in terms of improvement of dispersion suitability and handling properties of an ink composition.

The average particle size of the titanium oxide is preferably 0.1 to 0.5 µm, more preferably 0.1 to 0.3 µm, and yet more preferably 0.15 to 0.25 µm. The maximum particle size is preferably no greater than 1 µm, and more preferably no greater than 0.5 µm. It is preferable to select the titanium oxide, dispersant, and dispersion medium and set dispersion conditions and filtration conditions so that the maximum particle size is in the above-mentioned range. Furthermore, it is also effective to remove large particles by a post-treatment such as centrifugation. By controlling the particle size it is possible to suppress clogging of a head nozzle and maintain storage stability (in particular, inhibition of sedimentation), sufficient hiding properties, and curing sensitivity of the ink composition.

The particle size of the titanium oxide in the ink composition may be measured by a known measurement method. Specifically, it may be measured by a centrifugal sedimentation light transmission method, an X-ray transmission method, a laser diffraction/scattering method, or a dynamic light scattering method. (B) Cationically polymerizable compound

The ink composition of the present invention in accordance with the second aspect of the present invention comprises (B) a cationically polymerizable compound.

Furthermore, the cationically polymerizable compound in the ink composition of the present invention in accordance with the second aspect of the present invention comprises an oxirane compound, oxetane compound, or vinyl ether compound having a viscosity at 25°C of no greater than 12 mPa·s. The 'oxirane compound, oxetane compound, or vinyl ether compound having a viscosity at 25°C of no greater than 12 mPa·s' described above has the same meaning as an 'oxirane compound having a viscosity at 25°C of no greater than 12 mPa·s, an oxetane compound having a viscosity at 25°C of no greater than 12 mPa·s, or a vinyl ether compound having a viscosity at 25°C of no greater than 12 mPa·s'.

Furthermore, the total content of the oxirane compound, oxetane compound, and vinyl ether compound having a viscosity at 25°C of no greater than 12 mPa·s in the ink composition of the present invention in accordance with the second aspect of the present invention is 65 to 100 wt % relative to the total weight of the cationically polymerizable compound.

As the cationically polymerizable compound that can be used in the present invention, a known cationically polymerizable compound such as a compound having an oxirane ring (also called an 'epoxy ring') (also called an 'oxirane compound' or 'epoxy compound'), a compound having an oxetane ring (also called an 'oxetane compound'), or a vinyl ether compound may be used without any particular restrictions.

As the cationically polymerizable compound that can be used in the present invention, a compound that undergoes a polymerization reaction by a cationic polymerization initiating species generated from a cationic polymerization initiator, which is described later, and cures may be used without any particular restrictions, and various types of known cationically polymerizable monomers known as cationically photopolymerizable monomers may be used. Examples of the cationically polymerizable monomers include epoxy compounds, vinyl ether compounds, and oxetane compounds described in JP-A-6-9714, JP-A-2001-31892, JP-A-2001-40068, JP-A-2001-55507, JP-A-2001-310938, JP-A-2001-310937, JP-A-2001-220526, etc. Furthermore, as the cationically polymerizable compound, for example, a cationic polymerization type photocurable resin is known, and in recent years a cationic photopolymerization type photocurable resin that is sensitized to a visible light wavelength region of 400 nm or greater has been disclosed in, for example, JP-A-6-43633 and JP-A-8-324137.

Examples of epoxy compounds include an aromatic epoxide, an alicyclic epoxide, and an aliphatic epoxide; examples of the aromatic epoxide include a di- or poly-glycidyl ether formed by a reaction between epichlorohydrin and a polyhydric phenol having at least one aromatic nucleus or an alkylene oxide adduct thereof, and specific examples thereof include a di- or poly-glycidyl ether of bisphenol A or an alkylene oxide adduct thereof, a di- or poly-glycidyl ether of hydrogenated bisphenol A or an alkylene oxide adduct thereof, and a novolac epoxy resin. Examples of the alkylene oxide include ethylene oxide and propylene oxide.

Preferred examples of the alicyclic epoxide include a cyclohexene oxide- or cyclopentene oxide-containing compound obtained by epoxidizing a compound having at least one cycloalkane ring such as a cyclohexene ring or a cyclopentene ring by means of an appropriate oxidizing agent such as hydrogen peroxide or a peracid.

Examples of the aliphatic epoxide include a di- or poly-glycidyl ether of an aliphatic polyhydric alcohol or an alkylene oxide adduct thereof, and representative examples thereof include an alkylene glycol diglycidyl ether such as ethylene glycol diglycidyl ether, propylene glycol diglycidyl ether, or 1,6-hexanediol diglycidyl ether, a polyhydric alcohol polyglycidyl ether such as a di- or triglycidyl ether of glycerol or an alkylene oxide adduct thereof, and a diglycidyl ether of a polyalkylene glycol represented by a diglycidyl ether of polyethylene glycol or an alkylene oxide adduct thereof, or a diglycidyl ether of polypropylene glycol or an alkylene oxide adduct thereof. Examples of the alkylene oxide include ethylene oxide and propylene oxide.

Monofunctional and polyfunctional epoxy compounds that can be used in the present invention are illustrated in detail below.

Examples of monofunctional epoxy compounds include phenyl glycidyl ether, *p-tert*-butylphenyl glycidyl ether, butyl glycidyl ether, 2-ethylhexyl glycidyl ether, allyl glycidyl ether, 1,2-butylene oxide, 1,3-butadiene monooxide, 1,2-epoxydodecane, epichlorohydrin, 1,2-epoxydecane, styrene oxide, cyclohexene oxide, 3-methacryloyloxymethylcyclohexene oxide, 3-acryloyloxymethylcyclohexene oxide, 3-vinylcyclohexene oxide, and 4-vinylcyclohexene oxide.

Furthermore, examples of polyfunctional epoxy compounds include bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolac resins, hydrogenated bisphenol A diglycidyl ether, hydrogenated bisphenol F diglycidyl ether, hydrogenated bisphenol S diglycidyl ether, 3,4-epoxycyclohexylmethyl 3',4'-epoxycyclohexanecarboxylate, 2-(3,4-epoxycyclohexyl-5,5- spiro-3,4-epoxy)cyclohexane-meta-dioxane, bis(3,4-epoxycyclohexylmethyl) adipate, bis(3,4-epoxy-6-methylcyclohexylmethyl) adipate, 3,4-epoxy-6-methylcyclohexyl 3',4'-epoxy-6'-methylcyclohexanecarboxylate, methylenebis(3,4-epoxycyclohexane), dicyclopentadiene diepoxide, the di(3,4-epoxycyclohexylmethyl) ether of ethylene glycol, ethylenebis(3,4-epoxycyclohexanecarboxylate), dioctyl epoxyhexahydrophthalate, di-2-ethylhexyl epoxyhexahydrophthalate, 1,4-butanediol diglycidyl ether, 1,6-hexanediol diglycidyl ether, glycerol triglycidyl ether, trimethylolpropane triglycidyl ether, polyethylene glycol diglycidyl ether, polypropylene glycol diglycidyl ether, 1,13-tetradecadiene dioxide, limonene dioxide, 1,2,7,8-diepoxyoctane, and 1,2,5,6-diepoxycyclooctane.

Among these epoxy compounds, the aromatic epoxides and the alicyclic epoxides are preferable from the viewpoint of excellent curing speed, and the alicyclic epoxides are particularly preferable.

Examples of vinyl ether compounds include di- or tri-vinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether, and monovinyl ether compounds such as ethyl vinyl ether, *n*-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, *n*-propyl vinyl ether, isopropyl vinyl ether, isopropenyl vinyl ether, dodecyl vinyl ether, diethylene glycol monovinyl ether, and octadecyl vinyl ether.

Monofunctional vinyl ethers and polyfunctional vinyl ethers are illustrated in detail below.

Examples of monofunctional vinyl ethers include methyl vinyl ether, ethyl vinyl ether, propyl vinyl ether, *n*-butyl vinyl ether, *t*-butyl vinyl ether, 2-ethylhexyl vinyl ether, *n*-nonyl vinyl ether, lauryl vinyl ether, cyclohexyl vinyl ether, cyclohexylmethyl vinyl ether, 4-methylcyclohexylmethyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxypolyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethylcyclohexylmethyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether, and phenoxypolyethylene glycol vinyl ether.

Furthermore, examples of polyfunctional vinyl ethers include divinyl ethers such as ethylene glycol divinyl ether, diethylene glycol divinyl ether, polyethylene glycol divinyl ether, propylene glycol divinyl ether, butylene glycol divinyl ether, hexanediol divinyl ether, a bisphenol A alkylene oxide divinyl ether, and a bisphenol F alkylene oxide divinyl ether; and polyfunctional vinyl ethers such as trimethylolethane trivinyl ether, trimethylolpropane trivinyl ether, ditrimethylolpropane tetravinyl ether, glycerol trivinyl ether, pentaerythritol tetravinyl ether, dipentaerythritol pentavinyl ether, dipentaerythritol hexavinyl ether, trimethylolpropane ethylene oxide adduct trivinyl ether, trimethylolpropane propylene oxide adduct trivinyl ether, ditrimethylolpropane ethylene oxide adduct tetravinyl ether, ditrimethylolpropane propylene oxide adduct tetravinyl ether, pentaerythritol ethylene oxide adduct tetravinyl ether, pentaerythritol propylene oxide adduct tetravinyl ether, dipentaerythritol ethylene oxide adduct hexavinyl ether, and dipentaerythritol propylene oxide adduct hexavinyl ether.

As the vinyl ether compound, the di- or tri-vinyl ether compounds are preferable from the viewpoint of curability, adhesion to a recording medium, surface hardness of the image formed, etc., and the divinyl ether compounds are particularly preferable.

The oxetane compound that can be used in the present invention means a compound having at least one oxetane ring, and a known oxetane compound such as one described in JP-A-2001-220526, JP-A-2001-310937, or JP-A-2003-341217 may be selected freely.

As the compound having an oxetane ring that can be used in the ink composition of the present invention, a compound having 1 to 4 oxetane rings in the structure is preferable. In accordance with the use of such a compound, it becomes easy to maintain the viscosity of the ink composition in a range that gives good handling properties and, furthermore, high adhesion of a cured ink composition to a recording medium can be obtained.

Examples of compounds having 1 to 2 oxetane rings in the molecule include compounds represented by Formulae (1) to (3) below.

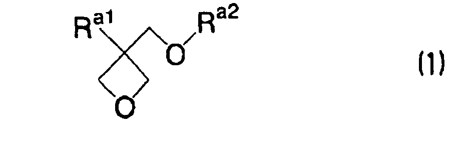

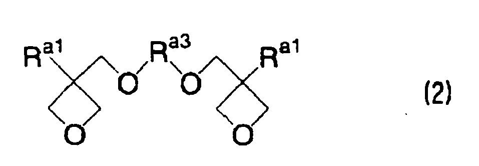

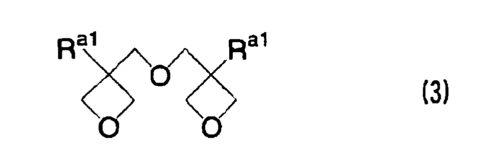

R^{a1} denotes a hydrogen atom, an alkyl group having 1 to 6 carbon atoms, a fluoroalkyl group having 1 to 6 carbon atoms, an allyl group, an aryl group, a furyl group, or a thienyl group. When there are two R^{a1}s in the molecule, they may be identical to or different from each other.

Examples of the alkyl group include a methyl group, an ethyl group, a propyl group, and a butyl group, and preferred examples of the fluoroalkyl group include those obtained by replacing any of the hydrogen atoms of the above alkyl groups with a fluorine atom.

R^{a2} denotes a hydrogen atom, an alkyl group having 1 to 6 carbon atoms, an alkenyl group having 2 to 6 carbon atoms, a group having an aromatic ring, an alkylcarbonyl group having 2 to 6 carbon atoms, an alkoxycarbonyl group having 2 to 6 carbon atoms, or an *N*-alkylcarbamoyl group having 2 to 6 carbon atoms. Examples of the alkyl group include a methyl group, an ethyl group, a propyl group, and a butyl group, examples of the alkenyl group include a 1-propenyl group, a 2-propenyl group, a 2-methyl-1-propenyl group, a 2-methyl-2-propenyl group, a 1-butenyl group, a 2-butenyl group, and a 3-butenyl group, and examples of the group having an aromatic ring include a phenyl group, a benzyl group, a fluorobenzyl group, a methoxybenzyl group, and a phenoxyethyl group. Examples of the alkylcarbonyl group include an ethylcarbonyl group, a propylcarbonyl group, and a butylcarbonyl group, examples of the alkoxycarbonyl group include an ethoxycarbonyl group, a propoxycarbonyl group, and a butoxycarbonyl group, and examples of the N-alkylcarbamoyl group include an ethylcarbamoyl group, a propylcarbamoyl group, a butylcarbamoyl group, and a pentylcarbamoyl group. Furthermore, R^{a2} may have a substituent, and examples of the substituent include a fluorine atom and an alkyl group having 1 to 6 carbon atoms.

R^{a3} denotes a linear or branched alkylene group, a linear or branched poly(alkyleneoxy) group, a linear or branched unsaturated hydrocarbon group, a carbonyl group, a carbonyl group-containing alkylene group, a carboxy group-containing alkylene group, a carbamoyl group-containing alkylene group, or a group shown below. Examples of the alkylene group include an ethylene group, a propylene group, and a butylene group, and examples of the poly(alkyleneoxy) group include a poly(ethyleneoxy) group and a poly(propyleneoxy) group. Examples of the unsaturated hydrocarbon group include a propenylene group, a methylpropenylene group, and a butenylene group.

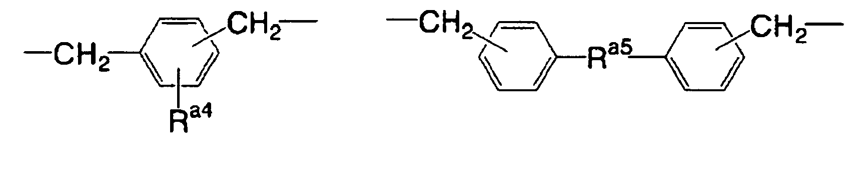

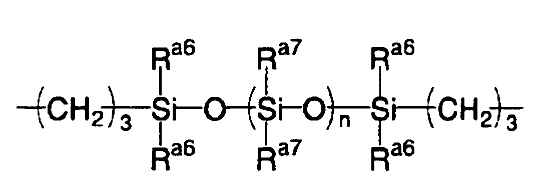

When R^{a3} is the above-mentioned polyvalent group, R^{a4} denotes a hydrogen atom, an alkyl group having 1 to 4 carbon atoms, an alkoxy group having 1 to 4 carbon atoms, a halogen atom, a nitro group, a cyano group, a mercapto group, a lower alkylcarboxy group, a carboxy group, or a carbamoyl group.

R^{a5} denotes an oxygen atom, a sulfur atom, a methylene group, NH, SO, SO₂, C(CF₃)₂, or C(CH₃)₂.

R^{a6} denotes an alkyl group having 1 to 4 carbon atoms or an aryl group, and n is an integer of 0 to 2,000. R^{a7} denotes an alkyl group having 1 to 4 carbon atoms, an aryl group, or a monovalent group having the structure below. In the formula, R^{a8} denotes an alkyl group having 1 to 4 carbon atoms or an aryl group, and m is an integer of 0 to 100.

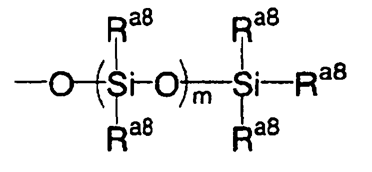

Examples of compounds represented by Formula (1) include 3-ethyl-3-hydroxymethyloxetane (OXT-101: Toagosei Co., Ltd.), 3-ethyl-3-(2-ethylhexyloxymethyl)oxetane (OXT-212: Toagosei Co., Ltd.), and 3-ethyl-3-phenoxymethyloxetane (OXT-211: Toagosei Co., Ltd.). Examples of compounds represented by Formula (2) include 1,4-bis[(3-ethyl-3-oxetanylmethoxy)methyl]benzene (OXT-121: Toagosei Co., Ltd.). Furthermore, examples of compounds represented by Formula (3) include bis(3-ethyl-3-oxetanylmethyl) ether (OXT-221: Toagosei Co., Ltd.).

Examples of compounds having 3 to 4 oxetane rings in the molecule include compounds represented by Formula (4) below.

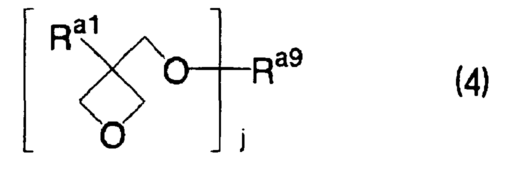

In Formula (4), R^{a1} denotes the same as in Formula (1) above. Furthermore, examples of R^{a9}, which is a polyvalent linking group, include a branched alkylene group having 1 to 12 carbon atoms such as a group represented by A to C below, a branched poly(alkyleneoxy) group such as a group represented by D below, and a branched polysiloxane group such as a group represented by E below. j is 3 or 4.

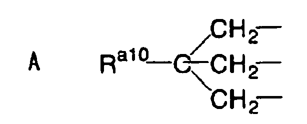

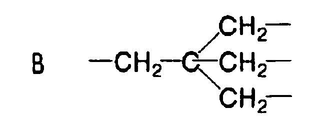

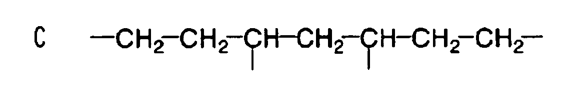

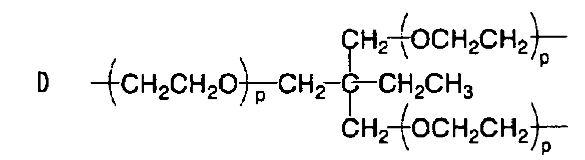

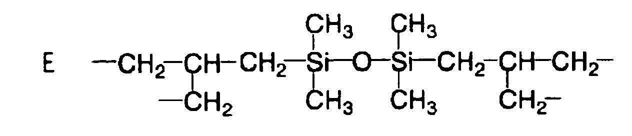

In A above, R^{a10} denotes a methyl group, an ethyl group, or a propyl group. Furthermore, in D above, p is an integer of 1 to 10.

Moreover, as another mode of the oxetane compound that can be suitably used in the present invention, a compound having an oxetane ring in a side chain, represented by Formula (5) below, can be cited.

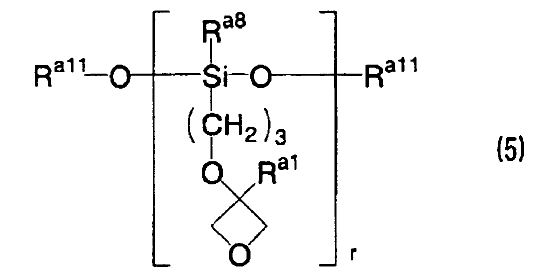

In Formula (5), R^{a1} and R^{a8} denote the same as in the above-mentioned formulae. R^{a11} is an alkyl group having 1 to 4 carbons such as a methyl group, an ethyl group, a propyl group, or a butyl group, or a trialkylsilyl group, and r is 1 to 4.

Such compounds having an oxetane ring are described in detail in paragraph Nos. 0021 to 0084 of JP-A-2003-341217 above, and the compounds described therein may be suitably used in the present invention.

Oxetane compounds described in JP-A-2004-91556 may also be used in the present invention. They are described in detail in paragraph Nos. 0022 to 0058 of JP-A-2004-91556.

Among the oxetane compounds used in the present invention, from the viewpoint of ink composition viscosity and tackiness, it is preferable to use a compound having one oxetane ring.

### Low-viscosity compound

In accordance with the second aspect of the present invention, an oxirane compound having a viscosity at 25°C of no greater than 12 spas, an oxetane compound having a viscosity at 25°C of no greater than 12 mPa·s, and a vinyl ether compound having a viscosity at 25°C of no greater than 12 mPa·s are collectively called low-viscosity compounds.

The ink composition of the present invention comprises the low-viscosity compound as a cationically polymerizable compound.

The total content of the low-viscosity compound in the ink composition of the present invention is 65 to 100 wt % relative to the total weight of the cationically polymerizable compound.

The method for measuring viscosity at 25°C of a cationically polymerizable compound or an ink composition is not particularly limited, but is preferably a measurement method in accordance with JIS Z8803.

Furthermore, as an instrument for measuring viscosity, it is preferable to use a rotational viscometer, and particularly preferably a B or E type rotational viscometer.

As a specific method for measuring viscosity at 25°C of a cationically polymerizable compound and an ink composition, for example, it is preferably measured using a model RE80 viscometer (Toki Sangyo Co., Ltd.) at a liquid temperature of 25°C after stabilizing by rotating for 2 minutes by means of a rotor.

Furthermore, it is preferable that of the low-viscosity compound in the ink composition of the present invention 60 to 100 wt % is a polyfunctional monomer, it is more preferable that of the low-viscosity compound 65 to 95 wt % is a polyfunctional monomer, and it is yet more preferable that of the low-viscosity compound 70 to 80 wt % is a polyfunctional monomer. When in the above-mentioned range, an ink composition that has particularly excellent curability and high flexibility can be obtained.

Moreover, it is preferable that the oxirane compound, oxetane compound, and vinyl ether compound having a viscosity at 25°C of no greater than 12 mPa·s in the ink composition of the present invention are compounds comprising only carbon, hydrogen, and ethereal oxygen atoms, and it is more preferable that all of the cationically polymerizable compounds in the ink composition of the present invention are compounds comprising only carbon, hydrogen, and ethereal oxygen atoms. When the above-mentioned mode is employed, storage stability is particularly good.

Specific examples of the oxirane compound, oxetane compound, and vinyl ether compound having a viscosity at 25°C of no greater than 12 mPa·s include (LM-1) to (LM-18) below. Furthermore, the viscosity value given on the right-hand side in the specific examples below is the viscosity at 25°C (mPa·s). In the present invention, in some of the chemical structural formulae a hydrocarbon chain is represented by a simplified structural formula in which symbols for carbon (C) and hydrogen (H) are omitted.

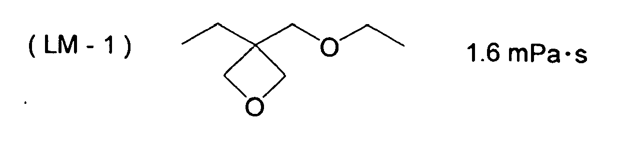

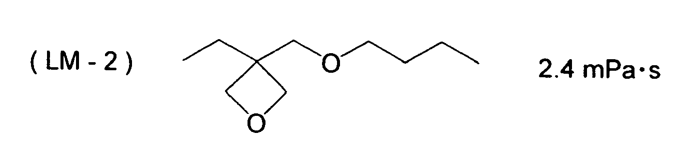

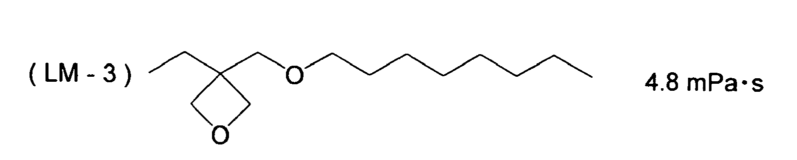

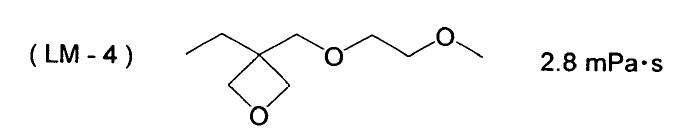

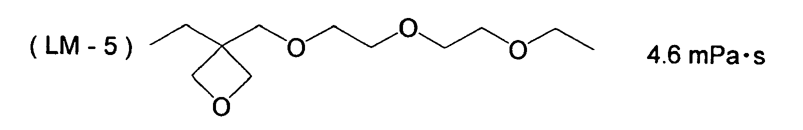

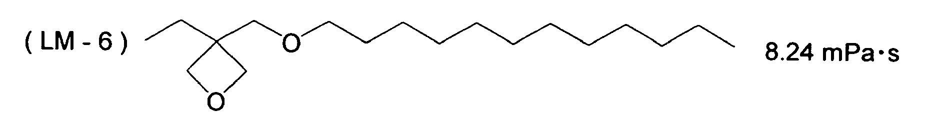

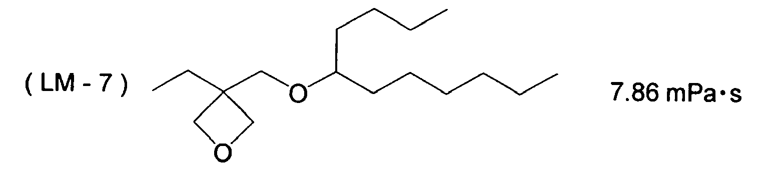

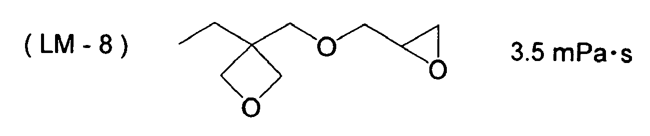

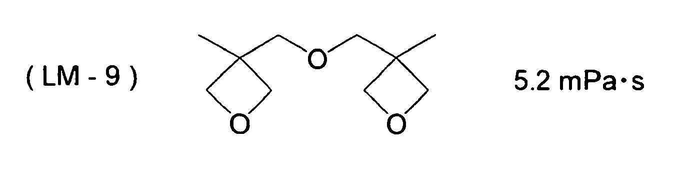

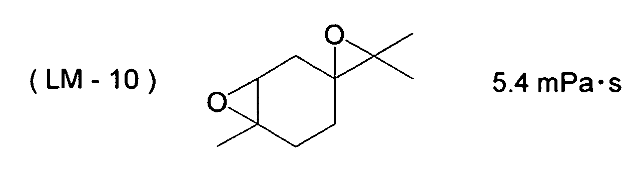

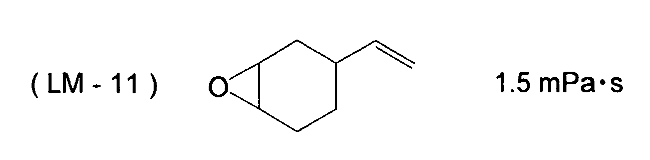

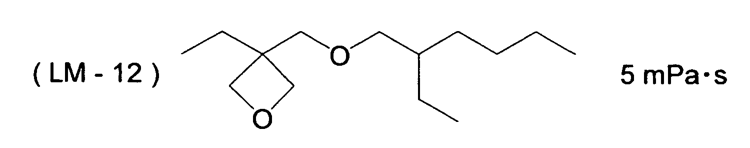

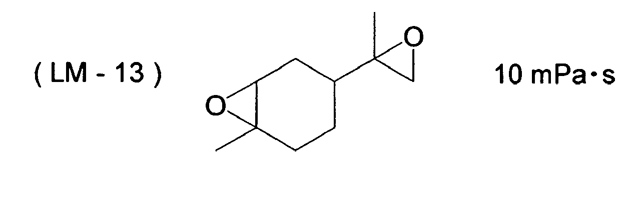

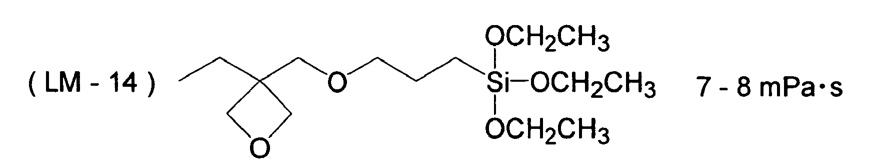

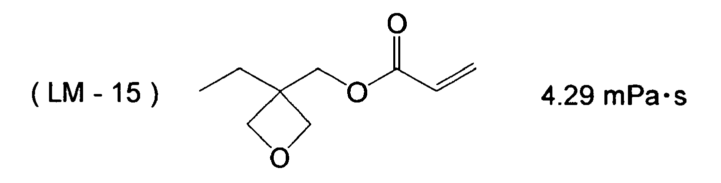

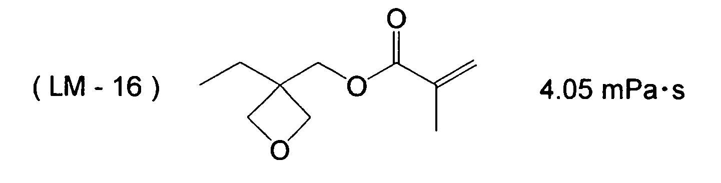

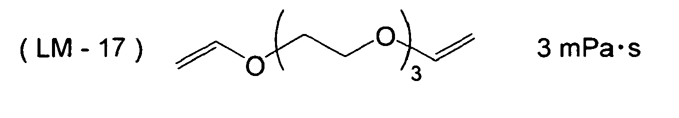

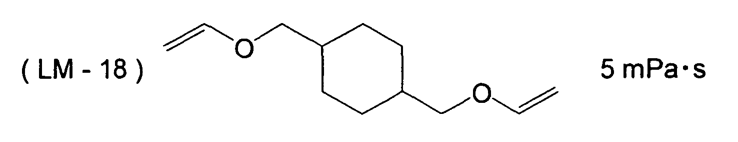

Among them, it is preferable to use (LM-1) to (LM-13).

The molecular weight of the low-viscosity compound is preferably 98 to 300, and more preferably 124 to 294.

Furthermore, the low-viscosity compound is preferably an aliphatic compound having no aromatic ring.

### High viscosity compound

As the cationically polymerizable compound, an oxirane compound having a viscosity at 25°C of greater than 12 mPa·s, an oxetane compound having a viscosity at 25°C of greater than 12 mPa·s, and/or a vinyl ether compound having a viscosity at 25°C of greater than 12 mPa·s (also together called 'high viscosity compounds') may be used.

When an oxirane compound, an oxetane compound, or a vinyl ether compound has, for example, an aromatic ring or a polar group such as a hydroxy group or an amino group, it is often a compound having a viscosity at 25°C of greater than 12 mPa·s.

Specific examples of the high viscosity compound include (HM-1) to (HM-17) below. Furthermore, the viscosity value given on the right-hand side in the specific examples below is the viscosity at 25°C (mPa·s).

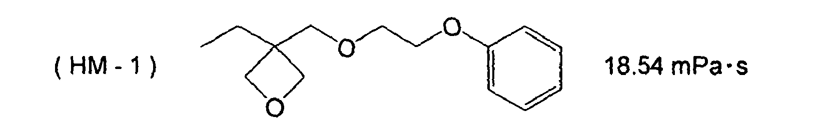

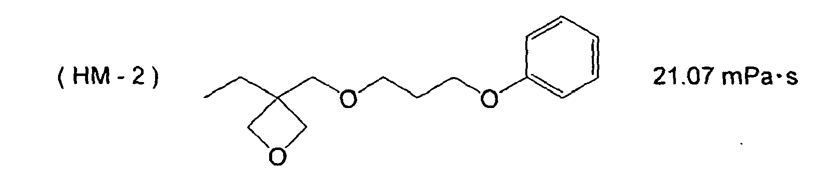

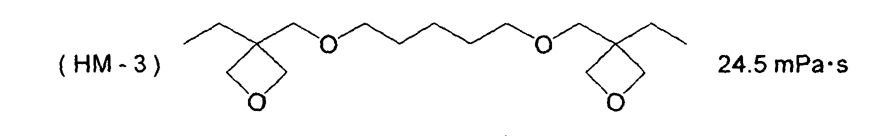

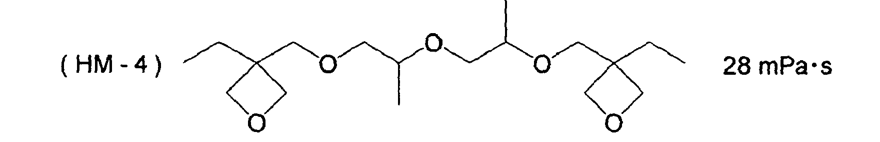

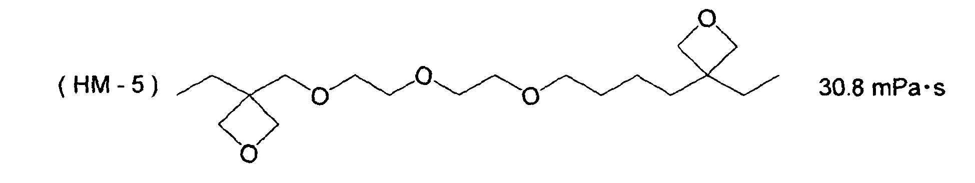

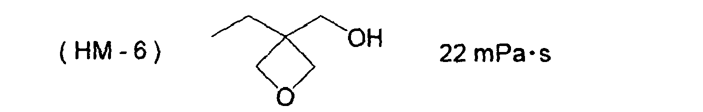

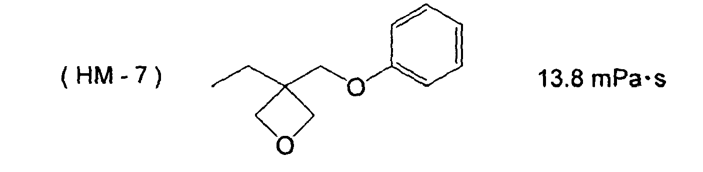

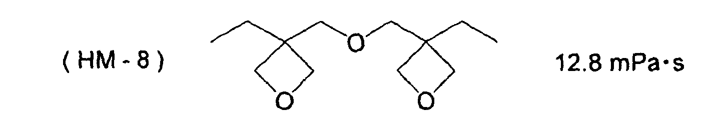

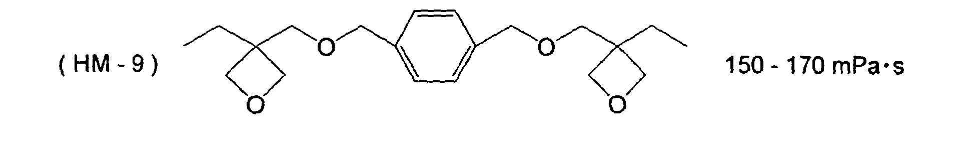

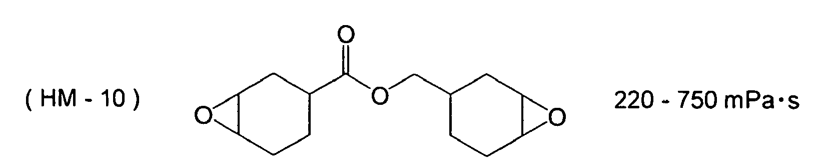

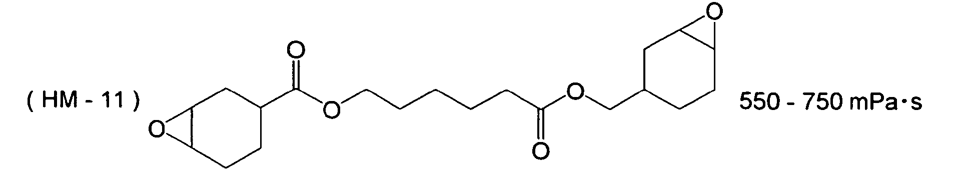

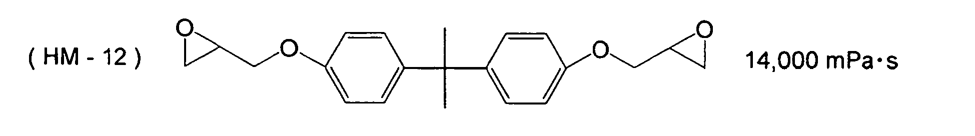

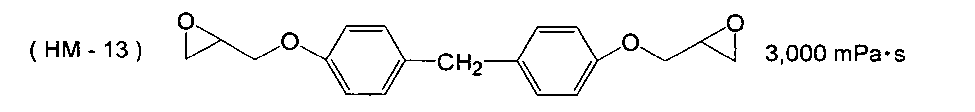

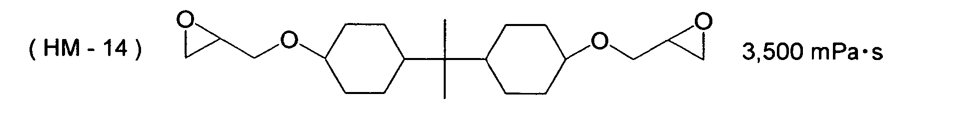

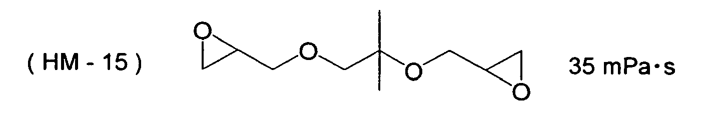

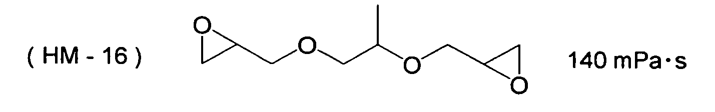

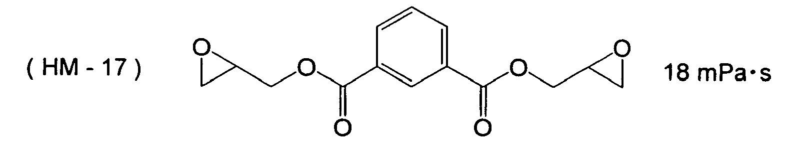

The cationically polymerizable compound preferably comprises an oxirane compound and an oxetane compound, more preferably comprises a polyfunctional oxirane compound and a polyfunctional oxetane compound, yet more preferably comprises a monofunctional oxetane compound, a polyfunctional oxirane compound, and a polyfunctional oxetane compound, and particularly preferably comprises only a monofunctional oxetane compound, a polyfunctional oxirane compound, and a polyfunctional oxetane compound.

Furthermore, the cationically polymerizable compound preferably comprises only an oxirane compound, an oxetane compound, and/or a vinyl ether compound, and more preferably comprises only an oxirane compound and/or an oxetane compound.

The content of the cationically polymerizable compound in the ink composition is preferably 10 to 95 wt %, more preferably 30 to 90 wt %, and yet more preferably 50 to 85 wt %, relative to the total solids content of the ink composition.

Components of the ink composition that can be used in both the first and second aspects of the present invention are explained below. (C) Photo-acid generator

The ink composition of the present invention comprises a photo-acid generator (C).

Examples of the photo-acid generator (hereinafter, also called 'cationic polymerization initiator' that can be used in the present invention include chemically amplified photoresists and compounds used in cationic photopolymerization ('Imejingu you Yukizairyou' (Organic Materials for Imaging), Ed. The Japanese Research Association for Organic Electronics Materials, Bunshin Publishing Co. (1993), pp. 187-192). Preferred examples of the cationic polymerization initiator in the present invention are listed below.

The photo-acid generator that can be used in the present invention is preferably a compound that generates an acid when exposed to actinic radiation. As the photo-acid generator used in the present invention of the ink composition, a cationic photopolymerization photoinitiator, a radical photopolymerization photoinitiator, a photo-decolorizing agent for a dye or a photo-discoloring agent, or a compound that generates an acid when exposed to light used in a microresist, etc. (ultraviolet light at 400 to 200 nm, far ultraviolet light, particularly preferably, g-line, h-line, i-line, KrF excimer laser light), ArF excimer laser light, an electron beam, X rays, a molecular beam, or an ion beam, may be used by appropriately selecting therefrom.

Examples of such a photo-acid generator include onium salt compounds such as diazonium salts, phosphonium salts, sulfonium salts, and iodonium salts, and sulfonate compounds such as imidosulfonates, oxime sulfonates, diazodisulfones, disulfones, and o-nitrobenzylsulfonates, which generate an acid by decomposition when exposed to radiation.

Among them, onium salt compounds are preferably used as a photo-acid generator.

Furthermore, examples of the compound that generates an acid when exposed to actinic light or radiation (photo-acid generator), which can be used in the present invention, include diazonium salts disclosed in, for instance, S. I. Schlesinger, Photogr. Sci. Eng., 1974, 18:387 and T. S. Bal et al., Polymer, 1980, 21:423; ammonium salts disclosed in, for instance, US Pat. Nos. 4,069,055, 4,069,056 and JP-A-3-140140; phosphonium salts disclosed in, for instance, D. C. Necker et al., Macromolecules, 1984, 17:2468, C. S. Wen et al., Proc. Conf. Rad. Curing ASIA, p.478, Tokyo, Oct. (1988) and US Pat. Nos. 4,069,055 and 4,069,056; iodonium salts disclosed in, for instance, J. V. Crivello et al., Macromolecules, 10 (6), 1307 (1977), Chem. Eng. News, November 28, p. 31 (1988), European Patent No. 104,143 and JP-A-2-150848 and JP-A-2-296514;

sulfonium salts disclosed in, for instance, J. V. Crivello et al., Polymer J., 1985, 17:73, J. V. Crivello et al., J. Org. Chem., 1978, 43:3055, W.R. Watt et al., J. Polymer Sci., Polymer Chem. Ed., 1984, 22:1789, J. V. Crivello et al., Polymer Bull., 1985, 14:279, J. V. Crivello et al., Macromolecules, 14(5), 1141 (1981), J. V. Crivello et al., J. Polymer Sci., Polymer Chem. Ed., 1979, 17:2877, European Patent Nos. 370,693, 161,811, 410,201, 339,049, 233,567, 297,443 and 297,442, US Pat. Nos. 3,902,114, 4,933,377, 4,760,013, 4,734,444 and 2,833,827 and German Patent Nos. 2,904,626, 3,604,580 and 3,604,581, JP-A-7-28237, and JP-A-8-27102;
selenonium salts disclosed in, for instance, J. V. Crivello et al., Macromolecules, 10(6), 1307 (1977) and J. V. Crivello et al., J. Polymer Sci., Polymer Chem. Ed., 1979, 17:1047; onium salts such as arsonium salts disclosed in, for instance, C. S. Wen et al., Proc. Conf. Rad. Curing ASIA, p.478, Tokyo, Oct. (1988); organic halogen-containing compounds disclosed in, for instance, US Pat. No. 3,905,815, JP-B-46-4605, JP-A-48-36281, JP-A-55-32070, JP-A-60-239736, JP-A-61-169835, JP-A-61-169837, JP-A-62-58241, JP-A-62-212401, JP-A-63-70243 and JP-A-63-298339; organometallic/organic halogen-containing compounds disclosed in, for instance, K. Meier et al., J. Rad. Curing, 13(4), 26 (1986), T. P. Gill et al., Inorg. Chem., 1980, 19:3007, D. Astruc, Acc. Chem. Res., 19(12), 377 (1986) and JP-A-2-161445;
photo-acid generators comprising o-nitrobenzyl type protecting group disclosed in, for instance, S. Hayase et al., J. Polymer Sci., 1987, 25:753, E. Reichmanis et al., J. Polymer Sci., Polymer Chem. Ed., 1985, 23:1, Q. Q. Zhu et al., J. Photochem., 36, 85, 39, 317 (1987), B. Amit et al., Tetrahedron Lett., (24), 2205 (1973), D. H. R. Barton et al., J. Chem. Soc., 3571 (1965), P. M. Collins et al., J. Chem. Soc., Perkin 1, 1695 (1975), M. Rudinstein et al., Tetrahedron Lett., (17), 1445 (1975), J. W. Walker et al., J. Am. Chem. Soc., 110, 7170 (1988), S.C. Busman et al., J. Imaging Technol., 11(4), 191 (1985), H. M. Houlihan et al., Macromolecules, 21, 2001 (1988), P.M. Collins et al., J. Chem. Soc., Chem. Commun., 532 (1972), S. Hayase et al., Macromolecules, 18, 1799 (1985), E. Reichmanis et al., J. Electrochem. Soc., Solid State Sci. Technol., 130(6), F. M. Houlihan et al., Macromolecules, 21, 2001 (1988), European Patent Nos. 0,290,750, 046,083, 156,535, 271,851 and 0,388,343, US Pat. Nos. 3,901,710 and 4,181,531 and JP-A-60-198538 and JP-A-53-133022;
compounds producing sulfonic acids by photolysis which are represented by iminosulfonates described in M. Tunooka et al., Polymer Preprints Japan, 35 (8), G. Berner et al., J. Rad. Curing, 13 (4), W. J. Mijs et al., Coating Technol., 55 (697), 45 (1983), Akzo, H. Adachi et al., Polymer Preprints Japan, 37 (3), European Patents 0,199,672, 84,515, 044,115, 618,564, and 0,101,122, US Pat. Nos. 4,371,605 and 4,431,774, JP-A-64-18143, JP-A-2-245756 and JP-A-3-140109; and disulfone compounds described in JP-A-61-166544 and JP-A-2-71270; and diazoketosulfone and diazodisulfone compounds described in JP-A-3-103854, JP-A-3-103856, and JP-A-4-210960.

Further, compounds in which these photo-acid generating groups or compounds are introduced into their main chains or side chains can be used. Examples of such compounds are described in M. E. Woodhouse et al., J. Am. Chem. Soc., 104, 5586 (1982), S. P. Pappas et al., J. Imaging Sci., 30 (5), 218 (1986), S. Kondo et al., Makromol. Chem., Rapid Commun., 9, 625 (1988), Y Yamada et al., Makromol. Chem., 152, 153, 163 (1972), J. V. Crivello et al., J. Polymer Sci., Polymer Chem. Ed., 17, 3845 (1979), US Pat. No. 3,849,137, German Patent 3,914,407, JP-A-63-26653, JP-A-55-164824, JP-A-62-69263, JP-A-63-146038, JP-A-63-163452, JP-A-62-153853 and JP-A-63-146029. Examples thereof include onium salt compounds such as diazonium salts, ammonium salts, phosphonium salts, iodonium salts, sulfonium salts, selenonium salts, and arsonium salts; organic halogen compounds; organometallic/organohalides; photo-acid generators having an o-nitrobenzyl type protecting group; compounds that generate a sulfonic acid by photodecomposition, represented by iminosulfonates; disulfone compounds; diazoketosulfones; and diazodisulfone compounds.

Further, there can also be used compounds that generate an acid with light which are described in V. N. R. Pillai, Synthesis, (1) 1 (1980), A. Abad et al., Tetrahedron Lett., (47), 4555 (1971), D. H. R. Barton et al., J. Chem. Soc., (C), 329 (1970), US Pat. No. 3,779,778 and European Patent No. 126,712.

Preferred examples of the photo-acid generator that can be used in the present invention include compounds represented by Formulae (b1), (b2), and (b3) below.

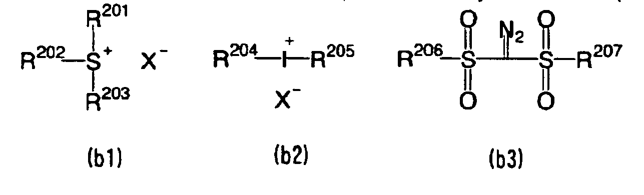

In Formula (b1), R²⁰¹, R²⁰², and R²⁰³ independently denote an organic group.

X⁻ denotes a non-nucleophilic anion; preferred examples thereof include a sulfonic acid anion, a bis(alkylsulfonyl)amide anion, a tris(alkylsulfonyl)methide anion, BF₄⁻, PF₆⁻, SbF₆⁻, and groups shown below, and an organic anion having a carbon atom is preferable.

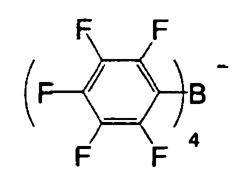

Preferred examples of the organic anion include organic anions represented by the formulae below.

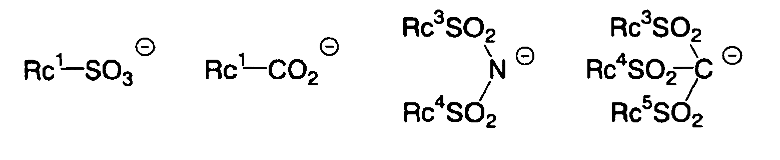

Rc¹ denotes an organic group.

Examples of the organic group denoted by Rc¹ include those having 1 to 30 carbons, and preferred examples thereof include an alkyl group, a cycloalkyl group, an aryl group, and a group formed by connecting a plurality of the above groups via a linking group such as a single bond, -O-, -CO₂-, -S-, -SO₃-, or -SO₂N(Rd¹)-.

Rd¹ denotes a hydrogen atom or an alkyl group.

Rc³, Rc⁴, and Rc⁵ independently denote an organic group.

With regard to the organic groups denoted by Rc³, Rc⁴, and Rc⁵, those cited as preferred examples for the organic group denoted by Rc¹ are cited here, and a perfluoroalkyl group having 1 to 4 carbons is most preferable.

Rc³ and Rc⁴ may be bonded to form a ring.

Examples of a group formed by bonding of Rc³ and Rc⁴ include an alkylene group and an arylene group. It is preferably a perfluoroalkylene group having 2 to 4 carbons.

The most preferred examples of the organic groups denoted by Rc¹, and Rc³ to Rc⁵, include an alkyl group whose 1 position has been substituted with a fluorine atom or a fluoroalkyl group, and a phenyl group substituted with a fluorine atom or a fluoroalkyl group. Introducing a fluorine atom or a fluoroalkyl group increases the acidity of an acid generated on exposure to light, thus improving the sensitivity.

The number of carbons of the organic groups denoted by R²⁰¹, R²⁰², and R²⁰³ is preferably 1 to 30, and more preferably 1 to 20.

Furthermore, two of R²⁰¹ to R²⁰³ may be bonded to form a ring structure, and an oxygen atom, a sulfur atom, an ester bond, an amide bond, or a carbonyl group may be contained in the ring. Examples of the group formed by bonding of two of R²⁰¹ to R²⁰³ include alkylene groups (e.g. a butylene group and a pentylene group).

Specific examples of the organic groups denoted by R²⁰¹, R²⁰², and R²⁰³ are the corresponding groups in compounds (b1-1), (b1-2), and (b1-3), which will be described later.

The photo-acid generator may be a compound having a plurality of structures represented by Formula (b1). For example, it may be a compound having a structure in which at least one of R²⁰¹ to R²⁰³ of a compound represented by Formula (b1) is bonded directly or via a linking group to at least one of R²⁰¹ to R²⁰³ of a compound represented by Formula (b1).

Yet more preferred examples of the component (b1) include compounds (b1-1), (b1-2), and (b1-3), which are explained below.

The compound (b1-1) is an arylsulfonium compound in which at least one of R²⁰¹ to R²⁰³ of the Formula (b1) above is an aryl group, that is, a compound having arylsulfonium as a cation.

With regard to the arylsulfonium compound, all of R²⁰¹ to R²⁰³ may be aryl groups, or some of R²⁰¹ to R²⁰³ may be an aryl group and the rest may be an alkyl group or a cycloalkyl group.

Examples of the arylsulfonium compound include a triarylsulfonium compound, a diarylalkylsulfonium compound, an aryldialkylsulfonium compound, a diarylcycloalkylsulfonium compound, and an aryldicycloalkylsulfonium compound.

With regard to the aryl group of the arylsulfonium compound, an aryl group such as a phenyl group or a naphthyl group and a heteroaryl group such as an indole residue or a pyrrole residue are preferable, and a phenyl group and an indole residue are more preferable. When the aryl sulfonium compound has two or more aryl groups, two or more of the aryl groups may be identical to or different from each other.

The alkyl group that the arylsulfonium compound may have as necessary is preferably a straight-chain or branched alkyl group having 1 to 15 carbons, and examples thereof include a methyl group, an ethyl group, a propyl group, an *n*-butyl group, a *sec-*butyl group, and a *t*-butyl group.

The cycloalkyl group that the arylsulfonium compound may have as necessary is preferably a cycloalkyl group having 3 to 15 carbons, and examples thereof include a cyclopropyl group, a cyclobutyl group, and a cyclohexyl group.

The aryl group, the alkyl group, and the cycloalkyl group denoted by R²⁰¹ to R²⁰³ may have as a substituent an alkyl group (e.g. having 1 to 15 carbons), a cycloalkyl group (e.g. having 3 to 15 carbons), an aryl group (e.g. having 6 to 14 carbons), an alkoxy group (e.g. having 1 to 15 carbons), a halogen atom, a hydroxyl group, or a phenylthio group. Preferred examples of the substituent include a straight-chain or branched alkyl group having 1 to 12 carbons, a cycloalkyl group having 3 to 12 carbons, and a straight-chain, branched, or cyclic alkoxy group having 1 to 12 carbons, and the most preferable examples include an alkyl group having 1 to 4 carbons and an alkoxy group having 1 to 4 carbons. One of R²⁰¹ to R²⁰³ may be substituted or all thereof may be substituted. When R²⁰¹ to R²⁰³ are aryl groups, it is preferable for the substituent to be present at the *p*-position of the aryl group.

The compound (b1-2) is now explained.

The compound (b1-2) is a compound in which R²⁰¹ to R²⁰³ of Formula (b1) independently denote an organic group having no aromatic ring. The aromatic ring referred to here includes an aromatic ring containing a hetero atom.

The organic group having no aromatic ring denoted by R²⁰¹ to R²⁰³ preferably has 1 to 30 carbons, and more preferably 1 to 20 carbons.

R²⁰¹ to R²⁰³ preferably independently denote an alkyl group, a cycloalkyl group, an allyl group, or a vinyl group, more preferably a straight-chain, branched, or cyclic 2-oxoalkyl group or alkoxycarbonylmethyl group, and particularly preferably a straight-chain or branched 2-oxoalkyl group.

The alkyl group denoted by R²⁰¹ to R²⁰³ may be a straight-chain or branched, is preferably a straight-chain or branched alkyl group having 1 to 10 carbons (e.g. a methyl group, an ethyl group, a propyl group, a butyl group, and a pentyl group), and is more preferably a straight-chain or branched 2-oxoalkyl group or an alkoxycarbonylmethyl group.

The cycloalkyl group denoted by R²⁰¹ to R²⁰³ may preferably be a cycloalkyl group having 3 to 10 carbons (a cyclopentyl group, a cyclohexyl group, or a norbornyl group), and a cyclic 2-oxoalkyl group is more preferable.

The straight-chain, branched, or cyclic 2-oxoalkyl group denoted by R²⁰¹ to R²⁰³ may preferably be the above-mentioned alkyl group or cycloalkyl group in which there is >C = O at the 2-position.

Preferred examples of the alkoxy group of the alkoxycarbonylmethyl group denoted by R²⁰¹ to R²⁰³ include an alkoxy group having 1 to 5 carbons (a methoxy group, an ethoxy group, a propoxy group, a butoxy group, and a pentoxy group).

R²⁰¹ to R²⁰³ may further be substituted with a halogen atom, an alkoxy group (e.g. having 1 to 5 carbons), a hydroxyl group, a cyano group, or a nitro group.

The compound (b1-3) referred to is a compound represented by Formula (b1-3) below and is a compound having a phenacylsulfonium salt structure.

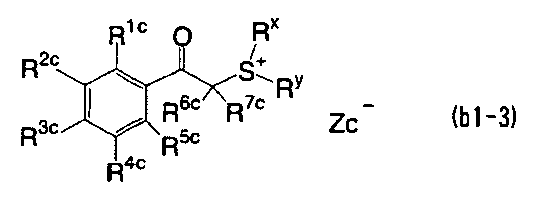

In Formula (b1-3), R^{1c} to R^{5c} independently denote a hydrogen atom, an alkyl group, a cycloalkyl group, an alkoxy group, or a halogen atom.

R^{6c} and R^{7c} independently denote a hydrogen atom, an alkyl group, or a cycloalkyl group.

R^{x} and R^{y} independently denote an alkyl group, a cycloalkyl group, an allyl group, or a vinyl group.

Any two or more of R^{1c} to R^{5c}, R^{6c} and R^{7c}, and R^{x} and R^{y} may be bonded together to form a ring structure.

Zc⁻ denotes a non-nucleophilic anion, and the same examples as those of the non-nucleophilic anion X⁻ in Formula (b1) may be cited.

The alkyl group denoted by R^{1c} to R^{7c} may be either a straight-chain alkyl group or a branched alkyl group, and preferred examples thereof include straight-chain and branched alkyl groups having 1 to 20 carbons, and more preferably 1 to 12 carbons (e.g. a methyl group, an ethyl group, a straight-chain or branched propyl group, a straight-chain or branched butyl group, and a straight-chain or branched pentyl group).

Preferred examples of the cycloalkyl group denoted by R^{1c} to R^{7c} include cycloalkyl groups having 3 to 8 carbons (e.g. a cyclopentyl group and a cyclohexyl group).

The alkoxy group denoted by R^{1c} to R^{5c} may be any of a straight-chain, branched, or cyclic alkoxy group; examples thereof include alkoxy groups having 1 to 10 carbons, and preferably straight-chain or branched alkoxy groups having 1 to 5 carbons (e.g. a methoxy group, an ethoxy group, a straight-chain or branched propoxy group, a straight-chain or branched butoxy group, and a straight-chain or branched pentoxy group), and cyclic alkoxy groups having 3 to 8 carbons (e.g. a cyclopentyloxy group and a cyclohexyloxy group).

Examples of the group formed by bonding any two or more of R^{1c} to R^{5c}, R^{6c} and R^{7c}, and R^{x} and R^{y} include a butylene group and a pentylene group. This cyclic structure may contain an oxygen atom, a sulfur atom, an ester bond, or an amide bond.

It is preferable for any one of R^{1c} to R^{5c} to be a straight-chain or branched alkyl group, a cycloalkyl group, or a straight-chain, branched, or cyclic alkoxy group, and it is more preferable that the sum of the number of carbons of R^{1c} to R^{5c} is 2 to 15. This is preferable since the solvent solubility further improves and the occurrence of particles during storage is suppressed.

Examples of the alkyl groups and the cycloalkyl groups denoted by R^{x} and R^{y} may be the same as those of the alkyl groups and the cycloalkyl groups denoted by R^{1c} to R^{7c}.

R^{x} and R^{y} are preferably 2-oxoalkyl groups or alkoxycarbonylmethyl groups.

Examples of the 2-oxoalkyl group include a group in which the alkyl group or the cycloalkyl group denoted by R^{1c} to R^{5c} has >C = O at the 2-position.

Examples of the alkoxy group of the alkoxycarbonylmethyl group may be the same as those of the alkoxy group denoted by R^{1c} to R^{5c}.

R^{x} and R^{y} are preferably alkyl groups or cycloalkyl groups having 4 or more carbons, more preferably alkyl groups or cycloalkyl groups having 6 or more carbons, and yet more preferably 8 or more carbons.

R²⁰⁴ to R²⁰⁷ in Formulae (b2) and (b3) independently denote an aryl group, an alkyl group, or a cycloalkyl group. X⁻ denotes a non-nucleophilic anion, and examples thereof include those that are the same as the non-nucleophilic anion X⁻ in Formula (b1).

The aryl group denoted by R²⁰⁴ to R²⁰⁷ is preferably a phenyl group or a naphthyl group, and more preferably a phenyl group.

The alkyl group denoted by R²⁰⁴ to R²⁰⁷ may be either a straight-chain or a branched alkyl group, and preferred examples thereof include straight-chain or branched alkyl groups having 1 to 10 carbons (e.g. a methyl group, an ethyl group, a propyl group, a butyl group, and a pentyl group). Preferred examples of the cycloalkyl groups denoted by R²⁰⁴ to R²⁰⁷ include cycloalkyl groups having 3 to 10 carbons (a cyclopentyl group, a cyclohexyl group, and a norbornyl group).

Examples of the substituents that are present on R²⁰⁴ to R²⁰⁷ include an alkyl group (e.g. having 1 to 15 carbons), a cycloalkyl group (e.g. having 3 to 15 carbons), an aryl group (e.g. having 6 to 15 carbons), an alkoxy group (e.g. having 1 to 15 carbons), a halogen atom, a hydroxyl group, and a phenylthio group.

Furthermore, R²⁰⁴ and R²⁰⁵, R²⁰⁶ and R²⁰⁷ may be bonded to form a ring structure, and an oxygen atom, a sulfur atom, an ester bond, an amide bond, or a carbonyl group may be contained in the ring. Examples of the groups formed by bonding of R²⁰⁴ and R²⁰⁵ or R²⁰⁶ and R²⁰⁷ include an alkylene group (e.g. a butylene group and a pentylene group).

The photo-acid generator may be a compound having a plurality of the structures represented by Formula (b2) or (b3). For example, it may be a compound having a structure in which R²⁰⁴ or R²⁰⁵ of one compound represented by Formula (b2) is bonded directly or via a linking group to R²⁰⁴ or R²⁰⁵ of another compound represented by Formula (b2).

Examples of the photo-acid generator include compounds represented by Formulae (b4), (b5), and (b6) below.

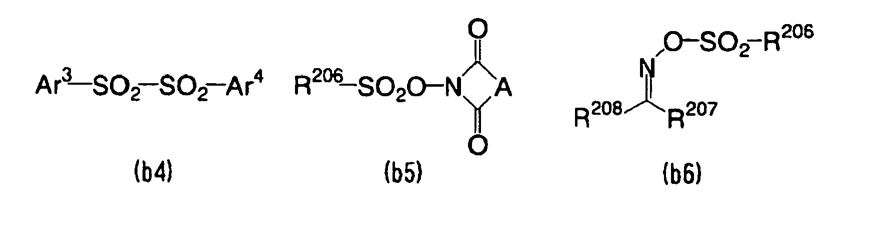

In Formula (b4) to (b6), Ar³ and Ar⁴ independently denote an aryl group.

R²⁰⁶, R²⁰⁷ and R²⁰⁸ independently denote an alkyl group, a cycloalkyl group, an aryl group, or a cyano group.

A denotes an alkylene group, an alkenylene group, or an arylene group.

Ar³ and Ar⁴, R²⁰⁶ to R²⁰⁸, and A may have a substituent, and examples thereof include an alkyl group (e.g. having 1 to 15 carbons), a cycloalkyl group (e.g. having 3 to 15 carbons), an aryl group (e.g. having 6 to 15 carbons), an alkoxy group (e.g. having 1 to 15 carbons), a halogen atom, a hydroxyl group, and a phenylthio group.

The photo-acid generator may be a compound having a plurality of structures represented by Formulae (b4) to (b6). For example, it may be a compound having a structure in which at least one of R²⁰⁶ to R²⁰⁸ of a compound represented by Formula (b6) is bonded directly or via a linking group to at least one of R²⁰⁶ to R²⁰⁸ of another compound represented by Formula (b6).

Among the above-mentioned photo-acid generators, compounds represented by Formulae (b1) to (b3) are preferable.

Preferred compound examples (b-1) to (b-96) of the photo-acid generator (b) used in the present invention are cited below, but the present invention should not be construed by being limited thereto.

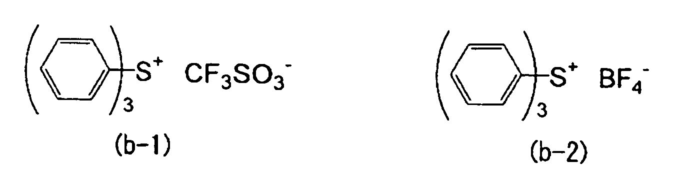

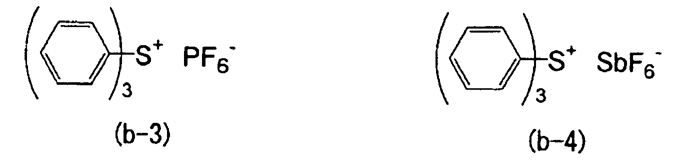

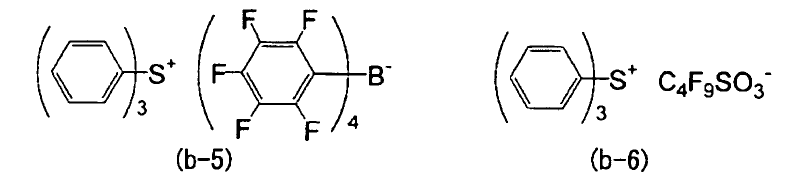

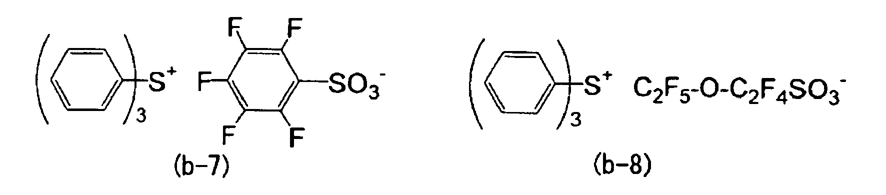

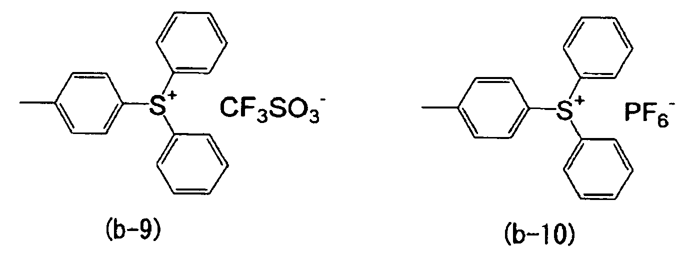

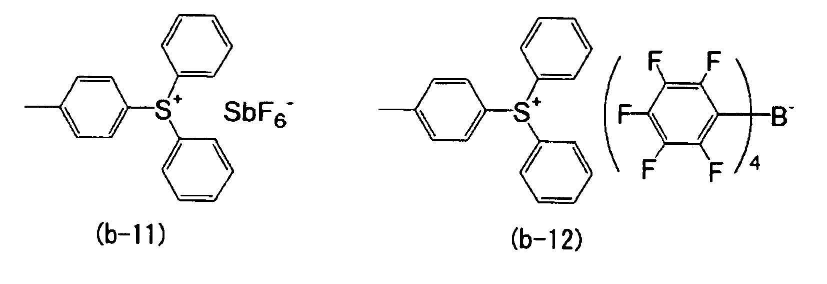

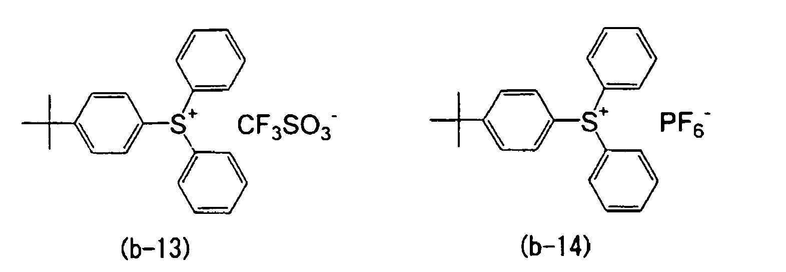

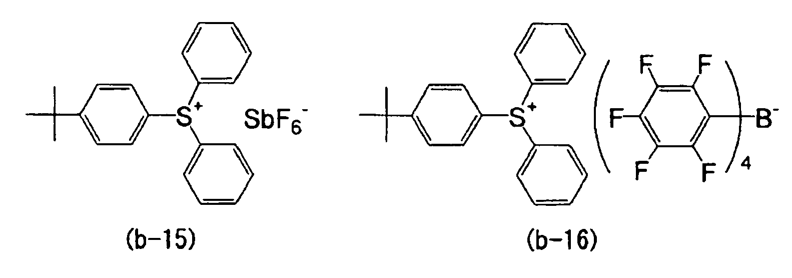

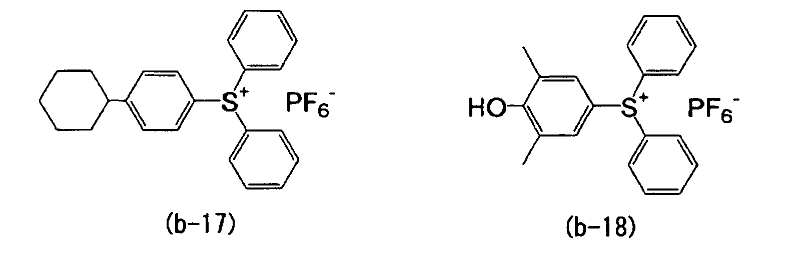

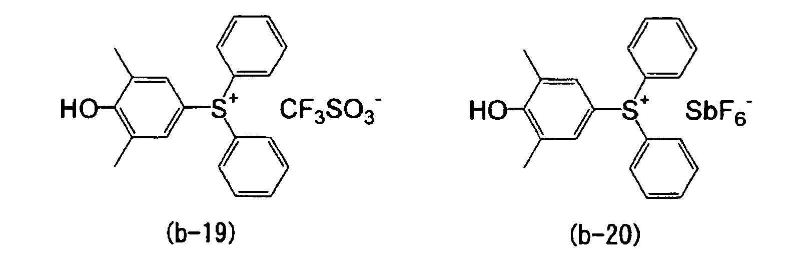

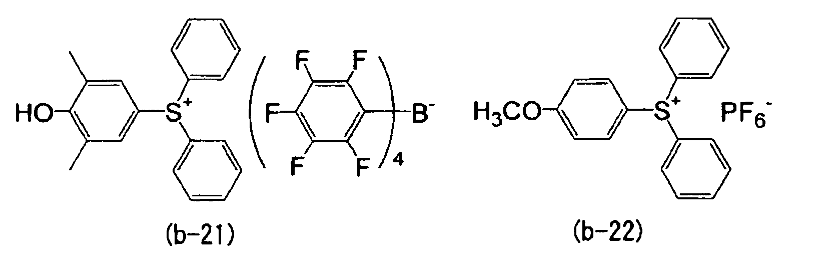

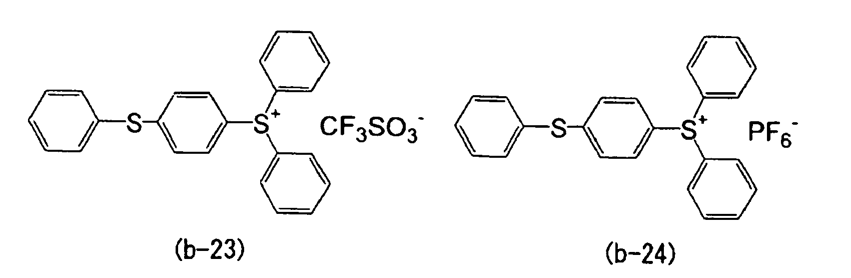

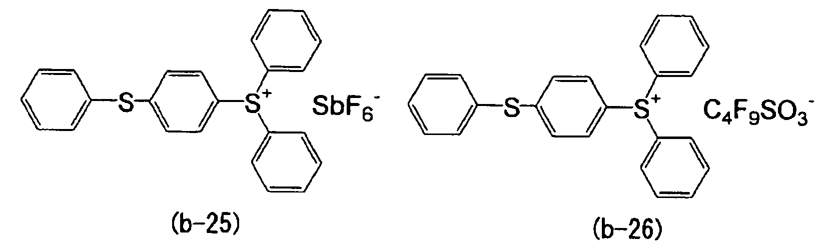

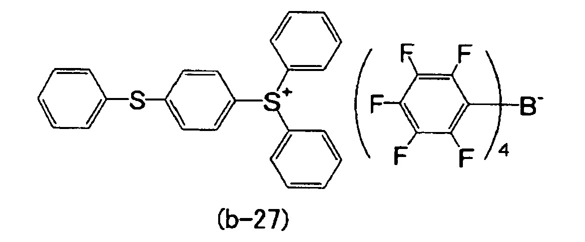

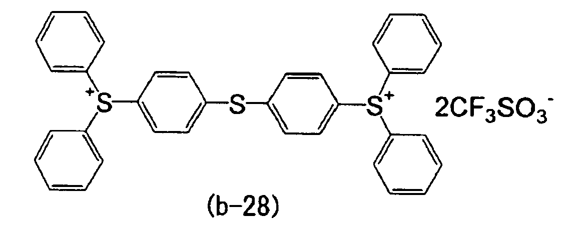

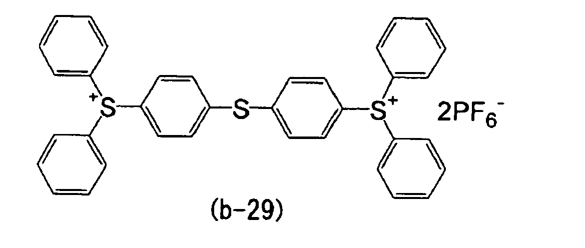

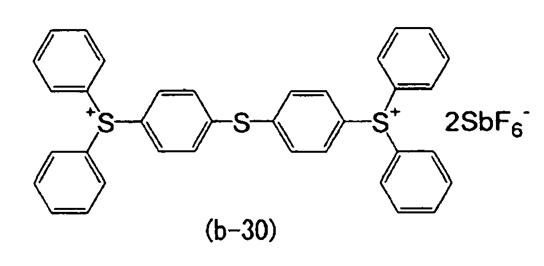

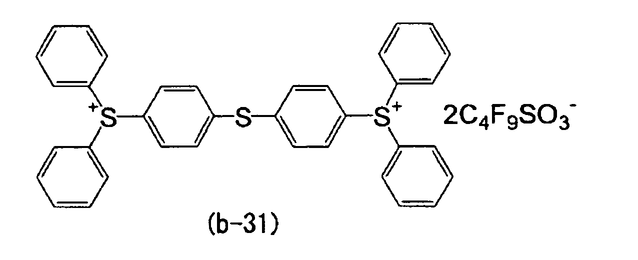

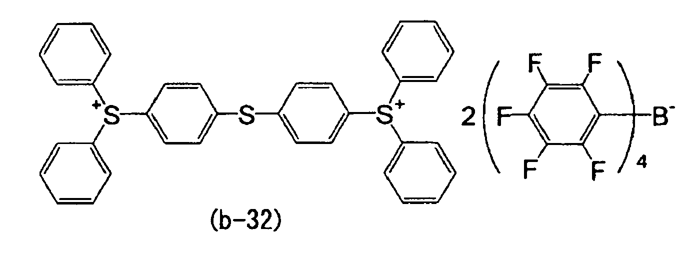

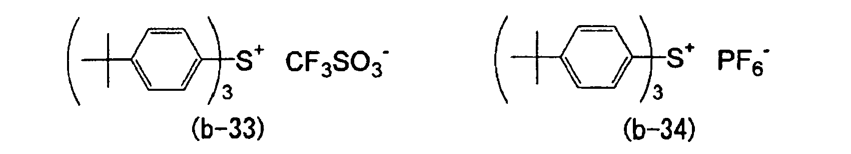

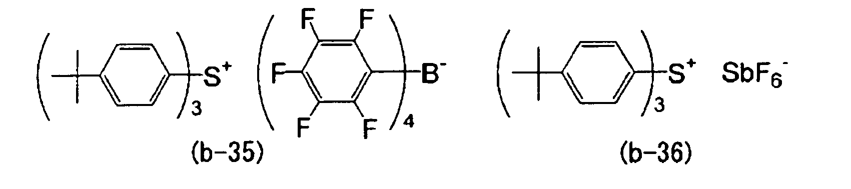

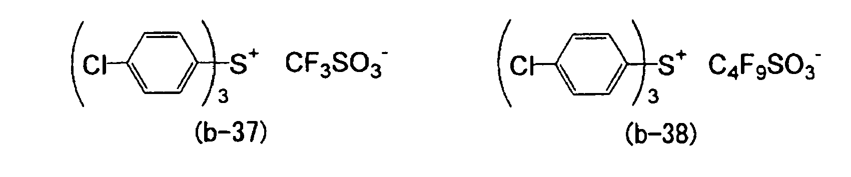

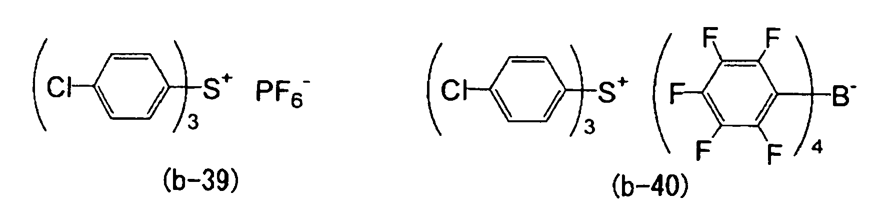

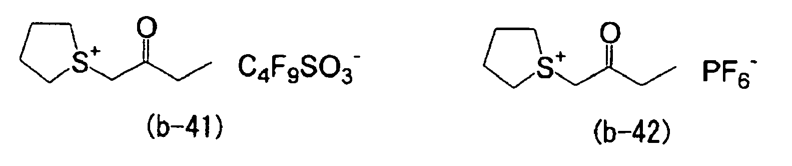

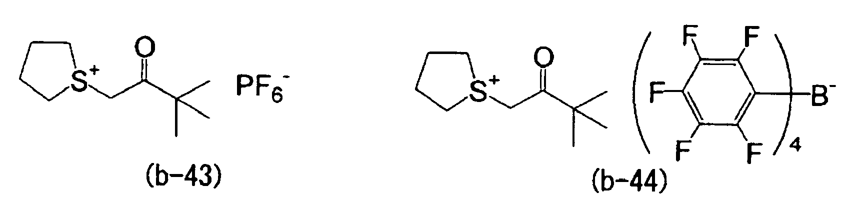

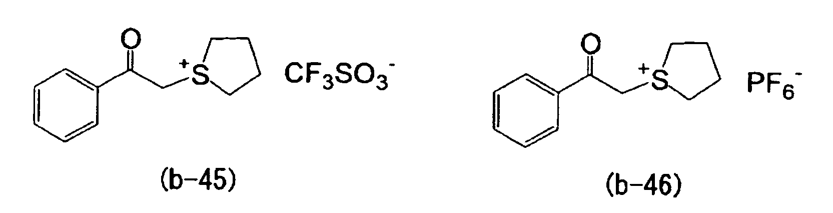

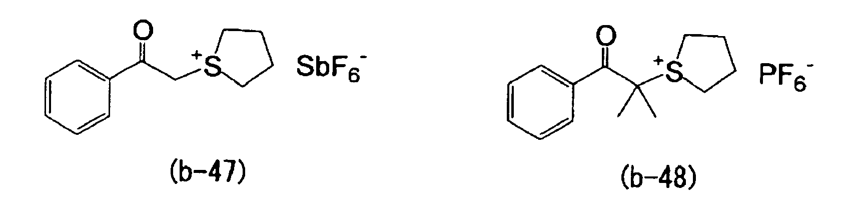

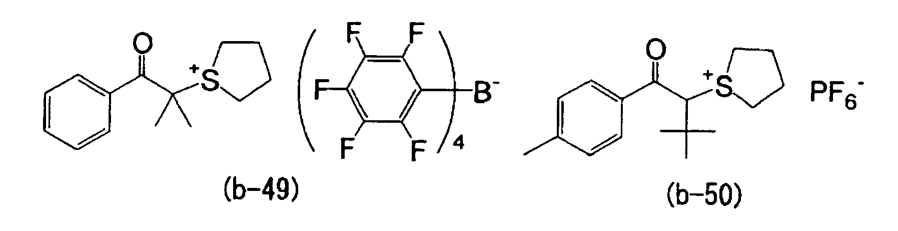

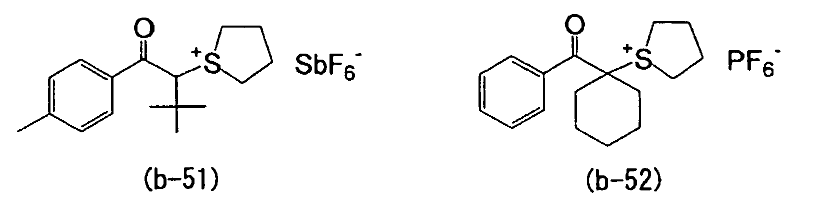

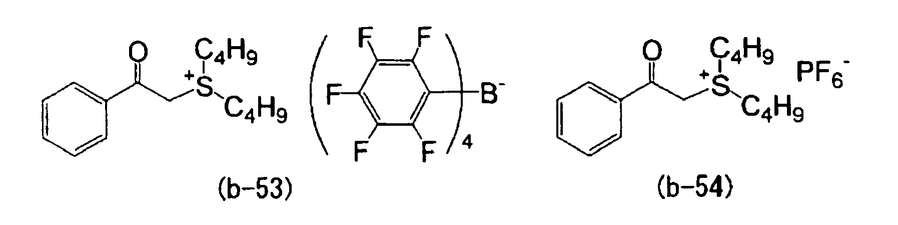

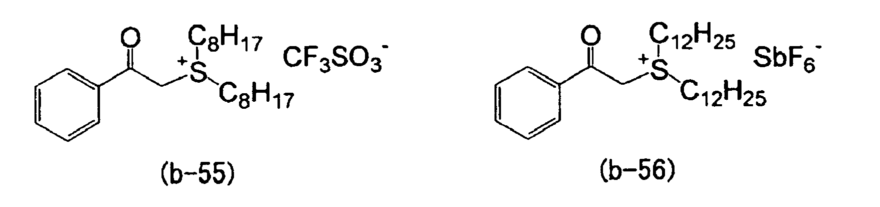

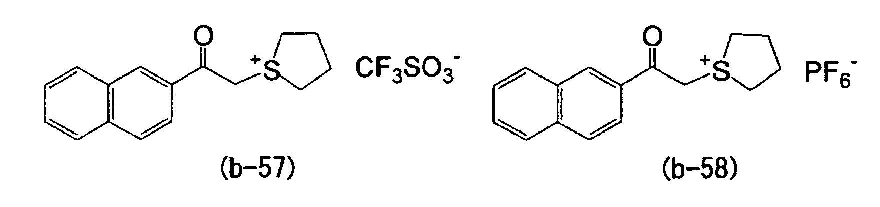

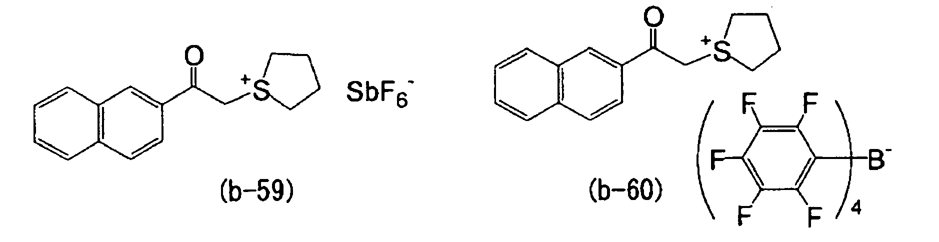

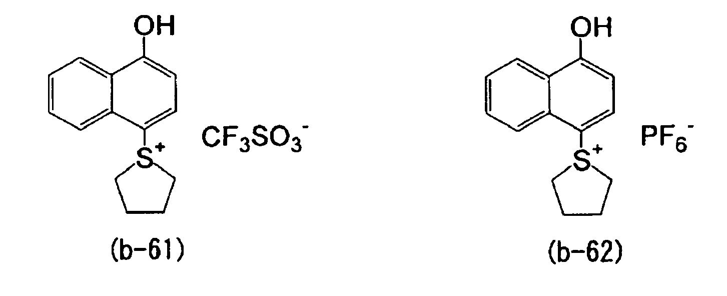

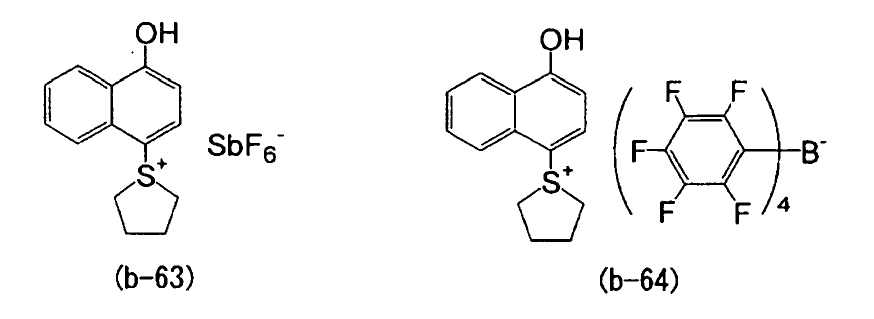

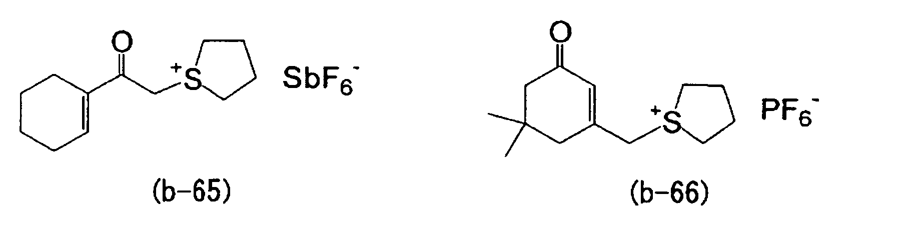

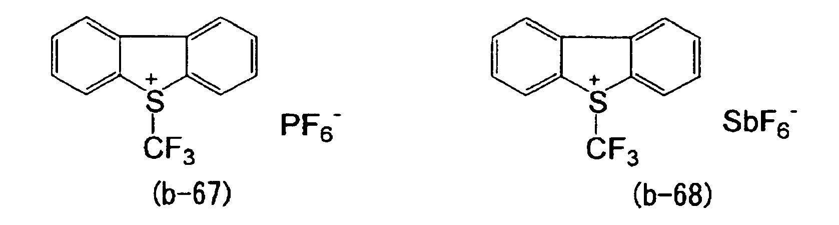

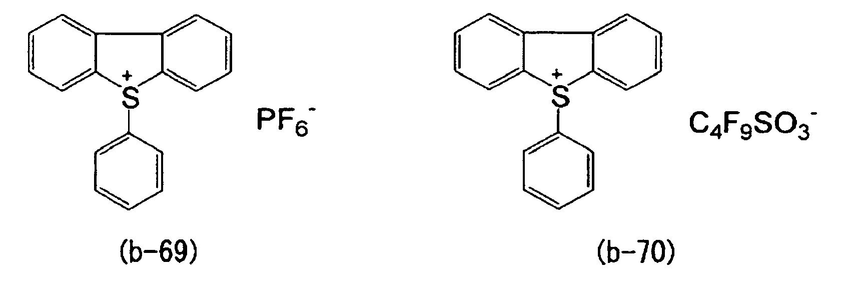

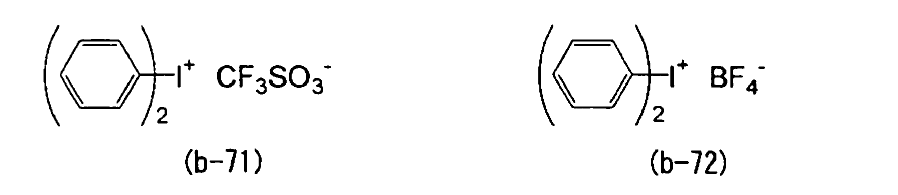

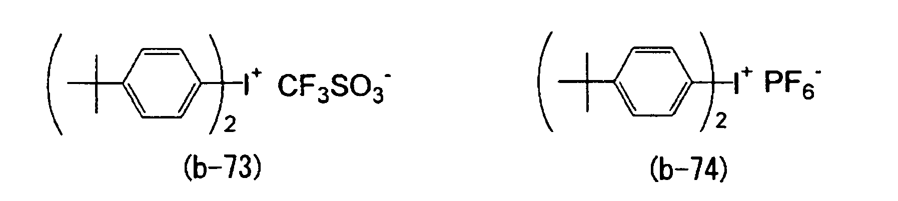

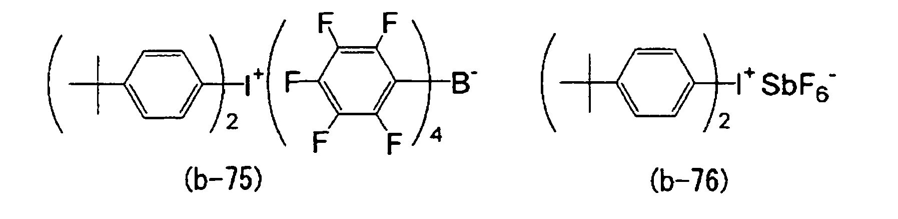

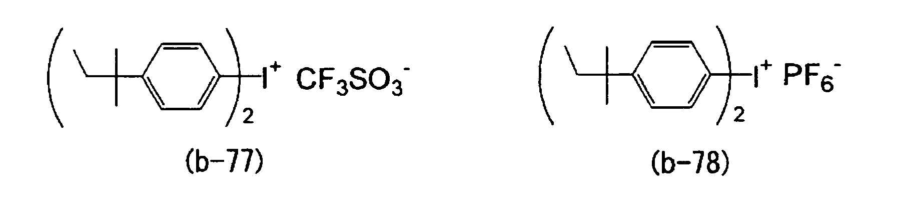

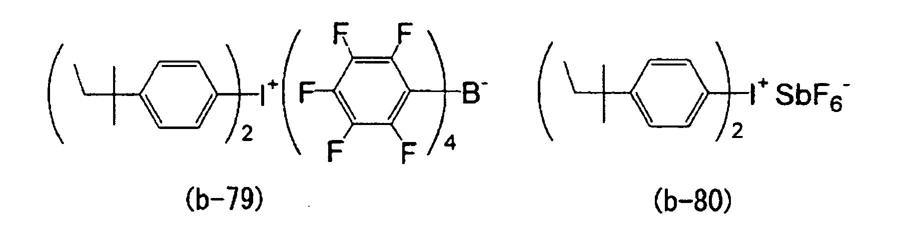

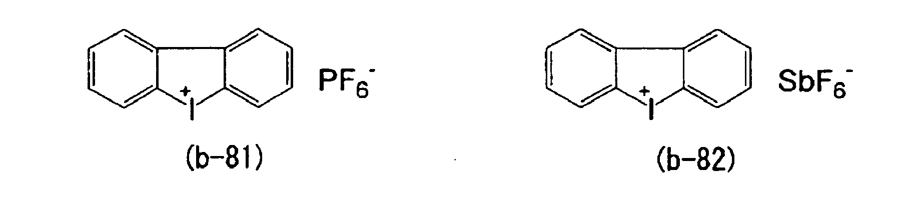

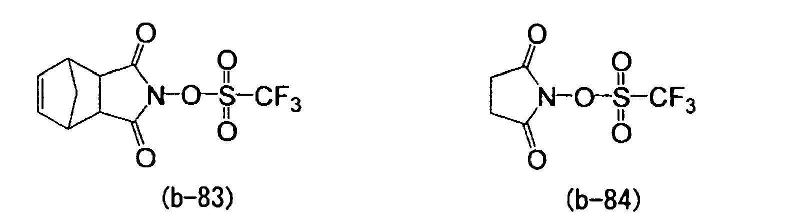

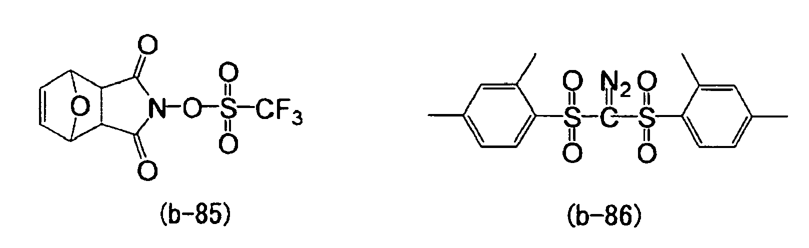

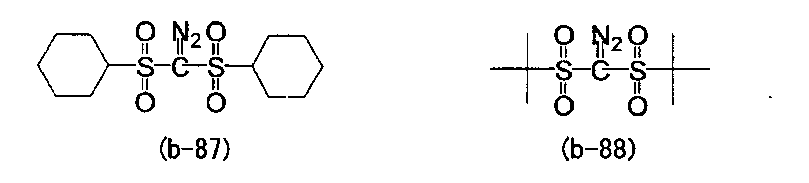

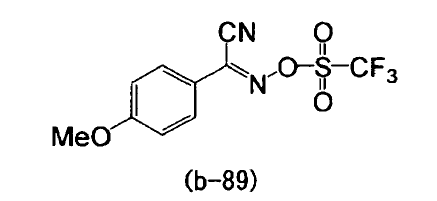

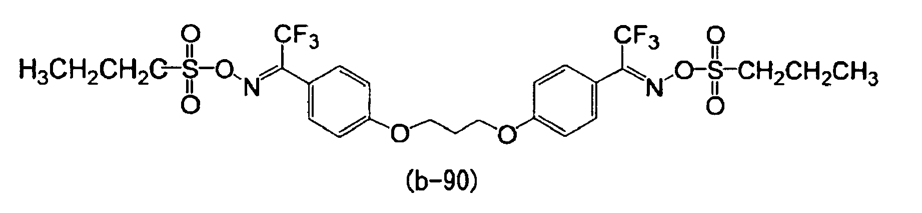

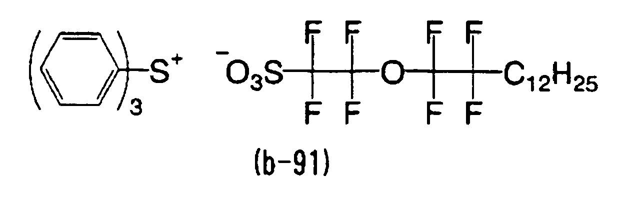

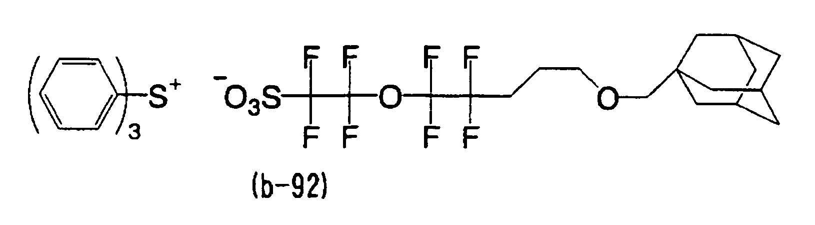

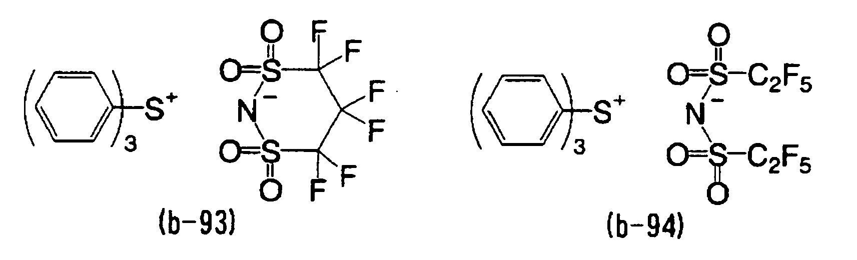

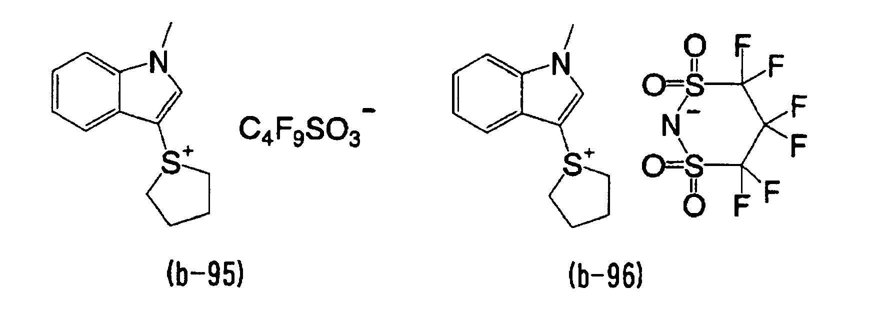

Furthermore, oxazole derivatives and s-triazine derivatives described in Paragraph Nos. 0029 to 0030 of JP-A-2002-122994 may suitably be used.

Onium salt compounds and sulfonate-based compounds cited as examples in Paragraph Nos. 0037 to 0063 of JP-A-2002-122994 may also be suitably used in the present invention.

The photo-acid generator may be used singly or in a combination of two or more types.

The content of the photo-acid generator in the ink composition is preferably 0.1 to 20 wt % on the basis of the total solids content of the ink composition, more preferably 0.5 to 10 wt %. When the content of the photo-acid generator is set in the above- described range, the ink composition can be cured sufficiently and a cured film having a uniform degree of curing can be obtained.

Furthermore, when a sensitizer, which will be described later, is used in the ink composition of the present invention, the total amount of polymerization initiator used is preferably 200:1 to 1:200 relative to the sensitizer as a ratio by weight of polymerization initiator: sensitizer, more preferably 50:1 to 1:50, and yet more preferably 20:1 to 1:5. (D) Amine compound

The ink composition of the present invention preferably comprises (D) an amine compound.

The amine compound that can be used in the present invention is not particularly limited as long as it is a conventionally known amine compound.

Furthermore, the amine compound may be a compound having one amine site in the molecule or a compound having two or more amine sites in the molecule, and may have a substituent such as an alkyl group, an alkenyl group, an alkynyl group, a halogen atom (-F, -Br, -Cl, -I), a hydroxy group, an alkoxy group, an aryloxy group, an alkylthio group, an arylthio group, an acyl group, an acyloxy group, an alkoxycarbonyl group, or an aryloxycarbonyl group.

From the viewpoint of safety, the amine compound that can be used in the present invention preferably has a boiling point at standard atmospheric pressure of at least 120°C, more preferably at least 150°C, and yet more preferably 180°C.

The molecular weight of the amine compound is preferably in the range of 100 to 1,000, more preferably in the range of 150 to 800, and yet more preferably in the range of 200 to 600.

Furthermore, the amine compound that can be used in the present invention may be any one of primary, secondary, and tertiary amine compounds, and from the viewpoint of suppression of a side reaction with a polymerizable compound and a coloration reaction, it is preferable to use a tertiary amine compound. Moreover, it may be either an aliphatic amine compound or an aromatic amine compound, and from the viewpoint of acid-scavenging ability it is preferably an aliphatic amine compound.

Therefore, an amine compound that is suitably used in the present invention is a tertiary aliphatic amine compound having a molecular weight in the range of 200 to 600 and a boiling point at standard atmospheric pressure of at least 180°C.

Specific examples of the amine compound that can be used in the present invention are listed below, but the present invention is not limited thereto.

Examples thereof include *n*-hexylamine, *n*-octylamine, di-*n*-butylamine, tri-*n*-hexylamine, cyclohexylamine, dicyclohexylamine, 3-(di-*n*-butylamino)propylamine, 3-amino-1-phenylbutane, *N-t*-butylpyrrolidine, 2,6-dimethylpiperidine, decahydroquinoline, decahydroisoquinoline, tropine, 2,2,6,6-tetramethyl-4-piperidone, 1-(2-pyridyl)piperazine, *N,N'*-dimethylpiperazine, 1,4-diazabicyclo[2.2.2]octane, 4-pyrrolizinopyridine, cumylamine, 3-butoxypropylamine, 3-methylthiopropylamine, bis(3-aminopropyl) ether, *N,N*-di-n-propylaniline, *N,N*-bis(3-aminopropyl)methylamine, *N*-(3-aminopropyl)morpholine, *N*-benzyl-2-methyl-1,3-propanediamine, hexamethylenetetramine, hexahydro-1,3,5-triphenyl-1,3,5-triazine, 1 ,4,7-trimethyl-1,4,7-triazacyclononane, 1,4,7,10-tetraazacyclododecane, tris(3-aminopropyl)amine, *N,N*-dimethylaniline, 1-ethylpyrrole, 2,5-dimethylpyrrole, 4-(dimethylamino)pyridine, 2,6-dichloropyridine, 2,6-diaminopyridine, 2,6-dimethyl-4-hydroxypyridine, diethyl 2,6-pyridinedicarboxylate, 2,4,6-trimethylpyridine, 4-vinylpyridine, 3-acetylpyridine, 2-benzoylpyridine, methyl nicotinate, 2,2'-bipyridyl, 2,2':6',2"-terpyridine, quinoline, isoquinoline, 8-quinolinol, acridine, 5-aminoindole, carbazole, phenanthridine, 9(10H)-acridone, 1,6-naphthyridine, 1,8-naphthyridine, 1,10-phenanthroline, quinacridone, and 1H-pyrrolo[2,3-b]pyridine.

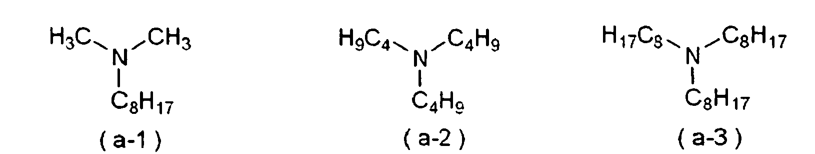

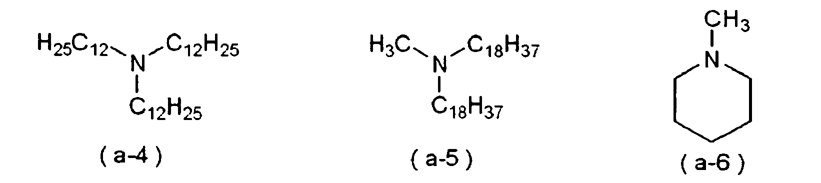

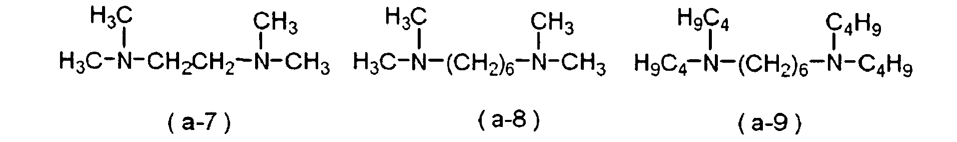

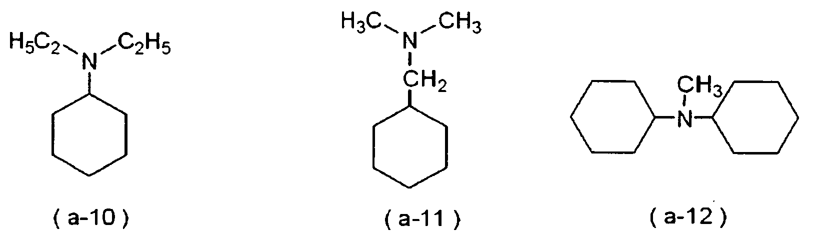

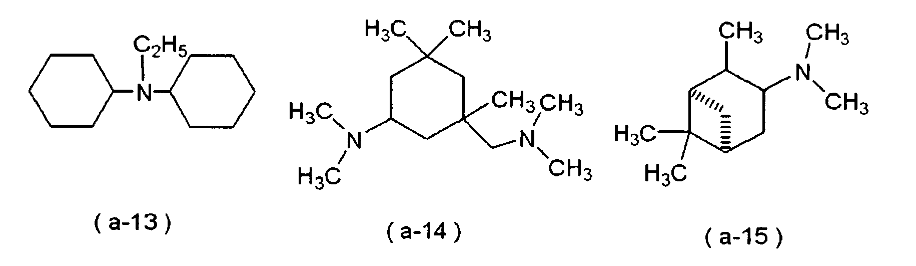

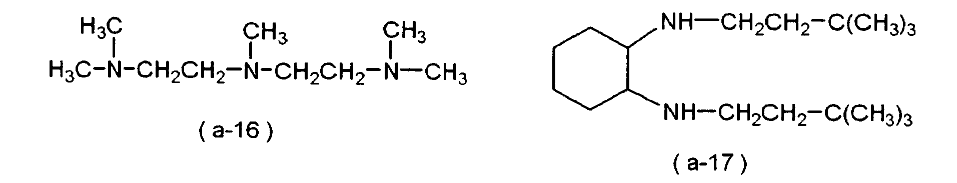

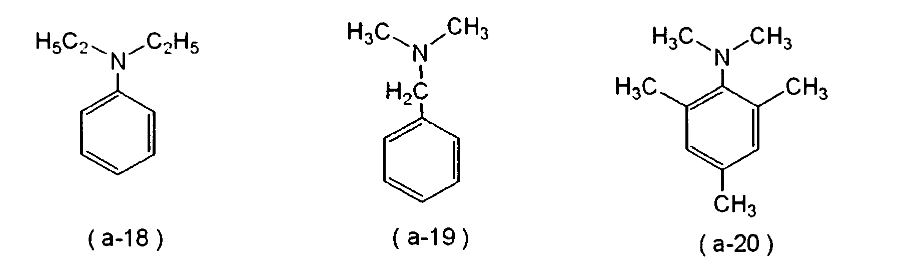

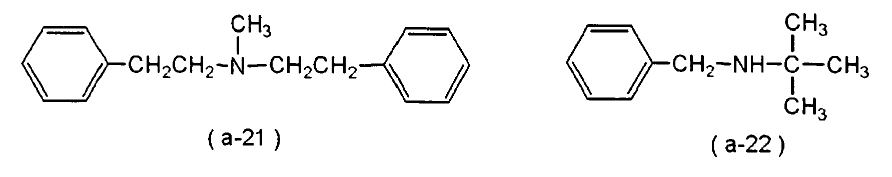

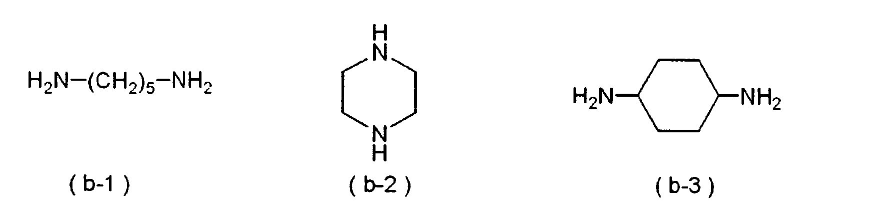

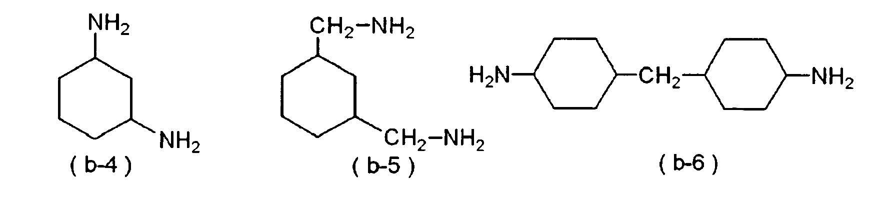

H₂N-CH₂CH₂-NH-CH₂CH₂-NH₂ (b-7)

H₂N-(CH₂CH₂-NH)₄-CH₂CH₂-NH₂ (b-8)

HO-CH₂CH₂-NH-CH₂CH₂-OH (b-9)

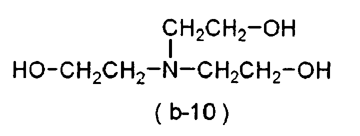

HO-CH₂CH₂-NH-CH₂CH₂-NH-CH₂CH₂-OH (b-11)

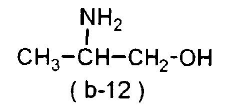

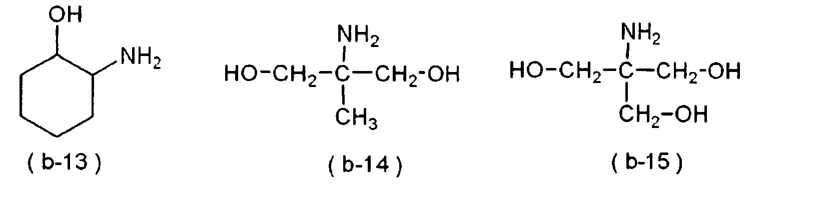

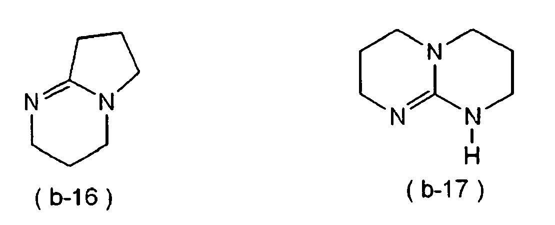

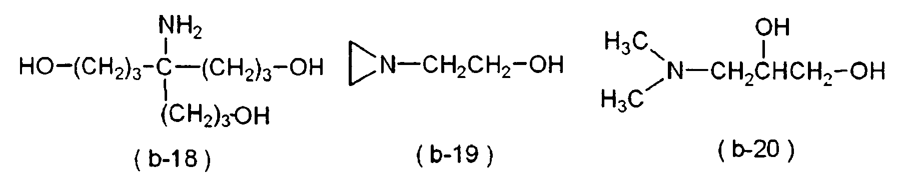

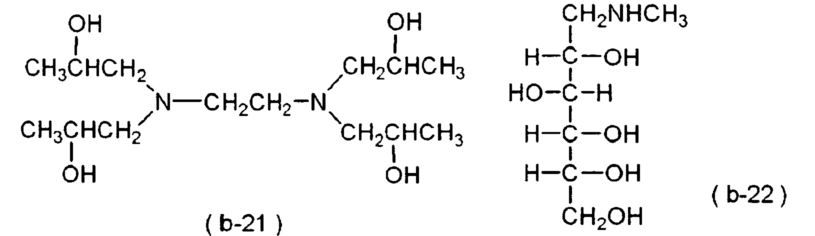

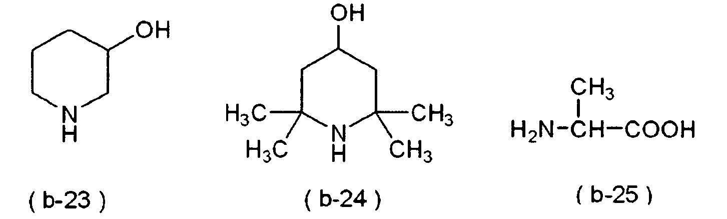

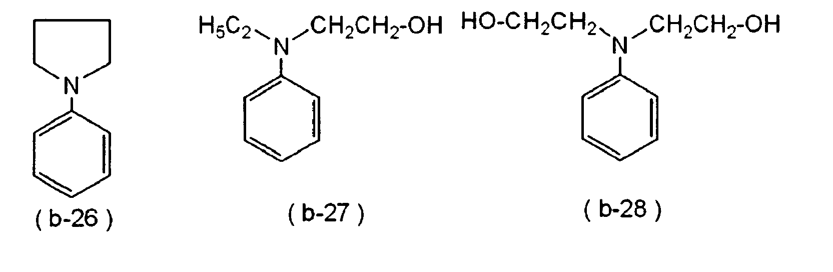

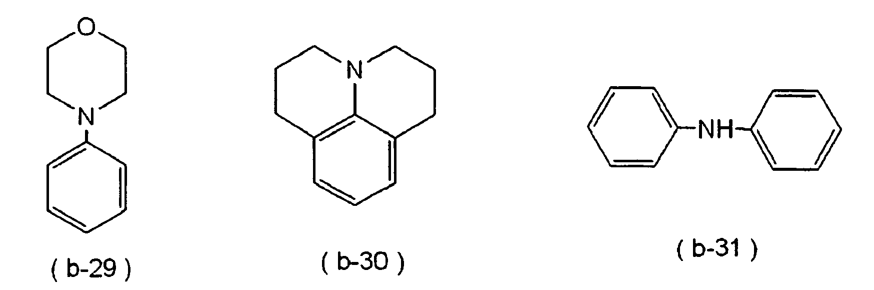

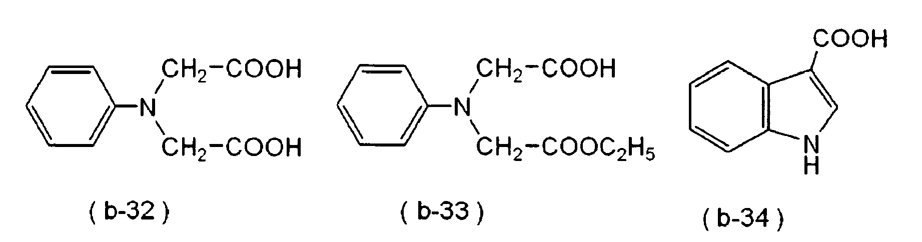

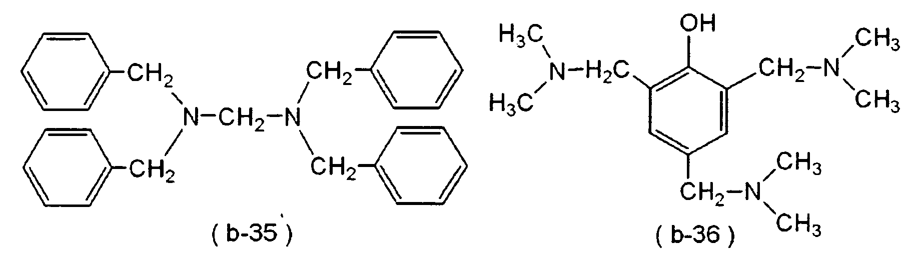

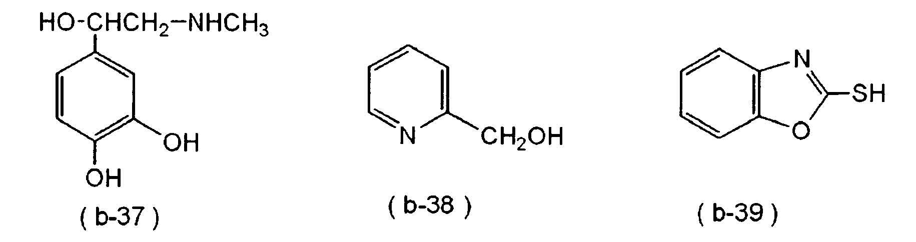

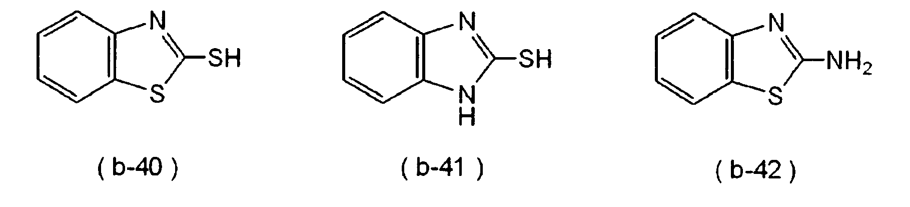

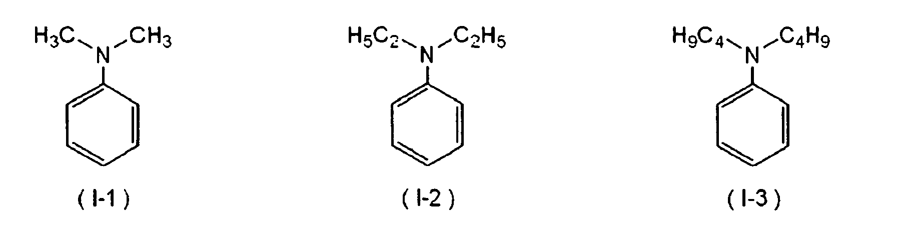

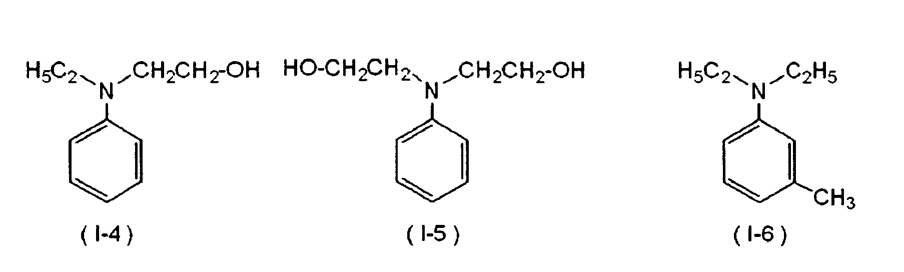

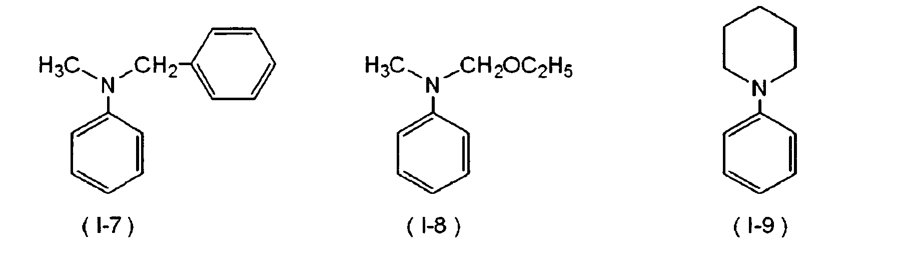

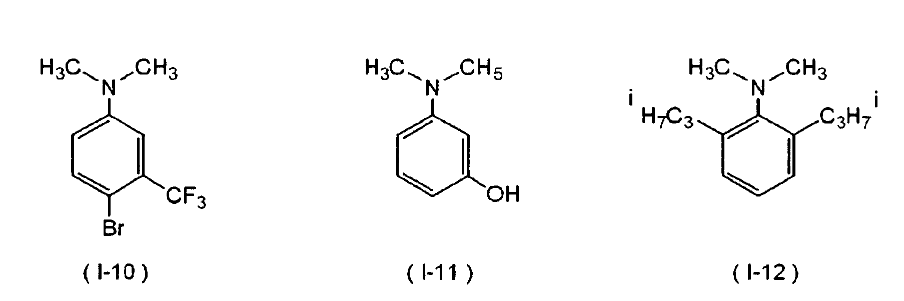

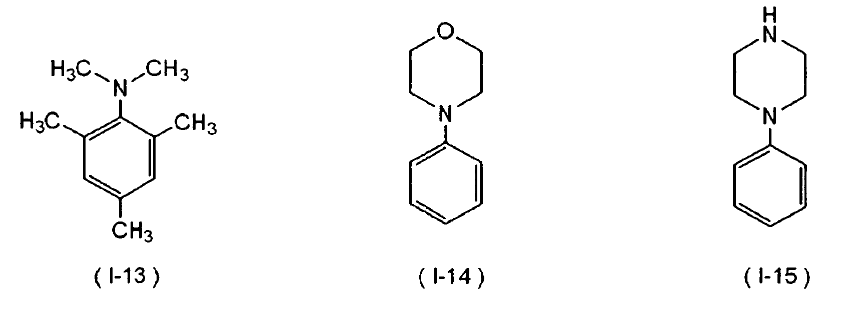

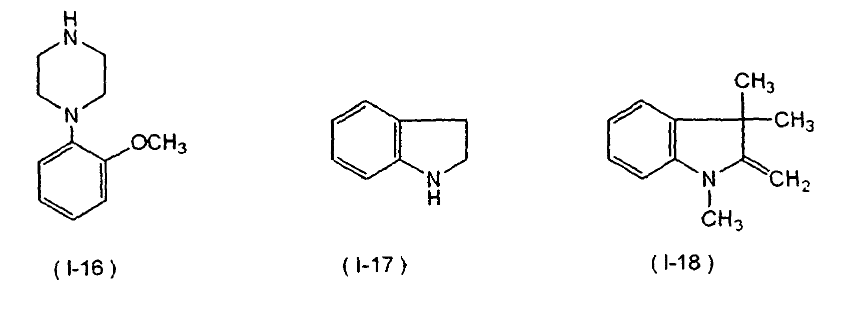

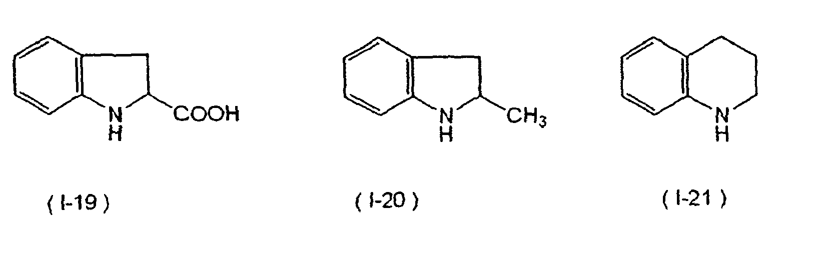

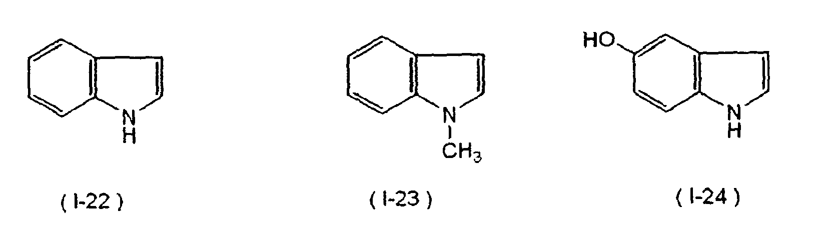

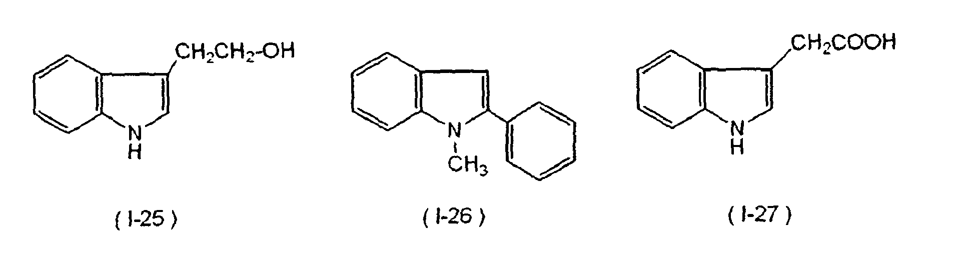

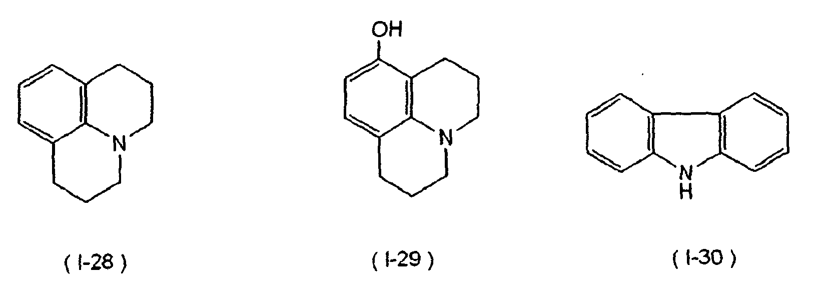

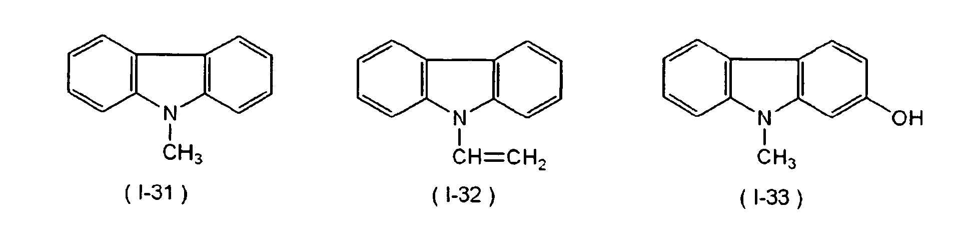

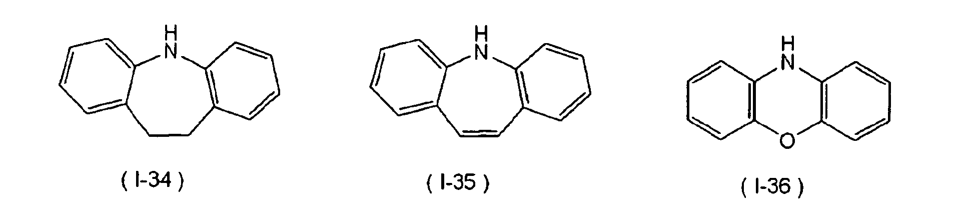

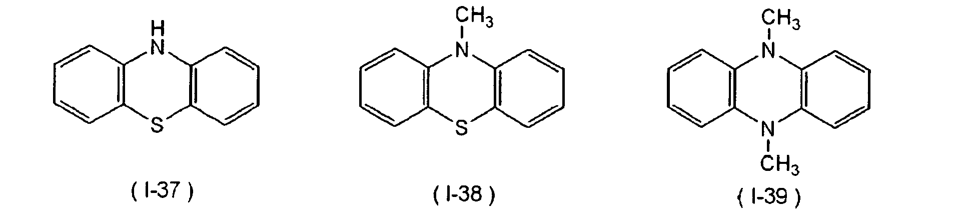

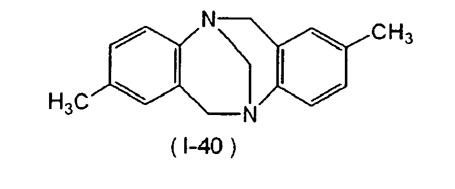

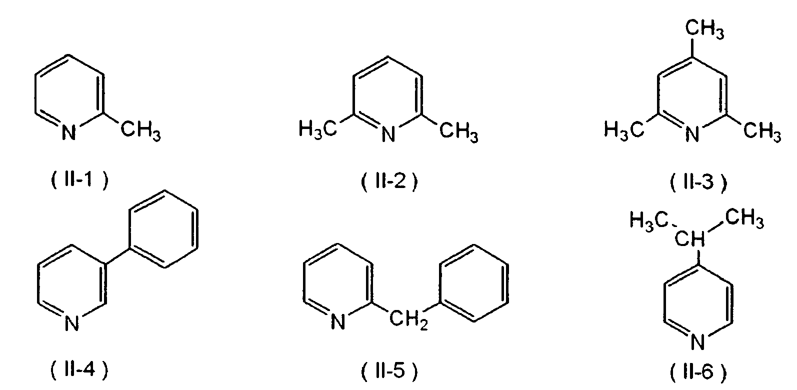

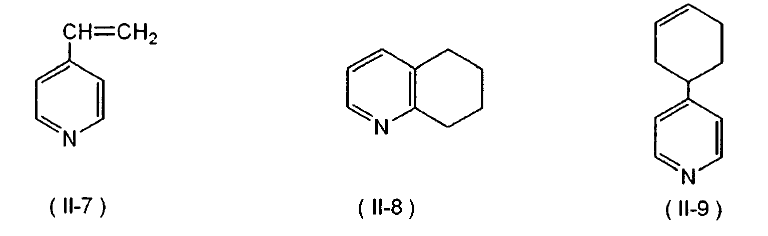

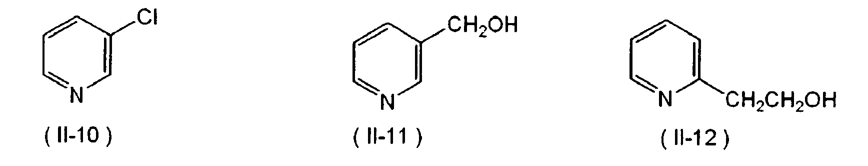

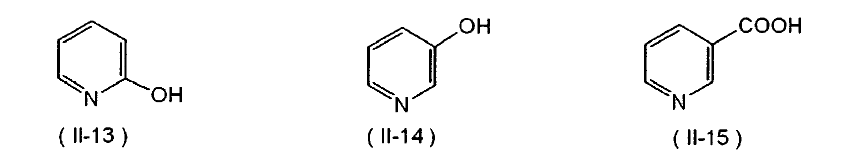

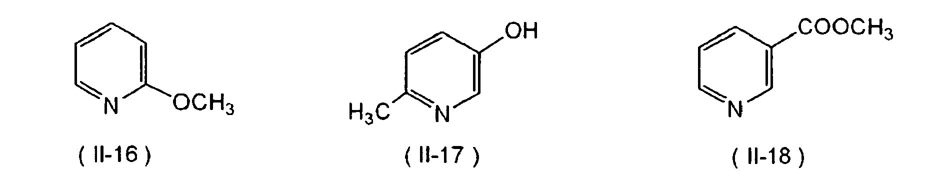

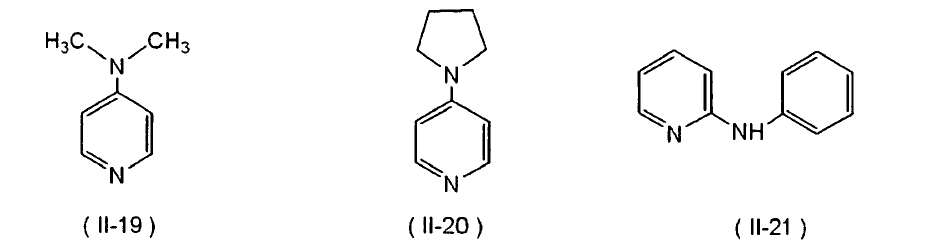

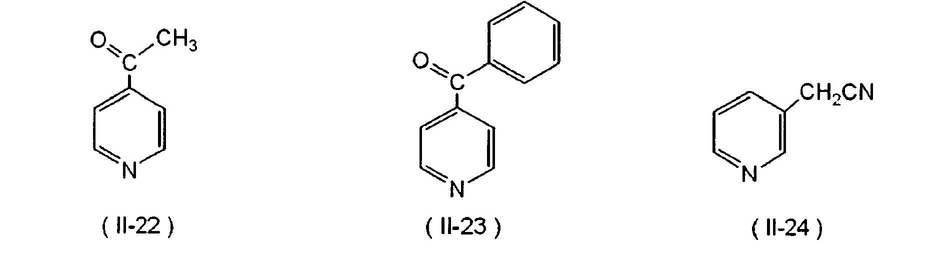

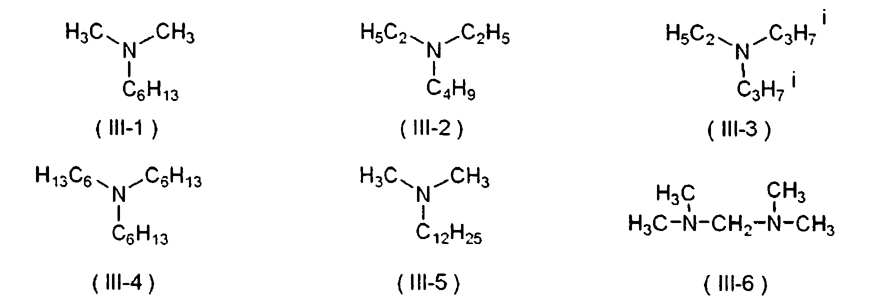

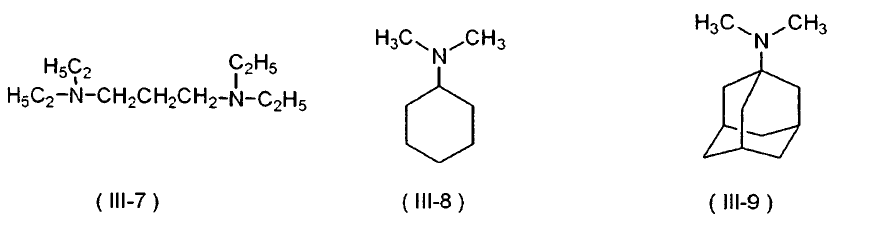

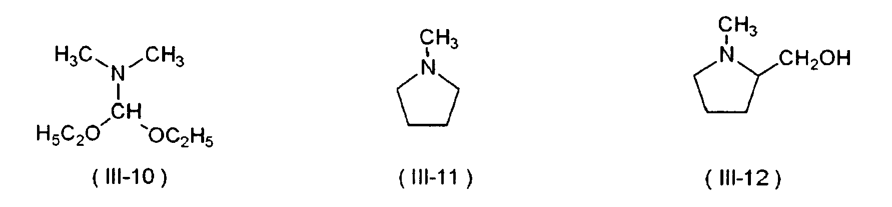

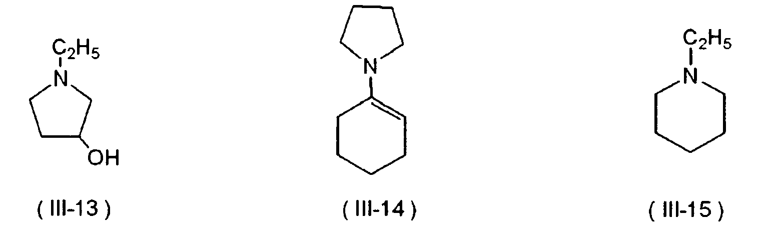

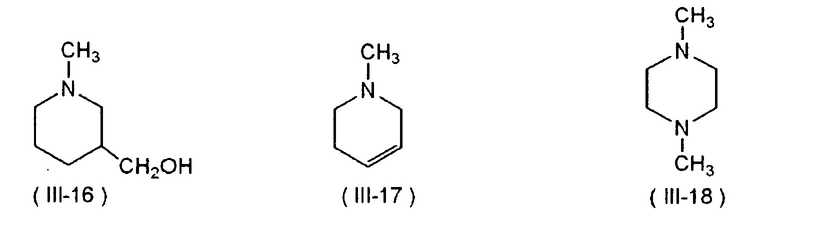

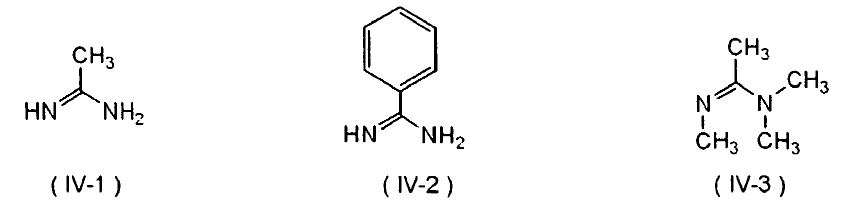

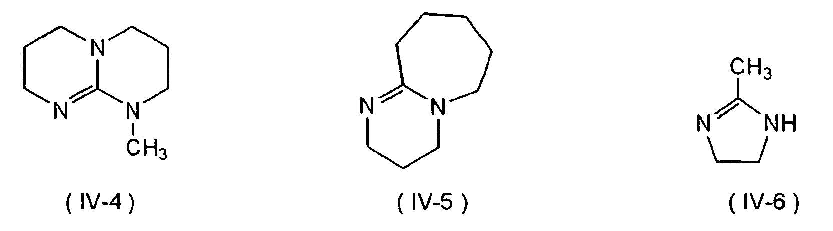

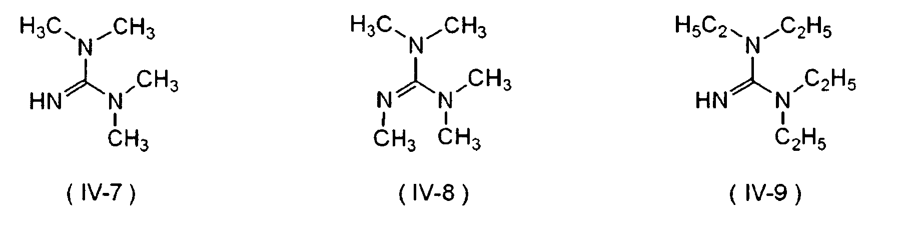

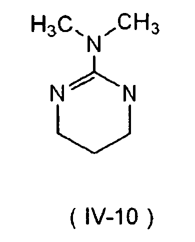

As examples of the amine compound that can be used in the present invention, a hindered amine compound is particularly preferable, and a hindered amine compound having no nucleophilic site in the molecule is most preferable.

The hindered amine compound having no nucleophilic site in the molecule (hereinafter, also called a 'hindered amine compound having a specific structure') is characterized by having no other nucleophilic site apart from a highly sterically hindered basic nitrogen atom. The other nucleophilic site referred to here means a functional group having nucleophilicity due to an unshared electron pair, such as an ester group, an ether group, a hydroxy group, an amino group, a thiol group, a thiocarbonyl group, or a thioester group. It can be expected that these nucleophilic sites would react with a growing cationic terminus during a cationic polymerization reaction, thus inhibiting a growth reaction and thereby easily causing degradation in sensitivity. The use of a hindered amine compound having a specific structure enables a trace amount of acid generated by a dark reaction to be trapped without inhibiting the growth reaction of cationic polymerization, thereby improving stability while maintaining high sensitivity.

HALS (Ciba Specialty Chemicals) or SANOL (Sankyo), which are commercial photostabilizers, are not included in the hindered amine compound having a specific structure in the present invention since they have an ester structure in the molecule, which is a nucleophilic site.

The hindered amine compound having a specific structure has a sterically bulky substituent around the basic nitrogen atom in order to suppress inhibition of a growth reaction due to reaction with a growing cationic terminus during a cationic polymerization reaction. Due to steric repulsion by the sterically bulky substituent, reaction between the basic nitrogen atom and the growing cationic terminus is suppressed, thus improving stability while maintaining high sensitivity.

Since the hindered amine compound having a specific structure in the present invention traps a trace amount of acid generated by a dark reaction, stability can be improved. Furthermore, it can be expected that when curing is carried out by normal exposure, due to steric repulsion by the sterically bulky substituent around the basic nitrogen atom, reaction between the basic nitrogen atom and the growing cationic terminus will be suppressed, progress of a cationic polymerization reaction will not be inhibited, and high sensitivity will be able to be maintained.

The hindered amine compound having a specific structure does not have a nucleophilic site other than the basic nitrogen atom in the molecule, and is preferably a compound comprising only carbon, hydrogen, and nitrogen atoms. The hindered amine compound having a specific structure is more preferably a compound represented by any of Formulae I to VII below.

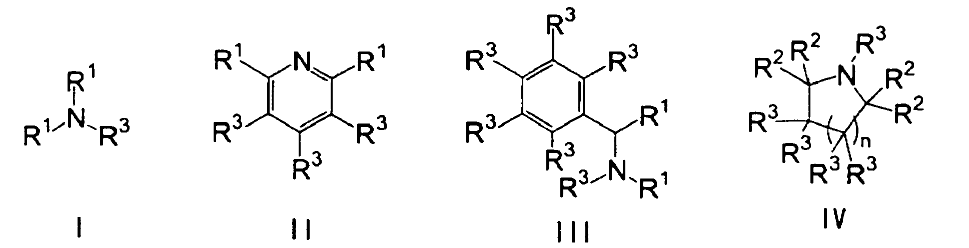

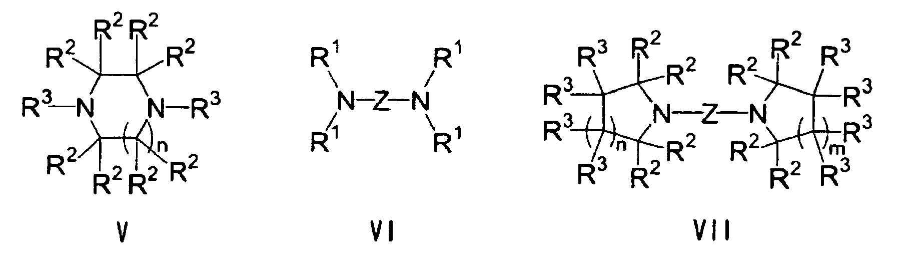

R¹ denotes a branched alkyl group having 3 to 8 carbon atoms, a cyclic alkyl group having 3 to 10 carbon atoms, or an aralkyl group having 7 to 20 carbon atoms, and R² denotes a straight-chain alkyl group having 1 to 4 carbon atoms, a branched alkyl group having 3 to 6 carbon atoms, or an aryl group having 6 to 12 carbon atoms. R³ denotes a hydrogen atom, a straight-chain alkyl group having 1 to 20 carbon atoms, a branched alkyl group having 3 to 6 carbon atoms, a cyclic alkyl group having 3 to 10 carbon atoms, an aryl group having 6 to 12 carbon atoms, an aralkyl group having 7 to 20 carbon atoms, or an alkenyl group having 2 to 20 carbon atoms. A plurality of R¹s and R²s present in the molecule may be identical to or different from each other or may be bonded to each other to form a ring structure. Z denotes a divalent organic group formed from a hydrocarbon. n and m denote integers of 1 to 3.

Examples of the branched alkyl group having 3 to 8 carbon atoms denoted by R¹ include an isopropyl group, an isobutyl group, a *tert*-butyl group, an isopentyl group, a 2-methylbutyl group, a neopentyl group, a 4-methylpentyl group, a 3-methylpentyl group, a 2-methylpentyl group, a 3,3-dimethylbutyl group, a 1,1-dimethylbutyl group, a 1,3-dimethylbutyl group, a 2,3-dimethylbutyl group, a 1-ethylbutyl group, a 1-ethyl-2-methyl-propyl group, a 1-methyl-1-ethylpropyl group, a 1-methyl-2-ethylpropyl group, a 2-methyl-1-ethylpropyl group, and a 2-methyl-2-ethylpropyl group; an isopropyl group, an isobutyl group, a *tert*-butyl group, an isopentyl group, a 2-methylbutyl group, and a neopentyl group are preferable.

Examples of the cyclic alkyl group having 3 to 10 carbon atoms denoted by R¹ include a cyclopropyl group, a cyclobutyl group, a cyclopentyl group, a cyclohexyl group, and a norbornyl group; a cyclopentyl group, a cyclohexyl group, and a norbornyl group are preferable.

Examples of the aralkyl group having 7 to 20 carbon atoms denoted by R¹ include substituted or unsubstituted aralkyl groups such as a benzyl group, an α-methylbenzyl group, an α-ethylbenzyl group, a phenethyl group, an α-methylphenethyl group, a β-methylphenethyl group, an α,α-dimethylbenzyl group, an α,α-dimethylphenethyl group, a 4-methylphenethyl group, a 4-methylbenzyl group, a 3-methylbenzyl group, a 2-methylbenzyl group, a 4-ethylbenzyl group, a 2-ethylbenzyl group, a 4-isopropylbenzyl group, a 4-*tert-*butylbenzyl group, a 2-*tert-*butylbenzyl group, a 4-*tert*-pentylbenzyl group, a 4-cyclohexylbenzyl group, a 4-*n*-octylbenzyl group, a 4-*tert*-octylbenzyl group, a 4-allylbenzyl group, a 4-benzylbenzyl group, a 4-phenethylbenzyl group, a 4-phenylbenzyl group, a 4-(4'-methylphenyl)benzyl group, a 2-furfuryl group, a diphenylmethyl group, a 1-naphthylmethyl group, and a 2-naphthylmethyl group; a benzyl group, an α-methylbenzyl group, an α-ethylbenzyl group, a phenethyl group, and an α-methylphenethyl group are preferable.

Examples of the straight-chain alkyl group having 1 to 4 carbon atoms denoted by R² include a methyl group, an ethyl group, a butyl group, and a propyl group.

Examples of the branched alkyl group having 3 to 6 carbon atoms denoted by R² include an isopropyl group, an isobutyl group, a *tert*-butyl group, an isopentyl group, a 2-methylbutyl group, a neopentyl group, a 4-methylpentyl group, a 3-methylpentyl group, a 2-methylpentyl group, a 3,3-dimethylbutyl group, a 1,1-dimethylbutyl group, a 1,3-dimethylbutyl group, a 2,3-dimethylbutyl group, a 1-ethylbutyl group, a 1-ethyl-2-methylpropyl group, a 1-methyl-1-ethylpropyl group, a 1-methyl-2-ethylpropyl group, a 2-methyl-1-ethylpropyl group, and a 2-methyl-2-ethylpropyl group; an isopropyl group, an isobutyl group, a *tert*-butyl group, an isopentyl group, a 2-methylbutyl group, and a neopentyl group are preferable.

Examples of the aryl group having 6 to 12 carbon atoms denoted by R² include a phenyl group, a tolyl group, a xylyl group, a 4-ethylphenyl group, a 4-*tert*-butylphenyl group, and a naphthyl group.

Examples of the straight-chain alkyl group having 1 to 20 carbon atoms denoted by R³ include a methyl group, an ethyl group, a propyl group, a butyl group, a pentyl group, a hexyl group, a heptyl group, an octyl group, a nonyl group, a decyl group, a dodecyl group, a hexadecyl group, and an octadecyl group; an octyl group, a nonyl group, a decyl group, a dodecyl group, a hexadecyl group, and an octadecyl group are preferable.

Examples of the straight-chain alkenyl group having 2 to 20 carbon atoms denoted by R³ include a vinyl group, an allyl group, a 1-propenyl group, an isopropenyl group, a 1-butenyl group, a 2-butenyl group, a 3-butenyl group, a 2-methyl-1-propenyl group, a 2-methylallyl group, a 1-methyl-1-propenyl group, a 1-methylallyl group, a 1-pentenyl group, a 2-pentenyl group, and a 1-hexenyl group; an allyl group, a 1-propenyl group, an isopropenyl group, a 1-butenyl group, and a 2-butenyl group are preferable.

The branched alkyl group having 3 to 6 carbon atoms, cyclic alkyl group having 3 to 10 carbon atoms, aryl group having 6 to 12 carbon atoms, and aralkyl group having 7 to 20 carbon atoms, denoted by R³, have the same meanings as those of the substituents described above for R¹ or R², and preferred ranges are also the same.

The divalent organic group formed from a hydrocarbon denotes a divalent organic group having 1 to 30 carbon atoms. The divalent organic group in this case includes an aliphatic group and an aromatic group. Furthermore, the aliphatic group includes a straight-chain or cyclic saturated or unsaturated divalent aliphatic hydrocarbon group, and the number of carbon atoms thereof is 1 to 30, and preferably 2 to 22. The unsaturated aliphatic group includes those having a double bond or a triple bond. The divalent aromatic group includes a divalent hydrocarbon group derived from a monocyclic aromatic hydrocarbon having one benzene ring (benzene, toluene, xylene, etc.) and a divalent hydrocarbon group derived from a polycyclic aromatic hydrocarbon having two or more, usually 2 to 4, benzene rings (naphthalene, biphenyl, terphenyl, etc.).

Each of the above-mentioned groups may have a substituent formed from a hydrocarbon when it is possible to introduce a substituent.

Specific examples of the hindered amine compound having a specific structure suitably used in the present invention include compounds (A-1) to (A-50) below, but the present invention is not limited thereto.

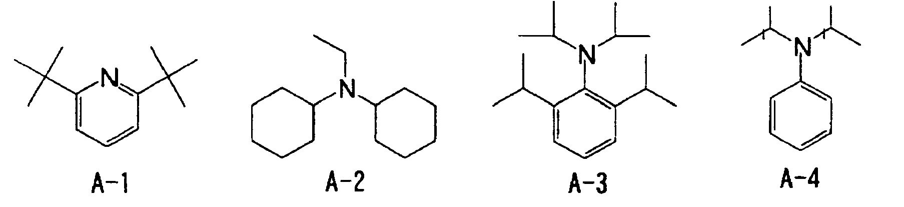

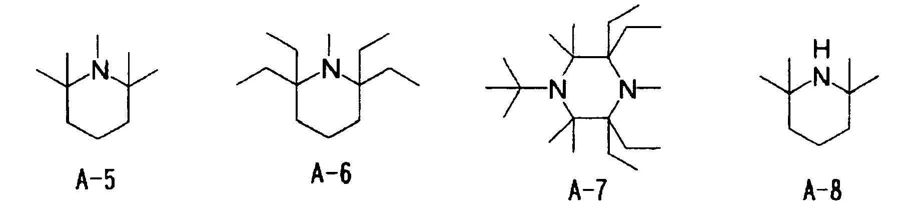

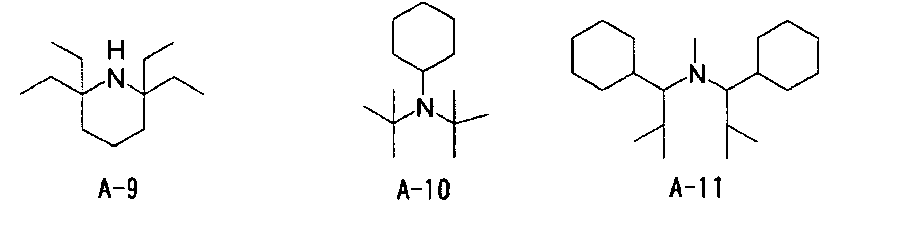

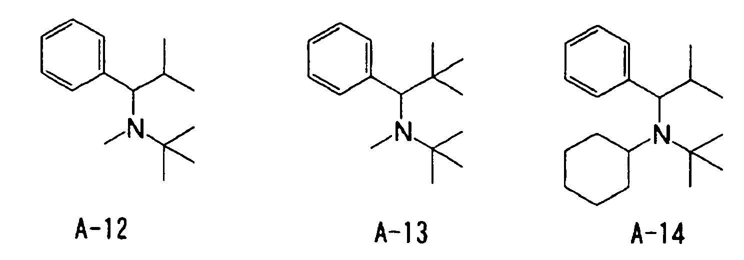

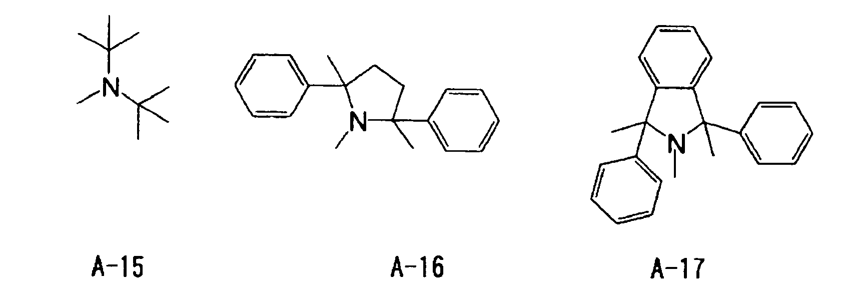

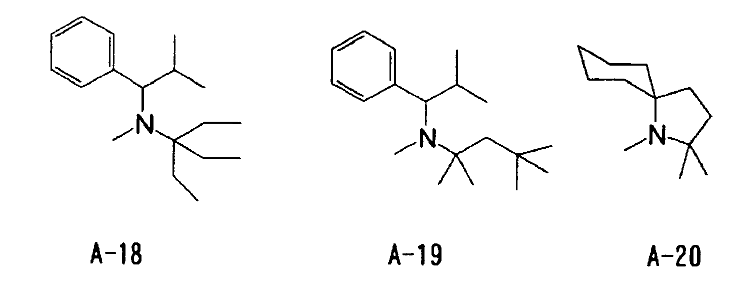

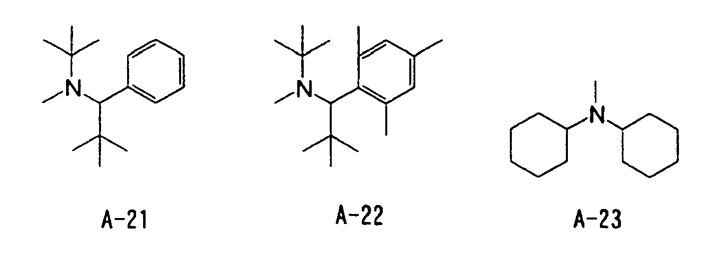

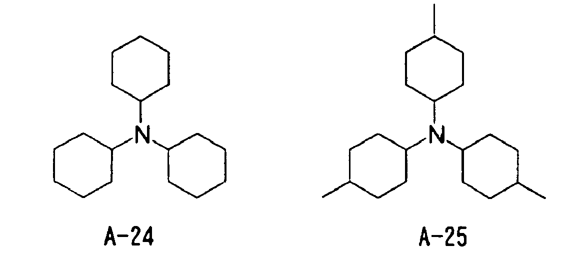

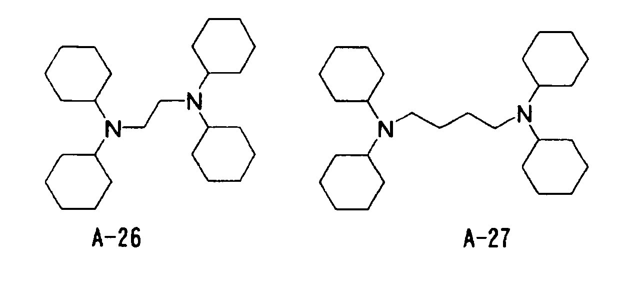

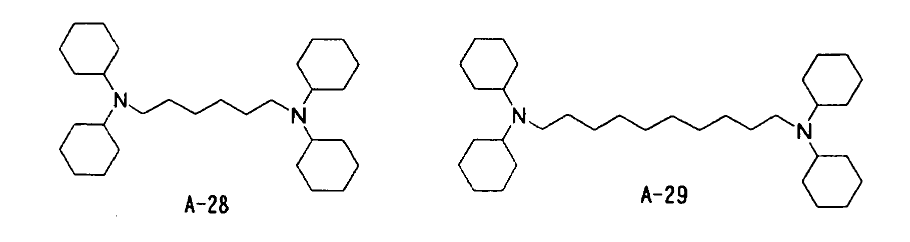

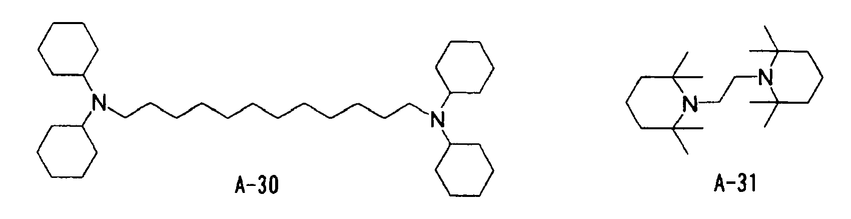

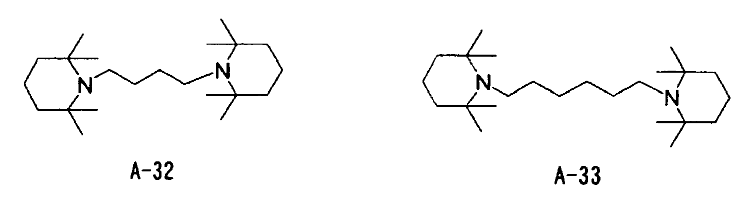

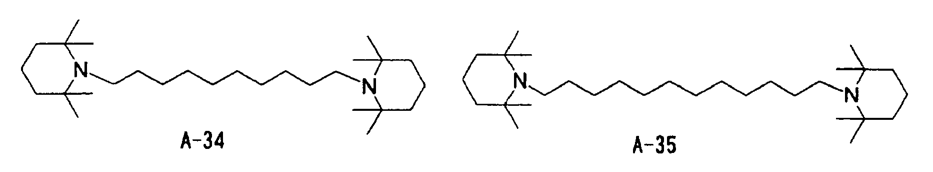

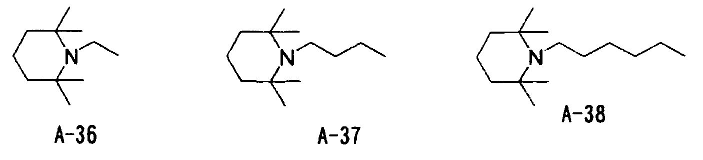

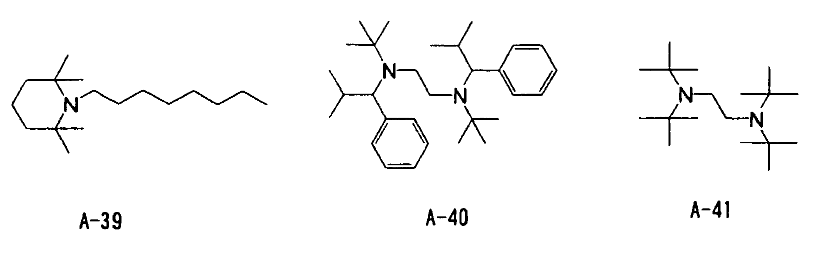

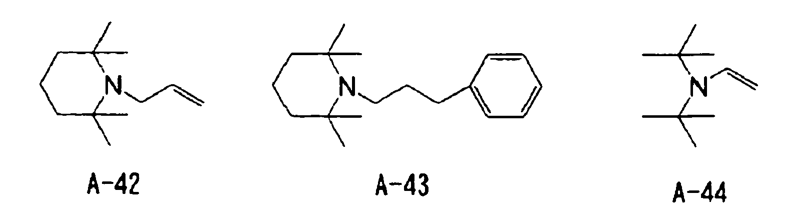

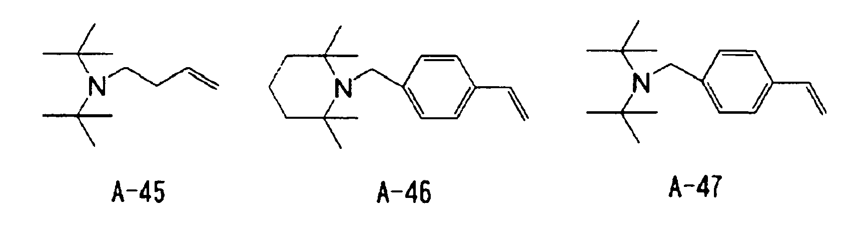

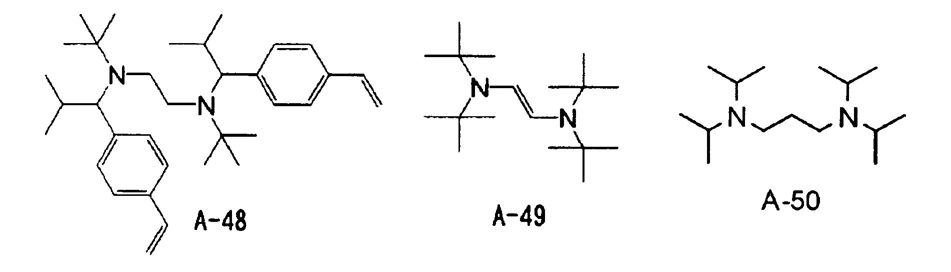

Among the compounds above (or Formulae I to VII), from the viewpoint of inkjet discharge properties and curing speed, compounds represented by Formulae IV, VI, and VII are preferable, compounds represented by Formulae VI and VII are more preferable, and A-26 is particularly preferable.

In the present invention, the amount of amine compound (preferably, a hindered amine compound having a specific structure) added is preferably 1 to 30 wt %, more preferably 3 to 20 wt %, and yet more preferably 5 to 15 wt %, relative to the total amount of pigment dispersion. When in the above-mentioned range, an ink composition that has excellent sensitivity and gives a high quality printed material can be obtained.

Furthermore, the amount of amine compound added is preferably 0.05 to 20 wt %, more preferably 0.1 to 15 wt %, and yet more preferably 0.5 to 10 wt %, relative to the total amount of the ink composition.

In the present invention, only one type of amine compound may be added, or two or more types thereof may be used in combination.

Furthermore, examples of other hindered amine compounds include the compounds listed below.

Examples thereof include bis(1,2,2,6,6-pentamethyl-4-piperidyl) sebacate (commercially available from Ciba Specialty Chemicals as 'TINUVIN 765' or from Sankyo as 'SANOL LS-765'), bis(2,2,6,6-tetramethyl-4-piperidyl) sebacate (commercially available from Ciba Specialty Chemicals as 'TINUVIN 770' or from Sankyo as 'SANOL LS-770'), 2,2,6,6-tetramethyl-4-piperidyl benzoate (commercially available from Sankyo as 'SANOL LS-744'), 1,2,2,6,6-pentamethyl-4-piperidyl methacrylate (commercially available from Adeka Corporation as 'ADEKA STAB LA-82'), 2,2,6,6-tetramethyl-4-piperidyl methacrylate (commercially available from Adeka Corporation as 'ADEKA STAB LA-87'), 1-[2-{3-(3,5-di-*tert*-butyl-4-hydroxyphenyl)propionyloxy}ethyl]-4-[3-(3,5-di-tert-butyl-4-hydroxyphenyl)propionyloxy]-2,2,6,6-tetramethylpiperidine (commercially available from Sankyo as 'SANOL LS-2626'), bis(1,2,2,6,6-pentamethyl-4-piperidyl) 2-*n*-butyl-2-(3,5-di-*tert*-butyl-4-hydroxybenzyl) malonate (commercially available from Ciba Specialty Chemicals as 'TINUVIN 144'), bis(1,2,2,6,6-pentamethyl-4-piperidyl) 4-methoxybenzylidene malonate (commercially available from Clariant as 'SANDUVOR PR-31'),
2",2",6",6"-tetramethylcyclododecanespiro-2'-oxazolidine-5'-spiro-4"-piperazin-4'-one (also called 1-oxa-3,8-diaza-2-undecamethyleno-4-oxo-7,7,9,9-tetramethylspiro[4.5]decane; commercially available from Hoechst as 'HOSTAVIN N 20'), 8-acetyl-3-dodecyl-7,7,9,9-tetramethyl-1,3,8-triazaspiro[4.5]decane-2,4-dione (commercially available from Sankyo as 'SANOL LS-440'),
tetrakis(1,2,2,6,6-pentamethyl-4-piperidyl) 1,2,3,4-butanetetracarboxylate (commercially available from Adeka Corporation as 'ADEKA STAB LA-52'), tetrakis(2,2,6,6-tetramethyl-4-piperidyl) 1,2,3,4-butanetetracarboxylate (commercially available from Adeka Corporation as 'ADEKA STAB LA-57'), a mixed ester of 1,2,3,4-butanetetracarboxylic acid with 1,2,2,6,6-pentamethyl-4-piperidinol and 1-tridecanol (commercially available from Adeka Corporation as'ADEKA STAB LA-62'), a mixed ester of 1,2,3,4-butanetetracarboxylic acid with 2,2,6,6-tetramethyl-4-piperidinol and 1-tridecanol (commercially available from Adeka Corporation as 'ADEKA STAB LA-67'), a mixed ester of 1,2,3,4-butanetetracarboxylic acid with 1,2,2,6,6-pentamethyl-4-piperidinol and 3,9-bis(2-hydroxy-1,1-dimethylethyl)-2,4,8,10-tetraoxaspiro[5.5]undecane
(commercially available from Adeka Corporation as 'ADEKA STAB LA-63'), a mixed ester of 1,2,3,4-butanetetracarboxylic acid with 2,2,6,6-tetramethyl-4-piperidinol and 3,9-bis(2-hydroxy-1,1-dimethylethyl)-2,4,8,10-tetraoxaspiro[5.5]undecane (commercially available from Adeka Corporation as 'ADEKA STAB LA-68'),
a polycondensate of dimethyl succinate and 1-(2-hydroxyethyl)-4-hydroxy-2,2,6,6-tetramethylpiperidine (also called 4-hydroxy-2,2,6,6-tetramethyl-1-piperidinoethanol/succinic acid copolymer; commercially available from Ciba Specialty Chemicals as 'TINUVIN 622'), a polycondensate of *N*,*N*'-bis(2,2,6,6-tetramethyl-4-piperidyl)hexamethylenediamine and 1,2-dibromoethane (also called poly[N,N'-di(2,2,6,6-tetramethyl-4-piperidyl) hexamethylenediamino-*N*'-ethylene]; commercially available from Montefluos as 'SPINUVEX A-36'), poly[{6-(1,1,3,3-tetramethylbutyl)amino-1,3,5-triazine-2,4-diyl}{(2,2,6,6-tetramethyl-4-pi peridyl)imino}hexamethylene{(2,2,6,6-tetramethyl-4-piperidyl)imino}] (commercially available from Ciba Specialty Chemicals as 'CHIMASSORB 944'), and poly[(6-morpholino-1,3,5-triazine-2,4-diyl){(2,2,6,6-tetramethyl-4-piperidyl)imino}hexam ethylene{(2,2,6,6-tetramethyl-4-piperidyl)imino}] (commercially available from American Cyanamid as 'CYASORB UV 3346').

### (E) Dispersant

The ink composition of the present invention comprises a dispersant (E) in order to stably disperse the pigment in the ink composition.

As the dispersant that can be used in the present invention, a polymeric dispersant is preferable. The 'polymeric dispersant' referred to in the present invention means a dispersant having a weight-average molecular weight of 1,000 or greater.

Examples of the polymeric dispersant include polymeric dispersants such as DISPERBYK-101, DISPERBYK-102, DISPERBYK-103, DISPERBYK-106, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, and DISPERBYK-182 (manufactured by BYK Chemie), EFKA4010, EFKA4046, EFKA4080, EFKA5010, EFKA5207, EFKA5244, EFKA6745, EFKA6750, EFKA7414, EFKA745, EFKA7462, EFKA7500, EFKA7570, EFKA7575, and EFKA7580 (manufactured by EFKA Additives), DISPERSE AID 6, DISPERSE AID 8, DISPERSE AID 15, and DISPERSE AID 9100 (manufactured by San Nopco Limited); various types of SOLSPERSE dispersants such as SOLSPERSE 3000, 5000, 9000, 12000, 13240, 13940, 17000, 22000, 24000, 26000, 28000, 32000, 36000, 39000, 41000, and 71000 (manufactured by Avecia); ADEKA PLURONIC L31, F38, L42, L44, L61, L64, F68, L72, P95, F77, P84, F87, P94, L101, P103, F108, L121, and P-123 (manufactured by Adeka Corporation), ISONET S-20 (manufactured by Sanyo Chemical Industries, Ltd.), and DISPARLON KS-860, 873SN, and 874 (polymeric dispersant), #2150 (aliphatic poly carboxylic acid), and #7004 (polyether ester type) (manufactured by Kusumoto Chemicals, Ltd.).

The content of the dispersant in the ink composition of the present invention is appropriately selected according to the intended purpose, and is generally preferably 0.05 to 15 wt % relative to the weight of the entire ink composition.

In the present invention, with regard to the ratio by weight of the dispersant relative to the pigment, when the weight of the pigment in the ink composition is A and the weight of the dispersant in the ink composition is E, the ratio by weight (E/A) is preferably 0.01 < E/A ≤ 5, more preferably 0.05 ≤ E/A ≤ 2.5, and yet more preferably 0.1 ≤ E/A ≤ 1. When the ratio by weight of the dispersant relative to the pigment is set in the above-described range, there is no aggregation/precipitation of the pigment, the ink viscosity does not increase, and an ink composition having excellent storage stability over time, a low viscosity and excellent discharge properties can be obtained.

### (F) Other component

The ink composition may comprise another component as necessary in addition to the above-described components.

Examples of the other component include a sensitizer, a co-sensitizer, a surfactant, a UV absorber, an antioxidant, an antifading agent, a conductive salt, a solvent, a polymer compound, and a basic compound.

### Sensitizer

The ink composition of the present invention may contain a sensitizer in order to promote decomposition of the above-mentioned photo-acid generator by absorbing specific actinic radiation.

The sensitizer absorbs specific actinic radiation and attains an electronically excited state. The sensitizer in the electronically excited state causes actions such as electron transfer, energy transfer, or heat generation upon contact with the polymerization initiator. This causes the polymerization initiator to undergo a chemical change and decompose, thus forming an acid or a cation.

Preferred examples of the sensitizing dye include those that belong to compounds below and have an adsorption wavelength in the region of 350 nm to 450 nm.

Polynuclear aromatic compounds (e.g. anthracene, 9,10-dialkoxyanthracene pyrene, perylene, triphenylene), xanthenes (e.g. fluorescein, eosin, erythrosine, rhodamine B, rose bengal), thioxanthones (e.g. isopropyl thioxanthones, cyanines (e.g. thiacarbocyanine, oxacarbocyanine), merocyanines (e.g. merocyanine, carbomerocyanine), thiazines (e.g. thionine, methylene blue, toluidine blue), acridines (e.g. acridine orange, chloroflavin, acriflavine), anthraquinones (e.g. anthraquinone), squaryliums (e.g. squarylium), and coumarins (e.g. 7-diethylamino-4-methylcoumarin).

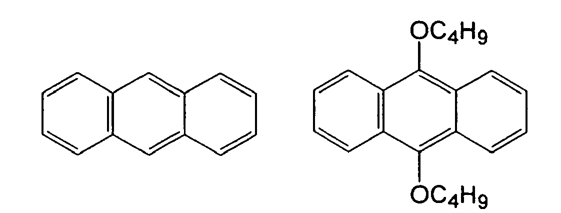

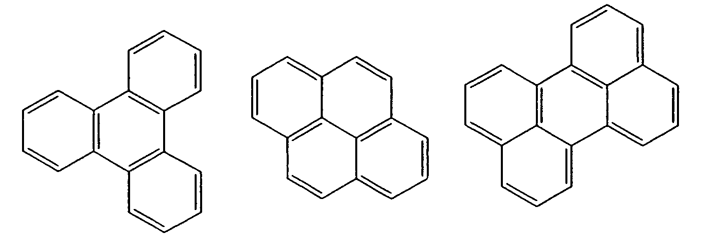

Furthermore, preferred examples of the sensitizer include compounds represented by Formulae (IX) to (XIII) below.

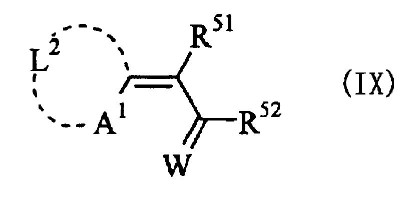

In Formula (IX), A¹ denotes a sulfur atom or NR⁵⁰, R⁵⁰ denotes an alkyl group or an aryl group, L² denotes a non-metallic atomic group forming a basic nucleus of a dye in cooperation with a neighboring A¹ and the neighboring carbon atom, R⁵¹ and R⁵² independently denote a hydrogen atom or a monovalent non-metallic atomic group, and R⁵¹ and R⁵² may be bonded together to form an acidic center of a dye. W denotes an oxygen atom or a sulfur atom.

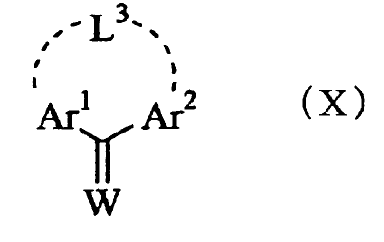

In Formula (X), Ar¹ and Ar² independently denote an aryl group and are connected to each other via a bond of -L³-. Here, L³ denotes -O- or -S-. W has the same meaning as that shown in Formula (IX).

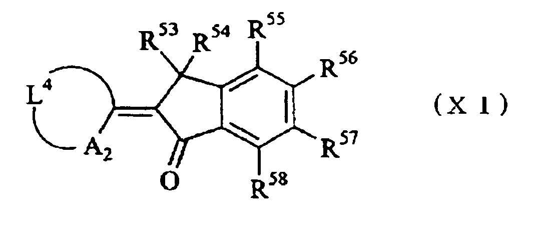

In Formula (XI), A₂ denotes a sulfur atom or NR⁵⁹, L⁴ denotes a non-metallic atomic group forming a basic center of a dye in cooperation with the neighboring A₂ and carbon atom, R⁵³, R⁵⁴, R⁵⁵, R⁵⁶, R⁵⁷, and R⁵⁸ independently denote a monovalent non-metallic atomic group, and R⁵⁹ denotes an alkyl group or an aryl group.

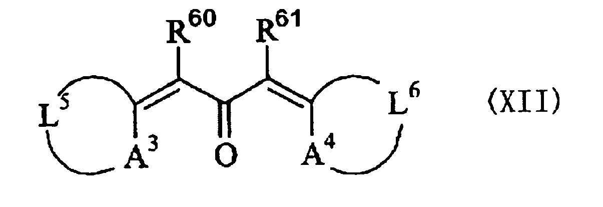

In Formula (XII), A³ and A⁴ independently denote -S-, -NR⁶²-, or -NR⁶³-, R⁶² and R⁶³ independently denote a substituted or unsubstituted alkyl group, or a substituted or unsubstituted aryl group, L⁵ and L⁶ independently denote a non-metallic atomic group forming a basic center of a dye in cooperation with the neighboring A³ and A⁴ and neighboring carbon atom, and R⁶⁰ and R⁶¹ independently denote a hydrogen atom or a monovalent non-metallic atomic group, or are bonded to each other to form an aliphatic or aromatic ring.

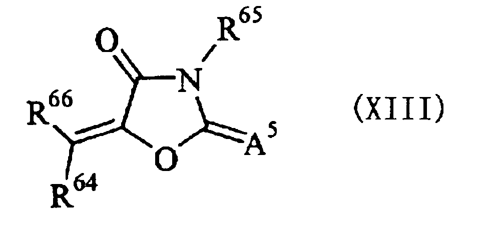

In Formula (XIII), R⁶⁶ denotes an aromatic ring or a hetero ring, which may have a substituent, and A⁵ denotes an oxygen atom, a sulfur atom, or -NR⁶⁷-. R⁶⁴, R⁶⁵, and R⁶⁷ independently denote a hydrogen atom or a monovalent non-metallic atomic group, and R⁶⁷ and R⁶⁴, and R⁶⁵ and R⁶⁷ may be bonded to each other to form an aliphatic or aromatic ring.

Preferable specific examples of the compounds represented by Formulae (IX) to (XIII) include (E-1) to (E-20) listed below.

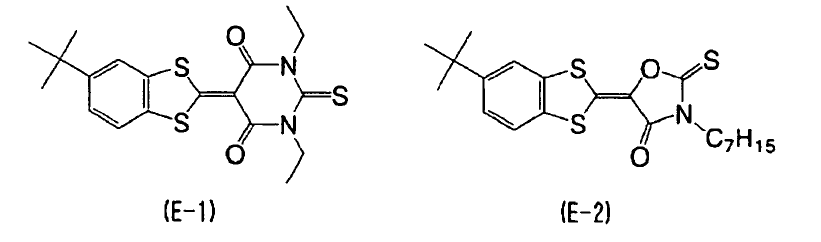

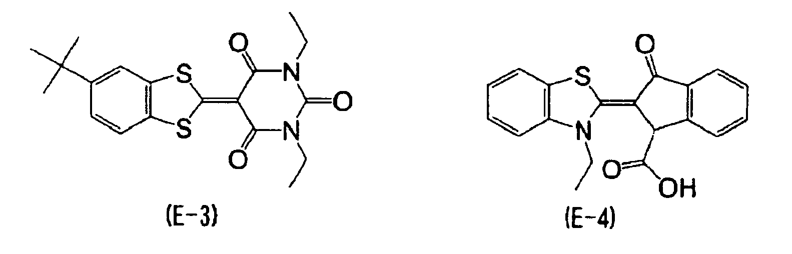

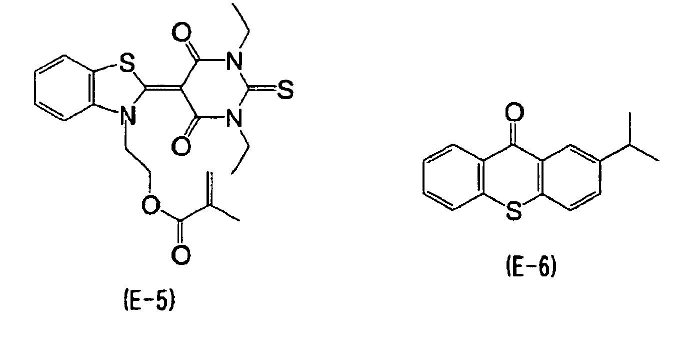

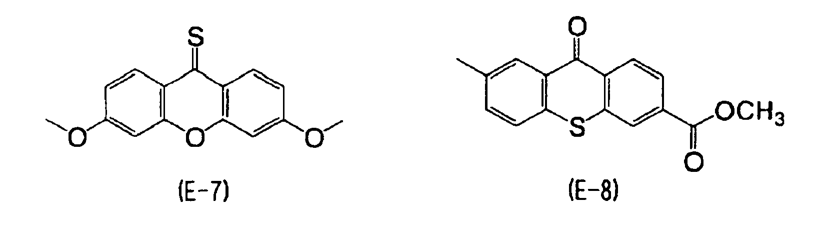

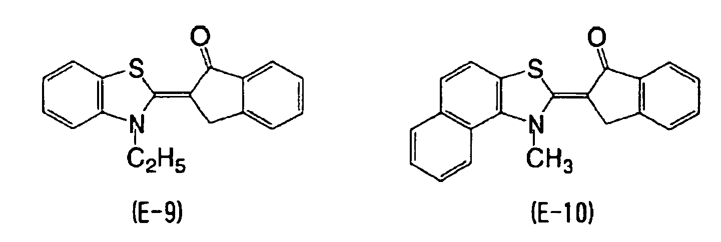

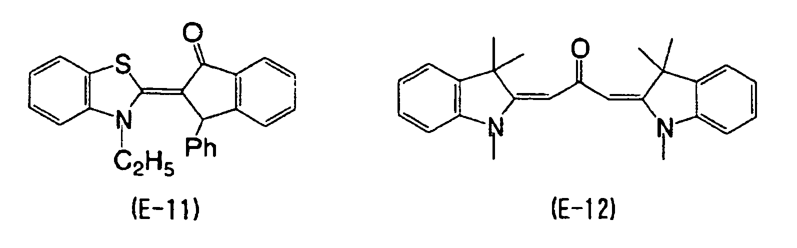

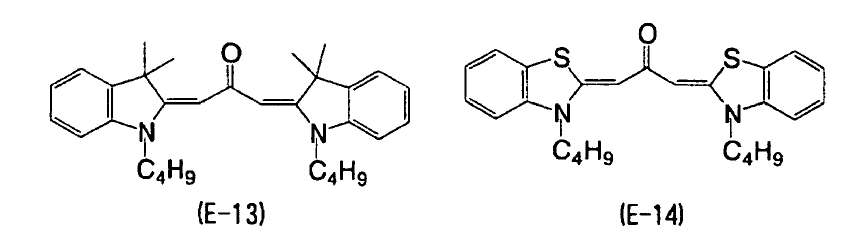

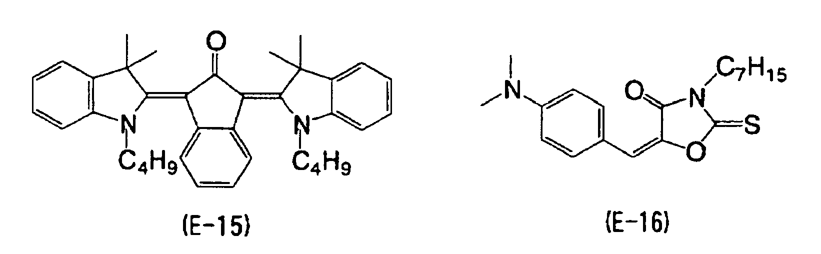

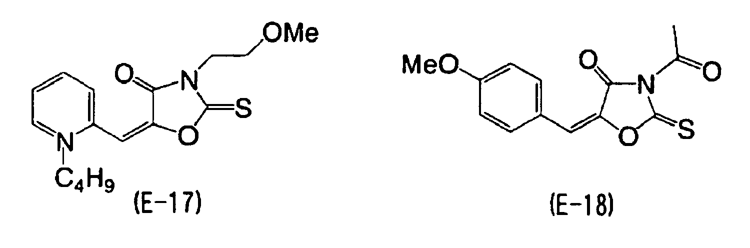

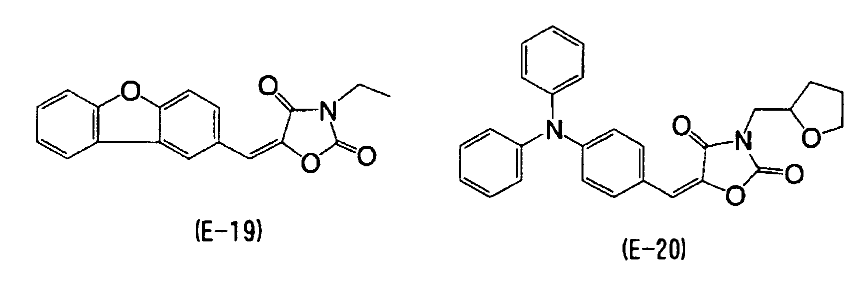

The content of the sensitizer in the ink composition of the present invention is appropriately selected according to the intended purpose, but it is preferably 0.05 to 4 wt % relative to the weight of the entire ink composition.

### Co-sensitizer

The ink composition of the present invention preferably comprises a co-sensitizer (the co-sensitizer is also called a 'supersensitizer'). In the present invention, the co-sensitizer has the function of further improving the sensitivity of the sensitizer to actinic radiation or the function of suppressing inhibition by oxygen of polymerization of the polymerizable compound, etc.

Examples of such a co-sensitizer include amines such as compounds described in M. R. Sander et al., 'Journal of Polymer Society', Vol. 10, p. 3173 (1972), JP-B-44-20189, JP-A-51-82102, JP-A-52-134692, JP-A-59-138205, JP-A-60-84305, JP-A-62-18537, JP-A-64-33104, and Research Disclosure No. 33825.

Specific examples thereof include triethanolamine, ethyl p-dimethylaminobenzoate, p-formyldimethylaniline, and p-methylthiodimethylaniline.

Other examples of the co-sensitizer include thiols and sulfides such as thiol compounds described in JP-A-53-702, JP-B-55-500806, and JP-A-5-142772, and disulfide compounds of JP-A-56-75643, and specific examples thereof include 2-mercaptobenzothiazole, 2-mercaptobenzoxazole, 2-mercaptobenzimidazole, 2-mercapto-4(3H)-quinazoline, and □-mercaptonaphthalene.

Yet other examples of the co-sensitizer include amino acid compounds (e.g. N-phenylglycine, etc.), organometallic compounds described in JP-B-48-42965 (e.g. tributyltin acetate, etc.), hydrogen-donating compounds described in JP-B-55-34414, sulfur compounds described in JP-A-6-308727 (e.g. trithiane, etc.), phosphorus compounds described in JP-A-6-250387 (diethylphosphite, etc.), and Si-H, Ge-H compounds described in JP-A-8-54735.

The content of the co-sensitizer in the ink composition of the present invention is appropriately selected according to the intended purpose, but it is preferably 0.05 to 4 wt % relative to the weight of the entire ink composition.

### Surfactant

It is preferable to add a surfactant to the ink composition of the present invention in order to impart long-term discharge stability.

As the surfactant, those described in JP-A-62-173463 and 62-183457 can be cited. Examples thereof include anionic surfactants such as dialkylsulfosuccinic acid salts, alkylnaphthalene sulfonic acid salts, and fatty acid salts, nonionic surfactants such as polyoxyethylene alkyl ethers, polyoxyethylene alkyl allyl ethers, acetylene glycols, and polyoxyethylene/polyoxypropylene block copolymers, and cationic surfactants such as alkylamine salts and quaternary ammonium salts. An organofluoro compound may be used instead of the above-mentioned surfactant. The organofluoro compound is preferably hydrophobic. Examples of the organofluoro compound include fluorine-based surfactants, oil-like fluorine-based compounds (e.g. fluorine oil), solid fluorine compound resins (e.g. tetrafluoroethylene resin), and those described in JP-B-57-9053 (paragraphs 8 to 17) and JP-A-62-135826.

The examples of the surfactant include preferably polydialkylsiloxanes and more preferably a polyethoxy modified methylsiloxane.

The content of the surfactant in the ink composition of the present invention is appropriately selected according to the intended purpose, and it is preferably 0.0001 to 1wt % for each surfactant relative to the weight of the entire ink composition.

### UV absorber

A UV absorber may be used from the viewpoint of improving the weather resistance of an image obtained and preventing discoloration.

The UV absorbers include benzotriazole compounds described in JP-A-58-185677, JP-A-61-190537, JP-A-2-782, JP-A-5-197075 and JP-A-9-34057; benzophenone compounds described in JP-A-46-2784, JP-A-5-194483 and US Pat. No. 3,214,463; cinnamic acid compounds described in JP-B-48-30492, JP-B-56-21141 and JP-A-10-88106; triazine compounds described in JP-A-4-298503, JP-A-8-53427, JP-A-8-239368, JP-A-10-182621 and JP-W-8-501291 (JP-W denotes an unexamined published international patent application); compounds described in Research Disclosure No. 24239; and compounds represented by stilbene and benzoxazole compounds, which absorb ultraviolet rays to emit fluorescence, the so-called fluorescent brightening agents.

The amount thereof added is appropriately selected according to the intended application, and it is generally on the order of 0.5 to 15 wt % on the basis of the solids content in the ink composition.

### Antioxidant

In order to improve the stability of the ink composition, an antioxidant may be added. Examples of the antioxidant include those described in Laid-open European

Patent Nos. 223739, 309401, 309402, 310551, 310552, and 459416, Laid-open German Patent No. 3435443, JP-A-54-48535, JP-A-62-262047, JP-A-63-113536, JP-A-63-163351, JP-A-2-262654, JP-A-2-71262, JP-A-3-121449, JP-A-5-61166, JP-A-5-119449, and US Pat. Nos. 4,814,262 and 4,980,275.

The amount thereof added is appropriately selected according to the intended application, and it is generally on the order of 0.1 to 8 wt % on the basis of the solids content in the ink composition.

### Antifading agent

The ink composition of the present invention may employ various organic and metal complex antifading agents. The organic antifading agents include hydroquinones, alkoxyphenols, dialkoxyphenols, phenols, anilines, amines, indanes, chromans, alkoxyanilines, and heterocycles, and the metal complex antifading agents include nickel complexes and zinc complexes. More specifically, there can be used compounds described in patents cited in Research Disclosure, No. 17643, Items VII-I to J, ibid., No.15162, ibid., No.18716, page 650, left-hand column, ibid., No. 36544, page 527, ibid., No. 307105, page 872, and ibid., No. 15162, and compounds contained in general formulae and compound examples of typical compounds described in JP-A-62-215272, pages 127 to 137.

The amount thereof added is appropriately selected according to the intended application, and it is generally on the order of 0.1 to 8 wt % on the basis of the solids content in the ink composition.

### Conductive salt

The ink composition of the present invention may contain, for the purpose of controlling discharge properties, a conductive salt such as potassium thiocyanate, lithium nitrate, ammonium thiocyanate, or dimethylamine hydrochloride.

### Solvent

It is also effective to add a trace amount of organic solvent to the ink composition of the present invention in order to improve the adhesion to a recording medium.

Examples of the solvent include ketone-based solvents such as acetone, methyl ethyl ketone, and diethyl ketone, alcohol-based solvents such as methanol, ethanol, 2-propanol, 1-propanol, 1-butanol, and tert-butanol, chlorine-based solvents such as chloroform and methylene chloride, aromatic-based solvents such as benzene and toluene, ester-based solvents such as ethyl acetate, butyl acetate, and isopropyl acetate, ether-based solvents such as diethyl ether, tetrahydrofuran, and dioxane, and glycol ether-based solvents such as ethylene glycol monomethyl ether and ethylene glycol dimethyl ether.

In this case, it is effective if the amount thereof added is in a range that does not cause problems with the solvent resistance or the VOC, and the amount is preferably in the range of 0.1 to 5 wt % relative to the total amount of the ink composition, and more preferably 0.1 to 3 wt %.

### High molecular weight compound

The ink composition may contain various types of high molecular weight compounds in order to adjust film physical properties. Examples of the high molecular weight compounds include acrylic resins, polyvinylbutyral resins, polyurethane resins, polyamide resins, polyester resins, epoxy resins, phenol resins, polycarbonate resins, polyvinylformal resins, shellac, vinylic resins, acrylic resins, rubber-based resins, waxes, and other natural resins. They may be used in a combination of two or more types. Among these, a vinylic copolymer obtained by copolymerization of an acrylic monomer is preferable. Furthermore, as a copolymer component of the high molecular weight compound, a copolymer containing as a structural unit a 'carboxyl group-containing monomer', an 'alkyl methacrylate ester', or an 'alkyl acrylate ester' may preferably be used.

### Basic compound

It is preferable to add the basic compound from the viewpoint of improving the storage stability of the ink composition. As the basic compound that can be used in the present invention, a known basic compound may be used and, for example, a basic inorganic compound such as an inorganic salt or a basic organic compound such as an amine is preferably used.

In addition to the above, the composition may contain as necessary, for example, a leveling additive, a matting agent, a wax for adjusting film physical properties, or a tackifier in order to improve the adhesion to a recording medium such as polyolefin or PET, the tackifier not inhibiting polymerization.

Specific examples of the tackifier include high molecular weight tacky polymers described on pp. 5 and 6 of JP-A-2001-49200 (e.g. a copolymer formed from an ester of (meth)acrylic acid and an alcohol having an alkyl group with 1 to 20 carbons, an ester of (meth)acrylic acid and an alicyclic alcohol having 3 to 14 carbons, or an ester of (meth)acrylic acid and an aromatic alcohol having 6 to 14 carbons), and a low molecular weight tackifying resin having a polymerizable unsaturated bond.

### Properties of ink composition

In the first and the second aspects of the present invention, from the viewpoint of dischargability, the ink composition of the present invention has a viscosity at 25°C of preferably no more than 40 mPa·s, more preferably 5 to 40 mPa·s, and yet more preferably 7 to 30 mPa·s. Furthermore, the viscosity of the ink composition at the discharge temperature (preferably 25°C to 80°C, and more preferably 25°C to 50°C) is preferably 3 to 15 mPa·s, and more preferably 3 to 13 mPa·s. With regard to the ink composition of the present invention, it is preferable that its component ratio is appropriately adjusted so that the viscosity is in the above-mentioned range. When the viscosity at room temperature is set to be high, even when a porous recording medium is used, penetration of the ink into the recording medium can be prevented, and uncured monomer can be reduced. Furthermore, ink spreading when ink droplets have landed can be suppressed, and as a result there is the advantage that the image quality is improved.

The surface tension at 25°C of the ink composition of the present invention in accordance with the first and second aspects of the present invention is preferably 20 to 35 mN/m, and more preferably 23 to 33 mN/m. When recording is carried out on various types of recording medium such as polyolefin, PET, coated paper, and uncoated paper, from the viewpoint of spread and penetration, it is preferably at least 20 mN/m, and from the viewpoint of wettability it is preferably not more than 35 mN/m.

### (2) Inkjet recording method, inkjet recording device and printed material

The ink composition of the present invention is used for inkjet recording.

The inkjet recording method of the present invention in accordance with the first and second aspects of the present invention is a method for forming an image by discharging the ink composition of the present invention in accordance with the first and second aspects of the present invention onto a recording medium (support, recording material, etc.) for inkjet recording and curing the ink by irradiating the ink composition so discharged onto the recording medium with actinic radiation.

More particularly, the inkjet recording method of the present invention in accordance with the first and second aspects of the present invention comprises (a¹) a step of discharging the ink composition of the present invention onto a recording medium and (b¹) a step of curing the ink composition by irradiating the ink composition so discharged with actinic radiation,

The inkjet recording method of the present invention comprises the steps (a¹) and (b¹) above and thus forms an image from the ink composition cured on the recording medium.

The printed material of the present invention is a printed material obtained using the ink composition in accordance with the first and second aspects of the present invention and recorded by the inkjet recording method of the present invention.

The above-described discharging is preferably carried out using an inkjet head that discharges an ink composition by means of deformation of a piezoelectric element.

The above-described discharge is preferably carried out under the condition of 1 to 10 pL liquid amount, and 1,200 x 1,200 to 4,800 x 4,800 dpi.

The step (a¹) of the inkjet recording method of the present invention may employ an inkjet recording device that will be described in detail below.

### Inkjet recording device

An inkjet recording device used in the inkjet recording method of the present invention is not particularly limited, and any known inkjet recording device that can achieve an intended resolution may be used. That is, any known inkjet recording device, such as a commercial product, may be used in order to discharge an ink composition onto a recording medium in step (a¹) of the inkjet recording method of the present invention.

The inkjet recording device that can be used in the present invention is equipped with, for example, an ink supply system, a temperature sensor, and an actinic radiation source.

The ink supply comprises, for example, a main tank containing the ink composition of the present invention, a supply pipe, an ink supply tank immediately before an inkjet head, a filter, and a piezo system inkjet head. The piezo system inkjet head may be driven so as to discharge a multisize dot of preferably 1 to 100 pL, and more preferably 8 to 30 pL, at a resolution of preferably 300 x 300 to 4,800 x 4,800dpi, and more preferably 1200 x 1200 to 4,800 x 4,800dpi. Here, dpi referred to in the present invention means the number of dots per 2.54 cm.

Furthermore, in the inkjet recording method in the present invention, the inkjet head discharging the inkjet composition by the deformation of a piezoelectric element, or what is called inkjet head of piezo type, is preferably used.

As described above, since it is desirable for the radiation curing type ink such as the ink composition of the present invention in accordance with the first and second aspects of the present invention to be discharged at a constant temperature, a section from the ink supply tank to the inkjet head is thermally insulated and heated.

A method of controlling temperature is not particularly limited, but it is preferable to provide, for example, temperature sensors at a plurality of pipe section positions, and control heating according to the ink flow rate and the temperature of the surroundings. The temperature sensors may be provided on the ink supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

When the ink composition or the inkjet recording ink composition of the present invention in accordance with the first and second aspects of the present invention is discharged using the above mentioned inkjet recording device, the ink composition is preferably discharged after being heated to preferably 25°C to 80°C, and more preferably 25°C to 50°C, so as to reduce the viscosity of the ink composition to preferably 3 to 15 mPa·s, and more preferably 3 to 13 mPa·s. In particular, it is preferable to use the ink composition having an ink viscosity at 25°C of no more than 50 mPa·s since a good discharge stability can be obtained. By employing this method, high discharge stability can be realized.

The radiation curing type ink composition such as the ink composition of the present invention generally has a viscosity that is higher than that of a normal ink composition or a water-based ink used for an inkjet recording ink composition, and variation in viscosity due to a change in temperature at the time of discharge is large. Viscosity variation in the ink composition has a large effect on changes in liquid droplet size and changes in liquid droplet discharge speed and, consequently, causes the image quality to be degraded. It is therefore necessary to maintain the ink composition discharge temperature as constant as possible. In the present invention, the control range for the temperature is preferably ±5°C of a set temperature, more preferably ±2°C of the set temperature, and yet more preferably ±1°C of the set temperature.

The step (b¹) of curing the discharged ink composition by irradiating the ink composition with actinic radiation is now explained.

The ink composition discharged onto the recording medium cures upon exposure to actinic radiation. This is due to an initiating species such as a radical, an acid, or a base being generated by decomposition of the polymerization initiator contained in the ink composition of the present invention by irradiation with actinic radiation, the initiating species functioning so as to make a polymerization reaction of a polymerizable compound take place and to promote it. In this process, if a sensitizing colorant is present together with the polymerization initiator in the ink composition, the sensitizing colorant in the system absorbs actinic radiation, becomes excited, and promotes decomposition of the polymerization initiator by contact with the polymerization initiator, thus enabling a curing reaction with higher sensitivity to be achieved.

The actinic radiation used in this process may include □ rays, □ rays, an electron beam, X rays, UV rays, visible light, and IR rays. Although it depends on the absorption characteristics of the sensitizing dye, the peak wavelength of the actinic radiation is, preferably 200 to 600 nm, more preferably 300 to 450 nm, and yet more preferably 350 to 420 nm.

Furthermore, the cationic polymerization initiation system of the ink composition in the first and the second aspects of the present invention has sufficient sensitivity for low output actinic radiation. Therefore, the illumination intensity on the exposed surface is preferably 10 to 4,000 mW/cm², and more preferably 20 to 2,500 mW/cm².

Furthermore, in the present invention, the polymerization initiation system has sufficient sensitivity for low output actinic radiation. The actinic radiation is applied therefore so that the illumination intensity on the exposed surface is, preferably 10 to 4,000 mW/cm², and more preferably 20 to 2,500 mW/cm².

As an actinic radiation source, a mercury lamp, a gas/solid laser, etc. are mainly used, and for UV photocuring inkjet a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, US Pat. No. 6,084,250 discloses an LED that can emit actinic radiation whose wavelength is centered between 300 nm and 370 nm. Furthermore, another violet LED is available, and irradiation can be carried out with radiation of a different UV bandwidth. The actinic radiation source particularly preferable in the present invention is a UV-LED, and a UV-LED having a peak wavelength at 350 to 420 nm is particularly preferable.

The maximum illumination intensity of the LED on a recording medium is preferably 10 to 2,000 mW/cm², more preferably 20 to 1,000 mW/cm², and particularly preferably 50 to 800 mJ/cm².

The ink composition of the present invention in accordance with the first and second aspects of the present invention is desirably exposed to such actinic radiation for, preferably 0.01 to 120 sec., and more preferably 0.1 to 90 sec.

Irradiation conditions and a basic method for irradiation with actinic radiation are disclosed in JP-A-60-132767. Specifically, a light source is provided on either side of a head unit that includes an ink discharge device, and the head unit and the light source are made to scan by a so-called shuttle system. Irradiation with actinic radiation is carried out after a certain time (preferably 0.01 to 0.5 sec., more preferably 0.01 to 0.3 sec., and yet more preferably 0.01 to 0.15 sec.) has elapsed from when the ink has landed. By controlling the time from ink landing to irradiation so as to be a minimum in this way, it becomes possible to prevent the ink that has landed on a recording medium from spreading before being cured. Furthermore, since the ink can be exposed before it reaches a deep area of a porous recording medium that the light source cannot reach, it is possible to prevent monomer from remaining unreacted.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light.

By employing such a recording method, it is possible to maintain a uniform dot diameter for landed ink composition even for various types of recording media having different surface wettability, thereby improving the image quality. In order to obtain a color image, it is preferable to superimpose colors in order from those with a low lightness. By superimposing ink compositions in order from one with low lightness, it is easy for radiation to reach a lower ink, the curing sensitivity is good, the amount of residual monomer decreases, and an improvement in adhesion can be expected. Furthermore, although it is possible to discharge all colors and then expose them at the same time, it is preferable to expose one color at a time from the viewpoint of promoting curing.

In this way, the ink composition of the present invention is cured by irradiation with actinic radiation in high sensitivity to thus form an image on the surface of the recording medium.

In the present invention, the recording medium is not particularly limited, and a recording medium known as a support or a recording material may be used. Examples thereof include paper, paper laminated with a plastic (e.g. polyethylene, polypropylene, polystyrene, etc.), a metal plate (e.g. aluminum, zinc, copper, etc.), a plastic film (e.g. cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinylacetal, etc.), and paper or plastic film laminated or vapor-deposited with the above metal. In the present invention, as the recording medium, a non-absorbing recording medium may suitably be used.

### EXAMPLES

The present invention is explained below in further detail by reference to Examples and Comparative Examples. However, the present invention should not be construed as being limited to these Examples.

'Parts' given below means 'parts by weight' unless otherwise specified.

### Method for measuring viscosity at 25°C

The viscosity at 25°C of a cationically polymerizable compound and an ink composition was measured using a model RE80 viscometer (Toki Sangyo Co., Ltd.) at a liquid temperature of 25°C after stabilizing by rotating for 2 minutes by means of a rotor.

Furthermore, among commercial products used, for those for which a viscosity at 25°C was explicitly stated, that value is shown.

Examples and Comparative Examples of the first aspect of the present invention are shown below.

Compounds used in Examples and Comparative Examples of the first aspect of the present invention are shown below.

### Pigments

C pigment (cyan pigment): IRGALITE BLUE GLVO (Ciba Specialty Chemicals)

M pigment (magenta pigment): CINQUASIA MAGENTA RT-355D (Ciba Specialty Chemicals)

Y pigment (yellow pigment): NOVOPERM YELLOW H2G (Clariant)

K pigment (black pigment): SPECIAL BLACK 250 (Ciba Specialty Chemicals)

### Dispersant

DISPERBYK-168 (BYK-168, BYK Chemie)

### Polyfunctional oxetane compound

OXT-221 (Toagosei Co., Ltd., 12.8 cP (= 12.8 mPa·s))

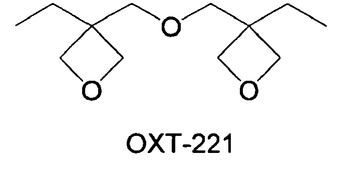

### Polyfunctional oxirane compound

CYRACURE UVR 6105 (Dow Chemical, 220 to 250 cP)

CELLOXIDE 3000 (CEL3000, Daicel Chemical Industries, Ltd., 10 cP)

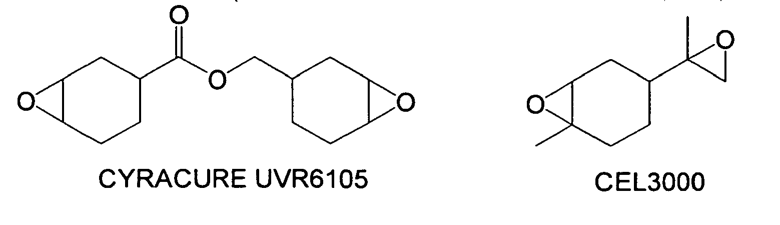

Monofunctional oxetane compounds

Compound A (LM-3, 2.8 cP)

Compound B (LM-1, 1.6 cP)

Compound C (LM-7, 7.86 cP)

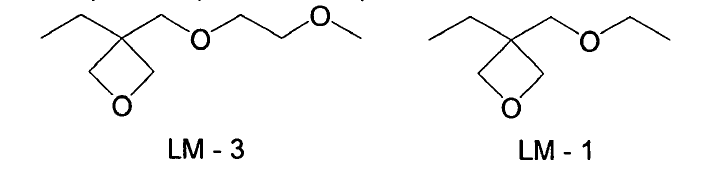

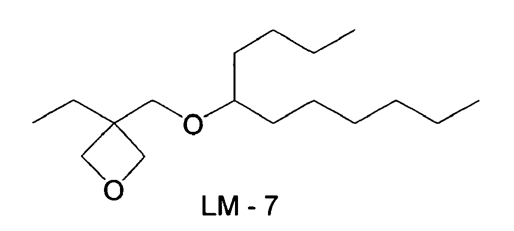

OXT-212 (Toagosei Co., Ltd., 5 cP)

OXT-101 (Toagosei Co., Ltd., 22 cP)

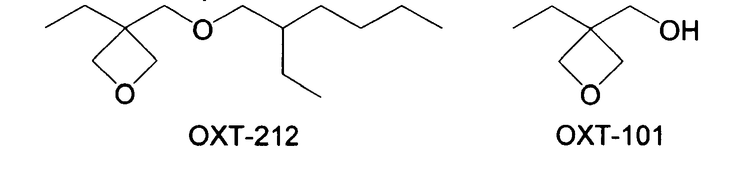

### Polymerization initiator

ESACURE1064 (Lamberti, mixture of two compounds below)

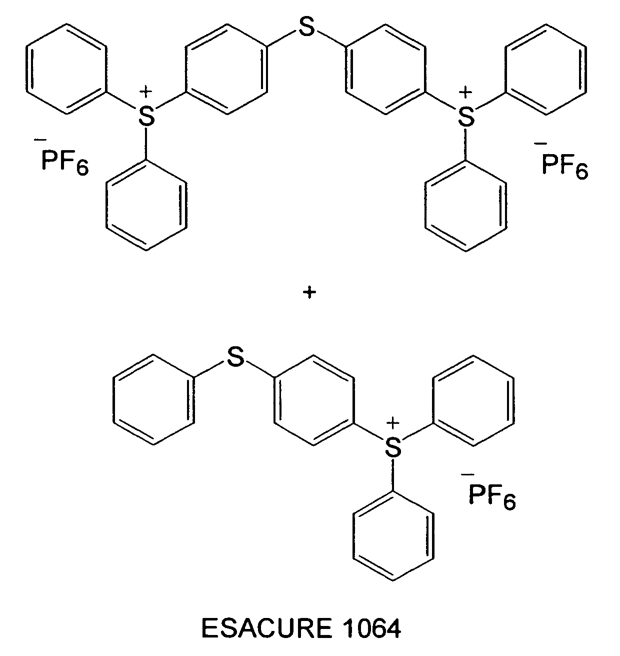

### Sensitizer

ANTHRACURE UVS-1331 (9,10-dibutoxyanthracene (DBA), Kawasaki Kasei Chemicals Ltd.)

### Surfactant

BYK-307 (BYK Chemie)

### Polymerization inhibitor

Compound D (compound below)

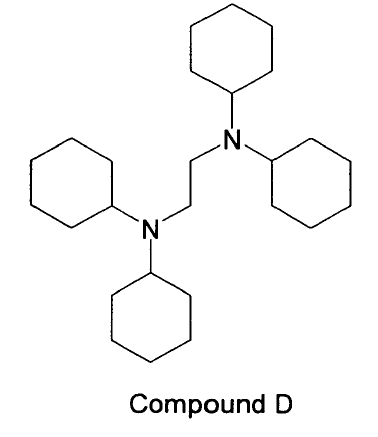

### Preparation of cyan mill base A

| | |
|---|---|
| IRGALITE BLUE GLVO | 300 parts by weight |
| CELLOXIDE 3000 | 500 parts by weight |
| BYK-168 | 200 parts by weight |

The above components were stirred to give cyan mill base A. Preparation of cyan mill base A was carried out by putting it into an M50 disperser motor mill (manufactured by Eiger) and dispersing using zirconia beads having a diameter of 0.65 mm at a peripheral speed of 9 m/s for 8 hours.

### Preparation of magenta mill base B

| | |
|---|---|
| CINQUASIA MAGENTA RT-355D | 300 parts by weight |
| CELLOXIDE 3000 | 300 parts by weight |
| BYK-168 | 400 parts by weight |

The above components were stirred to give magenta mill base B. Preparation of magenta mill base B was carried out by putting it into an M50 disperser motor mill (manufactured by Eiger) and dispersing using zirconia beads having a diameter of 0.65 mm at a peripheral speed of 9 m/s for 8 hours.

### Preparation of yellow mill base C

| | |
|---|---|
| NOVOPERM YELLOW H2G (Clariant) | 300 parts by weight |
| CELLOXIDE 3000 | 300 parts by weight |
| BYK-168 | 400 parts by weight |

The above components were stirred to give yellow mill base C. Preparation of yellow mill base C was carried out by putting it into an M50 disperser motor mill (manufactured by Eiger) and dispersing using zirconia beads having a diameter of 0.65 mm at a peripheral speed of 9 m/s for 8 hours.

### Preparation of black mill base D

| | |
|---|---|
| SPECIAL BLACK 250 | 300 parts by weight |
| CELLOXIDE 3000 | 300 parts by weight |
| BYK-168 | 400 parts by weight |

The above components were stirred to give black mill base D. Preparation of black mill base D was carried out by putting it into an M50 disperser motor mill (manufactured by Eiger) and dispersing using zirconia beads having a diameter of 0.65 mm at a peripheral speed of 9 m/s for 8 hours.

### Preparation of ink compositions

Mill bases A to D, polymerizable compounds, polymerization initiator, and additives were mixed according to the formulations shown in Tables 1 to 5 and stirred at high speed, thus giving ink compositions.

### Inkjet image recording method

Subsequently, recording was carried out on a recording medium using a commercial inkjet recording system having piezo type inkjet nozzles. The ink supply system comprised a main tank, a supply pipe, an ink supply tank immediately before an inkjet head, a filter, and a piezo type inkjet head, and a section from the ink supply tank to the inkjet head was thermally insulated and heated. Temperature sensors were provided on the ink supply tank and in the vicinity of the nozzle of the inkjet head, and the temperature was controlled so that the nozzle section was always at 40°C ±2°C. The piezo type inkjet head was driven so as to discharge multisize dots of 1 to 10 pL at a resolution of 4,800 x 4,800 dpi. The exposure system, the main scanning speed, and the discharge frequency were adjusted so that, after landing, UV light was focused to give an exposure area illumination intensity of 700 mW/cm², and irradiation started 0.1 sec. after the ink composition landed on the recording medium. The exposure time was variable, and exposure energy was applied. The UV lamp employed a HAN250NL high-cure mercury lamp (manufactured by GS Yuasa Corporation). Here, dpi referred to in the present invention denotes the number of dots per 2.54 cm. The recording medium employed an E5000 ester film (film thickness 125 µm, manufactured by Toyobo Co., Ltd.).

### Evaluation of inkjet image

Subsequently, images thus formed were subjected to evaluation in terms of image quality, discharge stability, storage stability, curability, and flexibility in accordance with methods described below.

### Image quality

In accordance with the inkjet recording method above, a solid image having an average coating thickness of 4 µm was drawn, and the image surface after irradiation with UV rays was evaluated microscopically and macroscopically. Microscopic evaluation was carried out by observation of the presence or absence of irregularities on the image surface by means of an electron microscope. Macroscopic evaluation was carried out by visually examining the level of detail in the image quality.

In accordance with the above, image quality was evaluated by means of the criteria below.

| | |
|---|---|
| 5 | There were no irregularities, the image surface was smooth, and the image was detailed. |
| 4 | There were some irregularities, but the image was detailed. |
| 3 | There were irregularities, but the image maintained detail. |
| 2 | There were irregularities, and the image was lacking in detail. |
| 1 | There were many irregularities, and the image was lacking in detail. |

### Discharge stability

After printing was carried out continuously for 60 minutes by means of an inkjet printer (KM512L piezo type inkjet head (Konica Minolta Holdings, Inc.), the head having 318 nozzles at a nozzle density of 150 per 25.4 mm) using an ink composition, if discharge was carried out without problems it was evaluated as being 5, when 1 to 2 nozzles were missing it was evaluated as being 4, when 3 to 5 nozzles were missing it was evaluated as being 3, when 6 to 10 nozzles were missing it was evaluated as being 2, and when 10 or more nozzles were missing it was evaluated as being 1. 5 and 4 are levels that give no problems, 3 is a level that give no problems in practice, and 2 and 1 are levels that give problems in practice.

### Storage stability

After a prepared ink composition was stored at 75%RH and 60°C for 3 days, the viscosity of the ink composition at the discharge temperature was measured, and an increase in viscosity of the ink composition was expressed as a viscosity ratio (after storage/before storage).

Storage stability is good when the viscosity does not change and the ratio is close to 1.0, and it is not desirable for it to be 1.5 or greater since clogging might occur at the time of discharge.

Storage stability was evaluated by means of the criteria below.

| | |
|---|---|
| 5 | Viscosity ratio (after storage/before storage) at least 1.0 but less than 1.10. |
| 4 | Viscosity ratio (after storage/before storage) at least 1.10 but less than 1.20. |
| 3 | Viscosity ratio (after storage/before storage) at least 1.20 but less than 1.30. |
| 2 | Viscosity ratio (after storage/before storage) at least 1.40 but less than 1.50. |
| 1 | Viscosity ratio (after storage/before storage) at least 1.50. |

### Curability

In accordance with the inkjet recording method above, a solid image having an average coating thickness of 4 µm was drawn, and the exposure energy quantity (mJ/cm²) that eliminated tackiness for the image surface after irradiation with UV rays was defined as curing sensitivity. The smaller the value, the higher the sensitivity.

Furthermore, the curing sensitivity was evaluated by means of the criteria below.

| | |
|---|---|
| 5 | Less than 150 mJ/cm² |
| 4 | At least 150 mJ/cm² but less than 300 mJ/cm² |
| 3 | At least 300 mJ/cm² but less than 600 mJ/cm² |
| 2 | At least 600 mJ/cm² but less than 900 mJ/cm² |
| 1 | At least 900 mJ/cm² |

### Flexibility: evaluation of bending resistance of cured coating

At an exposure corresponding to the lowest energy that did not cause transfer for each ink, in accordance with the inkjet recording method above, a solid image having an average coating thickness of 4 µm was drawn on a transparent substrate (E5000 ester film); after the image was stored at 23°C and a relative humidity of 60% for 1 day, a middle portion of the image surface was bent by hand through 180°, and the presence or absence of cracks in the cured coating was examined. Evaluation was carried out as follows.

| | |
|---|---|
| 5 | No change even by bending 20 times or more. |
| 4 | Cracks caused by bending from 15 to 19 times. |
| 3 | Cracks caused by bending from 10 to 14 times. |
| 2 | Cracks caused by bending from 5 to 9 times. |
| 1 | Cracks caused by bending up to 4 times. |

The evaluation results of Examples 1-1 to 1-21 and Comparative Examples 1-1 to 1-11 are shown in Tables 1 to 5 below.

The colors given in Tables 1 to 5 are as follows; M: magenta, C: cyan, Y: yellow, K: black.

**(Table 1)**

| Example | | | | | | | | |
|---|---|---|---|---|---|---|---|---|
| | | 1-1 | 1-2 | 1-3 | 1-4 | 1-5 | 1-6* | 1-7* |
| Color | | M | M | M | M | M | M | M |
| Mill base | Magenta | 25 | 36 | 66 | 36 | 36 | 36 | 36 |
| | Cyan | - | - | - | - | - | - | - |
| | Yellow | - | - | - | - | - | - | - |
| | Black | - | - | - | - | - | - | - |
| Polyfunctional oxetane | OXT-221 | 13.9 | 12.4 | 8.2 | 21.7 | 3.1 | 12.4 | 12.4 |
| Polyfunctional oxirane | UVR 6105 | - | - | - | - | - | - | - |
| | CELLOXIDE 3000 | 41.4 | 32.7 | 8.9 | 18.8 | 46.6 | 2.7 | 2.7 |
| Monofunctional oxetane | Compound A (LM-3) | 6.9 | 6.1 | 4.1 | 10.7 | 1.5 | 6.1 | 6.1 |
| | Compound B(LM-1) | - | - | - | - | - | 30 | - |
| | OXT-212 | - | - | - | - | - | - | 30 |
| | Compound C (LM-7) | - | - | - | - | - | - | - |
| | OXT-101 | - | - | - | - | - | - | - |
| Polymerization initiator | ESACURE1064 | 8.7 | 8.7 | 8.7 | 8.7 | 8.7 | 8.7 | 8.7 |
| Sensitizer | DBA | 3 | 3 | 3 | 3 | 3 | 3 | 3 |
| Surfactant | BYK-307 | 0.1 | 0.1 | 0.1 | 0.1 | 0.1 | 0.1 | 0.1 |
| Amine compound | Compound D | 1 | 1 | 1 | 1 | 1 | 1 | 1 |
| Image quality | | 4 | 5 | 5 | 5 | 5 | 5 | 5 |
| Discharge stability | | 4 | 4 | 4 | 4 | 5 | 4 | 4 |
| Storage stability | | 5 | 5 | 4 | 5 | 5 | 5 | 5 |
| Curability | | 5 | 5 | 5 | 5 | 5 | 4 | 4 |
| Flexibility | | 4 | 4 | 4 | 5 | 3 | 5 | 5 |
| Total | | 100 | 100 | 100 | 100 | 100 | 100 | 100 |
| Proportion (wt%) of monomer of no greater than 12 mPa·s | | 80 | 80 | 80 | 65 | 95 | 80 | 80 |
| Proportion (wt %) of difunctional monomer of no greater than 12 mPa·s | | 87.5 | 87.5 | 87.5 | 73.8 | 97.9 | 26.25 | 26.25 |
| Pigment concentration (wt %) | | 7.5 | 10.8 | 19.8 | 10.8 | 10.8 | 10.8 | 10.8 |
| Viscosity at 25 °C of ink composition (mPa·s) | | 28.5 | 30.5 | 33.7 | 30.7 | 30.9 | 29.4 | 31.2 |

| | | | | | | | | |
|---|---|---|---|---|---|---|---|---|
| * Comparative Example | | | | | | | | |

**(Table 2)**

| Example | | | | | | | | |
|---|---|---|---|---|---|---|---|---|
| | | 1-8* | 1-9* | 1-10 | 1-11 | 1-12 | 1-13 | 1-14 |
| Color | | M | M | M | M | M | C | C |
| Mill base | Magenta | 36 | 36 | 36 | 36 | 36 | - | - |
| | Cyan | - | - | - | - | - | 20 | 25 |
| | Yellow | - | - | - | - | - | - | - |
| | Black | - | - | - | - | - | - | - |
| Polyfunctional oxetane | OXT-221 | 12.4 | 12.4 | 12.4 | 3.1 | 12.7 | 15.4 | 14.9 |
| Polyfunctional oxirane | UVR 6105 | - | - | - | - | - | - | - |
| | CELLOXIDE 3000 | 2.7 | 8.8 | 26.4 | 48.1 | 33.2 | 44.2 | 39.9 |
| Monofunctional oxetane | Compound A (LM-3) | 6.1 | 30 | 12.4 | 0 | 6.3 | 7.6 | 7.4 |
| | Compound B (LM-1) | - | - | - | - | - | - | - |
| | OXT-212 | - | - | - | - | - | - | - |
| | Compound C (LM-7) | 30 | - | - | - | - | - | - |
| | OXT-101 | - | - | - | - | - | - | - |
| Polymerization initiator | ESACURE1064 | 8.7 | 8.7 | 8.7 | 8.7 | 8.7 | 8.7 | 8.7 |
| Sensitizer | DBA | 3 | 3 | 3 | 3 | 3 | 3 | 3 |
| Surfactant | BYK-307 | 0.1 | 0.1 | 0.1 | 0.1 | 0.1 | 0.1 | 0.1 |
| Amine compound | Compound D | 1 | 1 | 1 | 1 | 0 | 1 | 1 |
| Image quality | | 5 | 5 | 5 | 5 | 5 | 4 | 5 |
| Discharge stability | | 5 | 4 | 5 | 4 | 3 | 4 | 4 |
| Storage stability | | 5 | 5 | 5 | 4 | 3 | 5 | 5 |
| Curability | | 4 | 4 | 5 | 5 | 5 | 5 | 5 |
| Flexibility | | 5 | 5 | 5 | 3 | 4 | 4 | 4 |
| Total | | 100 | 100 | 100 | 100 | 100 | 100 | 100 |
| Proportion (wt %) of monomer of no greater than 12 mPa·s | | 80 | 80 | 80 | 95 | 80 | 80 | 80 |
| Proportion (wt %) of difunctional monomer of no greater than 12 mPa·s | | 26.25 | 40 | 75 | 100 | 87.5 | 87.5 | 87.5 |
| Pigment concentration (wt %) | | 10.8 | 10.8 | 10.8 | 10.8 | 10.8 | 6 | 7.5 |
| Viscosity at 25 °C of ink composition (mPa·s) | | 31.8 | 29.8 | 31.1 | 32.4 | 30.5 | 26.5 | 28.1 |

| | | | | | | | | |
|---|---|---|---|---|---|---|---|---|
| * Comparative Example | | | | | | | | |

**(Table 3)**

| Example | | | | | | | | |
|---|---|---|---|---|---|---|---|---|
| | | 1-15 | 1-16 | 1-17 | 1-18 | 1-19 | 1-20 | 1-21 |
| Color | | C | Y | Y | Y | K | K | K |
| Mill base | Magenta | - | - | - | - | - | - | - |
| | Cyan | 30 | - | - | - | - | - | - |
| | Yellow | - | 25 | 36 | 66 | - | - | - |
| | Black | - | - | - | - | 20 | 25 | 30 |
| Polyfunctional oxetane | OXT-221 | 14.4 | 13.9 | 12.4 | 8.2 | 14.6 | 13.9 | 13.2 |
| Polyfunctional oxtrane | UVR 6105 | - | - | - | - | - | - | - |
| | CELLOXIDE 3000 | 35.6 | 41.4 | 32.7 | 8.9 | 45.4 | 41.4 | 37.4 |
| Monofunctional oxetane | Compound A (LM-3) | 7.2 | 6.9 | 6.1 | 4.1 | 7.2 | 6.9 | 6.6 |
| | Compound B (LM-1) | - | - | - | - | - | - | - |
| | OXT-212 | - | - | - | - | - | - | - |
| | Compound C (LM-7) | - | - | - | - | - | - | - |
| | OXT-101 | - | - | - | - | - | - | - |
| Polymerization initiator | ESACURE1064 | 8.7 | 8.7 | 8.7 | 8.7 | 8.7 | 8.7 | 8.7 |
| Sensitizer | DBA | 3 | 3 | 3 | 3 | 3 | 3 | 3 |
| Surfactant | BYK-307 | 0.1 | 0.1 | 0.1 | 0.1 | 0.1 | 0.1 | 0.1 |
| Amine compound | Compound D | 1 | 1 | 1 | 1 | 1 | 1 | 1 |
| Image quality | | 5 | 4 | 5 | 5 | 4 | 5 | 5 |
| Discharge stability | | 4 | 4 | 4 | 4 | 4 | 4 | 4 |
| Storage stability | | 4 | 5 | 5 | 4 | 5 | 5 | 4 |
| Curability | | 5 | 5 | 5 | 5 | 5 | 5 | 5 |
| Flexibility | | 4 | 4 | 4 | 4 | 4 | 4 | 4 |
| Total | | 100 | 100 | 100 | 100 | 100 | 100 | 100 |
| Proportion (wt %) of monomer of no greater than 12 mPa·s | | 80 | 80 | 80 | 80 | 80 | 80 | 80 |
| Proportion (wt %) of difunctional monomer of no greater than 12 mPa·s | | 87.5 | 87.5 | 87.5 | 87.5 | 87.5 | 87.5 | 87.5 |
| Pigment concentration (wt %) | | 9 | 7.5 | 10.8 | 19.8 | 6 | 7.5 | 9 |
| Viscosity at 25 °C of ink composition (mPa·s) | | 30.7 | 28.1 | 29.7 | 31.0 | 27.9 | 29.2 | 32.5 |

**(Table 4)**

| Comparative Example | | | | | | | |
|---|---|---|---|---|---|---|---|
| Formulation | | 1-1 | 1-2 | 1-3 | 1-4 | 1-5 | 1-6 |
| Color | | M | M | M | M | M | C |
| Mill base | Magenta | 18 | 75 | 36 | 36 | 36 | - |
| | Cyan | - | - | - | - | - | 9 |
| | Yellow | - | - | - | - | - | - |
| | Black | - | - | - | - | - | - |
| Polyfunctional oxetane | OXT-221 | 14.9 | 7 | 31 | 16 | 16 | 16.8 |
| Polyfunctional oxirane | UVR 6105 | - | - | - | 15 | - | - |
| | CELLOXIDE 3000 | 46.9 | 1.8 | 4.9 | 4.9 | 4.9 | 53 |
| Monofunctional oxetane | Compound A (LM-3) | 7.4 | 3.4 | 15.3 | 15.3 | 15.3 | 8.4 |
| | OXT-101 | - | - | - | - | 15 | - |
| Polymerization initiator | ESACURE1064 | 8.7 | 8.7 | 8.7 | 8.7 | 8.7 | 8.7 |
| Sensitizer | DBA | 3 | 3 | 3 | 3 | 3 | 3 |
| Surfactant | BYK-307 | 0.1 | 0.1 | 0.1 | 0.1 | 0.1 | 0.1 |
| Amine compound | Compound D | 1 | 1 | 1 | 1 | 1 | 1 |
| Image quality | | 2 | 2 | 2 | 2 | 2 | 2 |
| Discharge stability | | 2 | 1 | 2 | 1 | 2 | 2 |
| Storage stability | | 2 | 1 | 2 | 2 | 1 | 2 |
| Curability | | 5 | 2 | 4 | 4 | 4 | 5 |
| Flexibility | | 5 | 3 | 4 | 4 | 4 | 4 |
| Total | | 100 | 100 | 100 | 100 | 100 | 100 |
| Proportion (wt %) of monomer of no greater than 12 mPa·s | | 80 | 80 | 50 | 50 | 50 | 80 |
| Proportion (wt %) of difunctional monomer of no greater than 12 mPa·s | | 87.5 | 87.5 | 50 | 50 | 50 | 87.5 |
| Pigment concentration (wt %) | | 5.4 | 22.5 | 10.8 | 10.8 | 10.8 | 2.7 |
| Viscosity at 25 °C of ink composition (mPa·s) | | 25.2 | 42.1 | 37.6 | 40.6 | 38.9 | 23.2 |

**(Table 5)**

| Comparative Example | | | | | | |
|---|---|---|---|---|---|---|
| Formulation | | 1-7 | 1-8 | 1-9 | 1-10 | 1-11 |
| Color | | C | Y | Y | K | K |
| Mill base | Magenta | - | - | - | - | - |
| | Cyan | 75 | - | - | - | - |
| | Yellow | - | 10 | 75 | - | - |
| | Black | - | - | - | 10 | 75 |
| Polyfunctional oxetane | OXT-221 | 7 | 16.4 | 7 | 16.4 | 7 |
| Polyfunctional oxirane | UVR 6105 | - | - | - | - | - |
| | CELLOXIDE 3000 | 1.8 | 52.7 | 1.8 | 52.7 | 1.8 |
| Monofunctional oxetane | Compound A (LM-3) | 3.4 | 8.1 | 3.4 | 8.1 | 3.4 |
| | OXT-101 | - | - | - | - | - |
| Polymerization initiator | ESACURE1064 | 8.7 | 8.7 | 8.7 | 8.7 | 8.7 |
| Sensitizer | DBA | 3 | 3 | 3 | 3 | 3 |
| Surfactant | BYK-307 | 0.1 | 0.1 | 0.1 | 0.1 | 0.1 |
| Amine compound | Compound D | 1 | 1 | 1 | 1 | 1 |
| Image quality | | 2 | 2 | 2 | 2 | 2 |
| Discharge stability | | 1 | 2 | 1 | 2 | 1 |
| Storage stability | | 1 | 2 | 1 | 2 | 1 |
| Curability | | 2 | 5 | 2 | 5 | 2 |
| Flexibility | | 3 | 4 | 3 | 4 | 3 |
| Total | | 100 | 100 | 100 | 100 | 100 |
| Proportion (wt %) of monomer of no greater than 12 mPa·s | | 80 | 80 | 80 | 80 | 80 |
| Proportion (wt %) of difunctional monomer of no greater than 12 mPa·s | | 87.5 | 87.5 | 87.5 | 87.5 | 87.5 |
| Pigment concentration (wt %) | | 22.5 | 3 | 22.5 | 3 | 22.5 |
| Viscosity at 25 °C of ink composition (mPa·s) | | 40.3 | 24.1 | 41.2 | 24.2 | 40.7 |

In Tables 1 to 5, the proportion of monomer of no greater than 12 mPa·s is the proportion relative to the total weight of cationically polymerizable compound, the proportion of difunctional monomer of no greater than 12 mPa·s is the proportion relative to the total weight of the monomer of no greater than 12 mPa·s, and the pigment concentration is the concentration relative to the total weight of the ink composition.

Examples and Comparative Examples of the second aspect of the present invention are shown below.

The compounds used in Examples and Comparative Examples of the second aspect of the present invention are shown below.

### Pigment

KRONOS 2300 (alumina-treated titanium oxide, KRONOS)

### Dispersant

DISPERBYK-168 (BYK-168, BYK Chemie)

### Polyfunctional oxetane compound

OXT-221 (Toagosei Co., Ltd., 12.8 cP (=12.8 mPa·s))

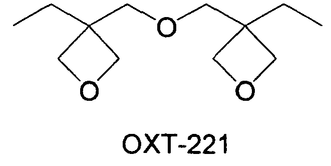

### Polyfunctional oxirane compounds

CYRACURE UVR 6105 (Dow Chemical, 220 to 250 cP)

CELLOXIDE 3000 (CEL3000, Daicel Chemical Industries, Ltd., 10 cP)

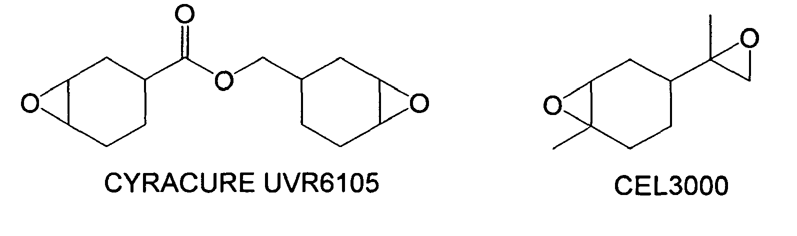

Monofunctional oxetane compounds

Compound A (LM-3, 2.8 cP)

Compound B (LM-1, 1.6 cP)

Compound C (LM-7, 7.86 cP)

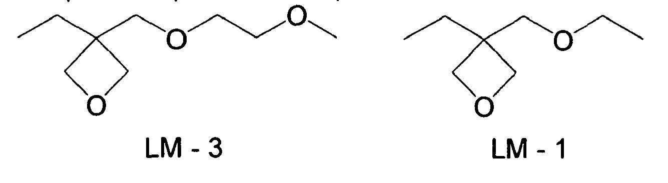

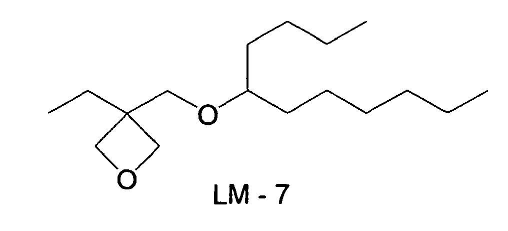

OXT-212 (Toagosei Co., Ltd., 5 cP)

OXT-101 (Toagosei Co., Ltd., 22 cP)

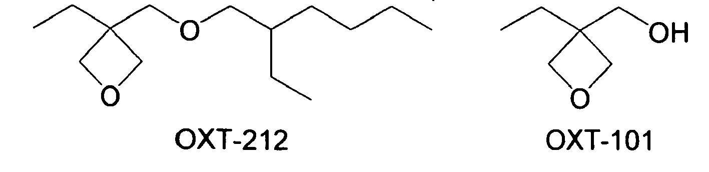

### Vinyl ether compound

Triethylene glycol divinyl ether (DVE-3, 3 cP)

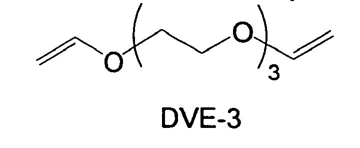

### Polymerization initiator

ESACURE 1064 (Lamberti, mixture of the two compounds below)

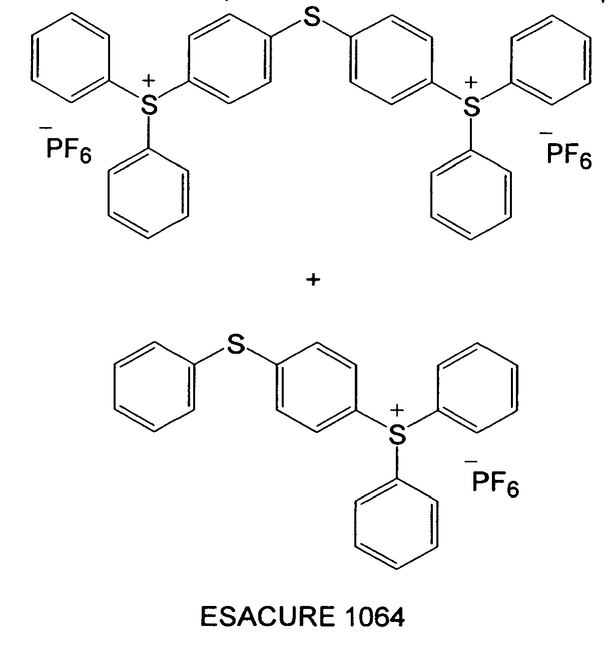

### Sensitizer

ANTHRACURE UVS-1331 (9,10-dibutoxyanthracene (DBA), Kawasaki Kasei Chemicals Ltd.)

### Surfactant

BYK-307 (BYK Chemie)

Polymerization inhibitor

### Compound D

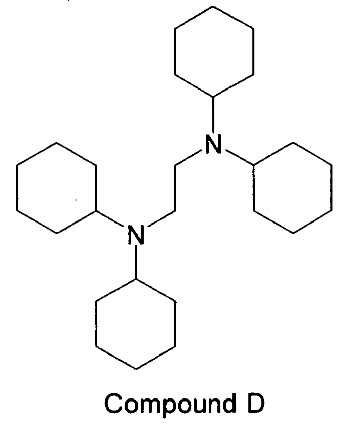

### Dispersant

SOLSPERSE 36000 (Avecia)

### Preparation of white mill base W1

| | |
|---|---|
| KRONOS 2300 | 600 parts by weight |
| CELLOXIDE 3000 | 360 parts by weight |
| SOLSPERSE 36000 (Avecia) | 40 parts by weight |

The above components were stirred to give white mill base W1. Preparation of white mill base W1 was carried out by putting it into an M50 disperser motor mill (manufactured by Eiger) and dispersing using zirconia beads having a diameter of 0.65 mm at a peripheral speed of 9 m/s for 8 hours.

### Preparation of white mill base W2

| | |
|---|---|
| KRONOS 2300 | 600 parts by weight |
| CELLOXIDE 3000 | 180 parts by weight |
| LM-3 | 180 parts by weight |
| SOLSPERSE 36000 (Avecia) | 40 parts by weight |

The above components were stirred to give white mill base W2. Preparation of white mill base W2 was carried out by putting it into an M50 disperser motor mill (manufactured by Eiger) and dispersing using zirconia beads having a diameter of 0.65 mm at a peripheral speed of 9 m/s for 8 hours.

### Preparation of white mill base W3

| | |
|---|---|
| KRONOS 2300 | 600 parts by weight |
| CELLOXIDE 3000 | 180 parts by weight |
| OXT-101 | 180 parts by weight |
| SOLSPERSE 36000 (Avecia) | 40 parts by weight |

The above components were stirred to give white mill base W3. Preparation of white mill base W3 was carried out by putting it into an M50 disperser motor mill (manufactured by Eiger) and dispersing using zirconia beads having a diameter of 0.65 mm at a peripheral speed of 9 m/s for 8 hours.

### Preparation of ink

White mill bases W1 to W3, polymerizable compounds, polymerization initiator, and additives were mixed according to the formulations shown in Tables 6 to 8 and stirred at high speed, thus giving ink compositions.

### Inkjet image recording method

Subsequently, recording was carried out on a recording medium using a commercial inkjet recording system having piezo type inkjet nozzles. The ink supply system comprised a main tank, a supply pipe, an ink supply tank immediately before an inkjet head, a filter, and a piezo type inkjet head, and a section from the ink supply tank to the inkjet head was thermally insulated and heated. Temperature sensors were provided on the ink supply tank and in the vicinity of the nozzle of the inkjet head, and the temperature was controlled so that the nozzle section was always at 40°C ±2°C. The piezo type inkjet head was driven so as to discharge multisize dots of 1 to 10 pL at a resolution of 4,800 x 4,800 dpi. The exposure system, the main scanning speed, and the discharge frequency were adjusted so that, after landing, UV light was focused to give an exposure area illumination intensity of 700 mW/cm², and irradiation started 0.1 sec. after the ink composition landed on the recording medium. The exposure time was variable, and exposure energy was applied. The UV lamp employed a HAN250NL high-cure mercury lamp (manufactured by GS Yuasa Corporation). Here, dpi referred to in the present invention denotes the number of dots per 2.54 cm. The recording medium employed an E5000 ester film (film thickness 125 µm, manufactured by Toyobo Co., Ltd.).

### Evaluation of inkjet image

Subsequently, images thus formed were subjected to evaluation in terms of image quality, discharge stability, storage stability, curability, and flexibility in accordance with methods described below.

### Image quality

In accordance with the inkjet recording method above, a solid image having an average coating thickness of 4 µm was drawn on a transparent substrate (E5000 ester film), and the image surface after irradiation with UV rays was evaluated microscopically and macroscopically. Microscopic evaluation was carried out by observation of the presence or absence of irregularities on the image surface by means of an electron microscope. Macroscopic evaluation was carried out by visually examining the degree of graininess of the white color.

In accordance with the above, image quality was evaluated by means of the criteria below.

| | |
|---|---|
| 5 | There were no irregularities, the image surface was smooth, and there was no graininess at all. |
| 4 | There were some irregularities, but there was no graininess. |
| 3 | There were irregularities, but there was hardly any graininess. |
| 2 | There were irregularities, and there was some graininess. |
| 1 | There were many irregularities, and there was graininess. |

### Discharge stability

After printing was carried out continuously for 60 minutes by means of an inkjet printer (with KM512L piezo type inkjet head (Konica Minolta Holdings, Inc.), the head having 318 nozzles at a nozzle density of 150 per 25.4 mm) using an ink composition, if discharge was carried out without problems it was evaluated as being 5, when 1 to 2 nozzles were missing it was evaluated as being 4, when 3 to 5 nozzles were missing it was evaluated as being 3, when 6 to 10 nozzles were missing it was evaluated as being 2, and when 10 or more nozzles were missing it was evaluated as being 1. 5 and 4 are levels that give no problems, 3 is a level that give no problems in practice, and 2 and 1 are levels that give problems in practice.

### Storage stability

After a prepared ink composition was stored at 75%RH and 60°C for 3 days, the viscosity of the ink composition at the discharge temperature was measured, and an increase in viscosity of the ink composition was expressed as a viscosity ratio (after storage/before storage).

Storage stability is good when the viscosity does not change and the ratio is close to 1.0, and it is not desirable for it to be 1.5 or greater since clogging might occur at the time of discharge.

Storage stability was evaluated by means of the criteria below.

| | |
|---|---|
| 5 | Viscosity ratio (after storage/before storage) at least 1.0 but less than 1.10. |
| 4 | Viscosity ratio (after storage/before storage) at least 1.10 but less than 1.20. |
| 3 | Viscosity ratio (after storage/before storage) at least 1.20 but less than 1.30. |
| 2 | Viscosity ratio (after storage/before storage) at least 1.40 but less than 1.50. |
| 1 | Viscosity ratio (after storage/before storage) at least 1.50. |

### Curability

In accordance with the inkjet recording method above, a solid image having an average coating thickness of 4 µm was drawn, and the exposure energy quantity (mJ/cm²) that eliminated tackiness for the image surface after irradiation with UV rays was defined as curing sensitivity. The smaller the value, the higher the sensitivity.

Furthermore, the curing sensitivity was evaluated by means of the criteria below.

| | |
|---|---|
| 5 | Less than 150 mJ/cm² |
| 4 | At least 150 mJ/cm² but less than 300 mJ/cm² |
| 3 | At least 300 mJ/cm² but less than 600 mJ/cm² |
| 2 | At least 600 mJ/cm² but less than 900 mJ/cm² |
| 1 | At least 900 mJ/cm² |

### Flexibility: evaluation of bending resistance of cured coating

At an exposure corresponding to the lowest energy that did not cause transfer for each ink composition, in accordance with the inkjet recording method above, a solid image having an average coating thickness of 4 µm was drawn on a transparent substrate (E5000 ester film), after the image was stored at 23°C and a relative humidity of 60% for 1 day, a middle portion of the image surface was bent by hand through 180°, and the presence or absence of cracks in the cured coating was examined. Evaluation was carried out as follows.

| | |
|---|---|
| 5 | No change even by bending 20 times or more. |
| 4 | Cracks caused by bending from 15 to 19 times. |
| 3 | Cracks caused by bending from 10 to 14 times. |
| 2 | Cracks caused by bending from 5 to 9 times. |
| 1 | Cracks caused by bending up to 4 times. |

The evaluation results of Examples 2-1 to 2-14 and Comparative Examples 2-1 to 2-5 are shown in Tables 6 to 8 below.

The color given as W in Tables 6 to 8 denotes white.

**(Table 6)**

| Example | | | | | | | | |
|---|---|---|---|---|---|---|---|---|
| Formulation | | 2-1 | 2-2 | 2-3 | 2-4 | 2-5 | 2-6 | 2-7 |
| Color | | W | W | W | W | W | W | W |
| Mill base | W1 | 59 | 67 | 75 | 67 | 67 | 67 | 67 |
| | W2 | - | - | - | - | - | - | - |
| Polyfunctional oxetane | OXT-221 | 10.2 | 9.2 | 8.2 | 16.2 | 2.3 | 9.2 | 9.2 |
| Polyfunctional oxirane | UVR 6105 | - | - | - | - | - | - | - |
| | CELLOXIDE 3000 | 16.6 | 10.8 | 5.0 | 5.0 | 16.6 | - | - |
| Monofunctional oxetane | Compound A (LM-3) | 3.3 | 2.2 | 1.0 | 1.0 | 3.3 | 2.2 | 2.2 |
| | Compound B (LM-1) | - | - | - | - | - | 10.8 | - |
| | OXT-212 | - | - | - | - | - | - | 10.8 |
| | Compound C (LM-7) | - | - | - | - | - | - | - |
| Vinyl monomor | DVE-3 | - | - | - | - | - | - | - |
| Polymerization initiator | ESACURE1064 | 8.7 | 8.7 | 8.7 | 8.7 | 8.7 | 8.7 | 8.7 |
| Sensitizer | DBA | 1 | 1 | 1 | 1 | 1 | 1 | 1 |
| Surfactant | BYK-307 | 0.1 | 0.1 | 0.1 | 0.1 | 0.1 | 0.1 | 0.1 |
| Amine compound | Compound D | 1 | 1 | 1 | 1 | 1 | 1 | 1 |
| Image quality | | 4 | 5 | 5 | 5 | 5 | 5 | 5 |
| Discharge stability | | 4 | 4 | 4 | 4 | 5 | 4 | 4 |
| Storage stability | | 5 | 5 | 4 | 5 | 5 | 5 | 5 |
| Curability | | 5 | 5 | 5 | 5 | 5 | 4 | 4 |
| Flexibility | | 4 | 4 | 4 | 4 | 4 | 5 | 5 |
| Total | | 100 | 100 | 100 | 100 | 100 | 100 | 100 |
| Proportion (wt %) of monomer of no greater Proportion than 12 mPa·s | | 80 | 80 | 80 | 65 | 95 | 80 | 80 |
| Proportion (wt %) of difunctional monomer of no greater than 12 mPa·s | | 92 | 94 | 97 | 97 | 92 | 65 | 65 |
| Titanium oxide concentration (wt %) | | 35 | 40 | 45 | 40 | 40 | 40 | 40 |
| Viscosity at 25 °C of ink composition (mPa·s) | | 29.5 | 31.5 | 34.8 | 34.3 | 29.6 | 30.1 | 32.1 |

**(Table 7)**

| Example | | | | | | | | |
|---|---|---|---|---|---|---|---|---|
| Formulation | | 2-8 | 2-9 | 2-10 | 2-11 | 2-12 | 2-13 | 2-14 |
| Color | | W | W | W | W | W | W | W |
| Mill base | W1 | 67.0 | 67.0 | - | 67.0 | 67.0 | 67.0 | 67.0 |
| | W2 | - | - | 67.0 | - | - | - | - |
| Polyfunctional oxetane | OXT-221 | 9.2 | 9.2 | 9.2 | 9.2 | 10.2 | 6.2 | 9.2 |
| Polyfunctional oxirane | UVR 6105 | - | - | - | - | - | 3.0 | - |
| | CELLOXIDE 3000 | - | - | 10.8 | 5.6 | 11.0 | 10.8 | 5.0 |
| Monofunctional oxetane | Compound A (LM-3) | 2.2 | 13.0 | 2.2 | 7.4 | 2.0 | 2.2 | 2.2 |
| | Compound B(LM-1) | - | - | - | - | - | - | - |
| | OXT-212 | - | - | - | - | - | - | - |
| | Compound C (LM-7) | 10.8 | - | - | - | - | - | - |
| Vinyl monomor | DVE-3 | - | - | - | - | - | - | 5.8 |
| Polymerization initiator | ESACURE1064 | 8.7 | 8.7 | 8.7 | 8.7 | 8.7 | 8.7 | 8.7 |
| Sensitizer | DBA | 1 | 1 | 1 | 1 | 1 | 1 | 1 |
| Surfactant | BYK-307 | 0.1 | 0.1 | 0.1 | 0.1 | 0.1 | 0.1 | 0.1 |
| Amine compound | Compound D | 1 | 1 | 1 | 1 | 0 | 1 | 1 |
| Image quality | | 5 | 5 | 5 | 5 | 5 | 5 | 5 |
| Discharge stability | | 5 | 4 | 5 | 5 | 3 | 4 | 4 |
| Storage stability | | 5 | 5 | 5 | 5 | 3 | 4 | 4 |
| Curability | | 4 | 4 | 4 | 5 | 5 | 5 | 5 |
| Flexibility | | 5 | 5 | 5 | 5 | 4 | 4 | 4 |
| Total | | 100 | 100 | 100 | 100 | 100 | 100 | 100 |
| Proportion (wt%) of monomer of no greater than 12 mPa·s | | 80 | 80 | 80 | 80 | 80 | 80 | 80 |
| Proportion (wt %) of difunctional monomer of no greater than 12 mPa·s | | 65 | 65 | 62 | 80 | 95 | 94 | 93 |
| Titanium oxide concentration (wt %) | | 40 | 40 | 40 | 40 | 40 | 40 | 40 |
| Viscosity at 25 °C of ink composition (mPa·s) | | 33.1 | 30.8 | 30.2 | 33.3 | 34.3 | 34.0 | 33.5 |

**(Table 8)**

| Comparative Example | | | | | | |
|---|---|---|---|---|---|---|
| Formulation | | 2-1 | 2-2 | 2-3 | 2-4 | 2-5 |
| Color | | W | W | W | W | W |
| Mill base | W1 | 42.0 | 80.0 | 67.0 | - | - |
| | W2 | - | - | - | 67.0 | - |
| | W3 | - | - | - | - | 67.0 |
| Polyfunctional oxetane | OXT-221 | 12.4 | - | - | - | - |
| Polyfunctional oxirane CELLOXIDE | UVR 6105 | - | 7.6 | 22.2 | 22.2 | 22.2 |
| | 3000 | 29.0 | 1.4 | 0.0 | 0.0 | 0.0 |
| Monofunctional oxetane | Compound A (LM-3) | 5.8 | 0.3 | 0.0 | 0.0 | 0.0 |
| Polymerization initiator | ESACURE1064 | 8.7 | 8.7 | 8.7 | 8.7 | 8.7 |
| Sensitizer | DBA | 1 | 1 | 1 | 1 | 1 |
| Surfactant | BYK-307 | 0.1 | 0.1 | 0.1 | 0.1 | 0.1 |
| Amine compound | Compound D | 1 | 1 | 1 | 1 | 1 |
| Image quality | | 2 | 2 | 2 | 2 | 2 |
| Discharge stability | | 4 | 2 | 2 | 2 | 2 |
| Storage stability | | 4 | 2 | 3 | 3 | 1 |
| Curability | | 4 | 2 | 4 | 3 | 3 |
| Flexibility | | 4 | 3 | 2 | 4 | 2 |
| Total | | 100 | 100 | 100 | 100 | 100 |
| Proportion (wt %) of monomer of no greater than 12 mPa·s | | 80 | 80 | 52 | 52 | 26 |
| Proportion (wt %) of difunctional monomer of no greater than 12 mPa·s | | 88 | 99 | 100 | 50 | 100 |
| Titanium oxide concentration (wt %) | | 25 | 48 | 40 | 40 | 40 |
| Viscosity at 25 °C of ink composition (mPa·s) | | 26 | 40.2 | 43.5 | 41.5 | 45.2 |

In Tables 6 to 8, the proportion of monomer of no greater than 12 mPa·s is the proportion relative to the total weight of cationically polymerizable compound, the proportion of difunctional monomer of no greater than 12 mPa·s is the proportion relative to the total weight of the monomer of no greater than 12 mPa·s, and the titanium oxide concentration is the concentration relative to the total weight of the ink composition.

## Claims

1. An ink composition comprising:
(A) a pigment other than titanium oxide;
(B) a cationically polymerizable compound; and
(C) a photo-acid generator,
the pigment (A) having a content of 3.5 to 20 wt %. relative to the entire ink composition, the cationically polymerizable compound (B) consisting of a monofunctional oxetane compound, a polyfunctional oxirane compound and a polyfunctional oxetane compound,
the monofunctional oxetane compound, the polyfunctional oxirane compound and the polyfunctional oxetane compound comprising a low-viscosity compound having a viscosity at 25°C of no greater than 12 mPa·s, and
the low-viscosity compound having a total content of 65 to 100 wt % relative to the total weight of the cationically polymerizable compound (B),
wherein 60 to 100 wt % of the low-viscosity compound is the polyfunctional oxirane compound and the polyfunctional oxetane compound.

2. The ink composition according to Claim 1, wherein the molecular weight of the low-viscosity compound is 98 to 300.

3. The ink composition according to Claim 1 or 2, wherein the cationically polymerizable compound (B) is a compound consisting of carbon, hydrogen, and ethereal oxygen atoms.

4. The ink composition according to any one of Claims 1 to 3, wherein it has a viscosity at 25°C of 7 to 35 mPa·s.

5. The ink composition according to any one of Claims 1 to 4, wherein it comprises (D) an amine compound.

6. The ink composition according to Claim 5, wherein the amine compound (D) is a hindered amine compound.

7. The ink composition according to any one of Claims 1 to 6, wherein the pigment (A) is a copper phthalocyanine pigment, an azo pigment, a quinacridone pigment, or a carbon black pigment.

8. The ink composition according to any one of Claims 1 to 7, wherein the pigment (A) is a copper phthalocyanine pigment, and the copper phthalocyanine pigment has a content of 3.5 to 10 wt % relative to the total weight of the ink composition.

9. The ink composition according to any one of Claims 1 to 7, wherein the pigment (A) is an azo pigment, and the azo pigment has a content of 7.5 to 20 wt % relative to the total weight of the ink composition.

10. The ink composition according to any one of Claims 1 to 7, wherein the pigment (A) is a quinacridone pigment, and the quinacridone pigment has a content of 7.5 to 20 wt % relative to the total weight of the ink composition.

11. The ink composition according to any one of Claims 1 to 7, wherein the pigment (A) is a carbon black pigment, and the carbon black pigment has a content of 6.0 to 10 wt % relative to the total weight of the ink composition.

12. An inkjet recording method comprising:
(a¹) a step of discharging the ink composition according to any one of Claims 1 to 11 onto a recording medium; and
(b¹) a step of curing the ink composition by irradiating the discharged ink composition with actinic radiation.

13. The inkjet recording method according to Claim 12, wherein the discharging is carried out using an inkjet head that discharges an ink composition by means of deformation of a piezoelectric element.

14. The inkjet recording method according to Claim 12 or 13, wherein the discharging is carried out with a liquid droplet volume of 1 to 10 pL and at 1,200 x 1,200 to 4,800 x 4,800 dpi.

15. An ink composition comprising:
(A') titanium oxide;
(B) a cationically polymerizable compound; and
(C) a photo-acid generator,
the titanium oxide (A') having a content of 35 to 45 wt % relative to the total weight of the ink composition, the cationically polymerizable compound (B) comprising an oxirane compound, oxetane compound, or vinyl ether compound having a viscosity at 25°C of no greater than 12 mPa·s, and
the oxirane compound, oxetane compound, and vinyl ether compound having a viscosity at 25°C of no greater than 12 mPa·s having a total content of 65 to 100 wt % relative to the total weight of the cationically polymerizable compound (B) and
wherein the cationically polymerizable compound (B) comprises a monofunctional oxetane compound, a polyfunctional oxirande compound and a polyfunctional oxetane compound.

16. The ink composition according to Claim 15, wherein 60 to 100 wt % of the total weight of the oxirane compound, oxetane compound, and vinyl ether compound having a viscosity at 25°C of no greater than 12 mPa·s is a polyfunctional monomer.

17. The ink composition according to Claim 15 or 16, wherein the cationically polymerizable compound (B) is a compound consisting of carbon, hydrogen, and ethereal oxygen atoms.

18. The ink composition according to any one of Claims 15 to 17, wherein the cationically polymerizable compound (B) consists of monofunctional oxetane compound, a polyfunctional oxirane compound and a polyfunctional oxetane compound.

19. The ink composition according to any one of Claims 15 to 18, wherein it has a viscosity at 25°C of 7 to 35 mPa·s.

20. The ink composition according to any one of Claims 15 to 19, wherein it comprises (D) an amine compound.

21. The ink composition according to Claim 20, wherein the amine compound (D) is a hindered amine compound.

22. The ink composition according to any one of Claims 15 to 20, wherein the molecular weight of the oxirane compound, oxetane compound, or vinyl ether compound having a viscosity at 25°C of no greater than 12 mPa·s is 98 to 300.

23. An inkjet recording method comprising:
(a¹) a step of discharging the ink composition according to any one of Claims 15 to 21 onto a recording medium; and
(b¹) a step of curing the ink composition by irradiating the discharged ink composition with actinic radiation.

24. The inkjet recording method according to Claim 23, wherein the discharging is carried out using an inkjet head that discharges an ink composition by means of deformation of a piezoelectric element.

25. The inkjet recording method according to Claim 23 or 24, wherein the discharging is carried out with a liquid droplet volume of 1 to 10 pL and at 1,200 x 1,200 to 4,800 x 4,800 dpi.

## Patentansprüche

1. Tintenzusammensetzung umfassend:
(A) ein Pigment, bei dem es sich nicht um Titanoxid handelt;
(B) eine kationisch polymerisierbare Verbindung; und
(C) einen Fotosäuregenerator,
wobei das Pigment (A) einen Gehalt von 3,5 bis 20 Gew.-%, bezogen auf die gesamte Tintenzusammensetzung, aufweist,
die kationisch polymerisierbare Verbindung (B) aus einer monofunktionellen Oxetanverbindung, einer polyfunktionellen Oxiranverbindung und einer polyfunktionellen Oxetanverbindung besteht,
die monofunktionelle Oxetanverbindung, die polyfunktionelle Oxiranverbindung und die polyfunktionelle Oxetanverbindung eine Verbindung mit niedriger Viskosität umfasst, die eine Viskosität bei 25 °C von nicht mehr als 12 mPa·s aufweist, und
die Verbindung mit niedriger Viskosität einen Gesamtgehalt von 65 bis 100 Gew.-%, bezogen auf das Gesamtgewicht der kationisch polymerisierbaren Verbindung (B), aufweist,
wobei 60 bis 100 Gew.-% der Verbindung mit niedriger Viskosität die polyfunktionelle Oxiranverbindung und die polyfunktionelle Oxetanverbindung ist.

2. Tintenzusammensetzung nach Anspruch 1, wobei das Molekulargewicht der Verbindung mit niedriger Viskosität 98 bis 300 beträgt.

3. Tintenzusammensetzung nach Anspruch 1 oder 2, wobei die kationisch polymerisierbare Verbindung (B) eine aus Kohlenstoff, Wasserstoff und etherischen Sauerstoffatomen bestehende Verbindung ist.

4. Tintenzusammensetzung nach einem der Ansprüche 1 bis 3, wobei sie eine Viskosität bei 25 °C von 7 bis 35 mPa·s aufweist.

5. Tintenzusammensetzung nach einem der Ansprüche 1 bis 4, wobei sie (D) eine Aminverbindung umfasst.

6. Tintenzusammensetzung nach Anspruch 5, wobei die Aminverbindung (D) eine gehinderte Aminverbindung ist.

7. Tintenzusammensetzung nach einem der Ansprüche 1 bis 6, wobei das Pigment (A) ein Kupferphthalocyaninpigment, ein Azopigment, ein Chinacridonpigment oder ein Rußpigment ist.

8. Tintenzusammensetzung nach einem der Ansprüche 1 bis 7, wobei das Pigment (A) ein Kupferphthalocyaninpigment ist und das Kupferphthalocyaninpigment einen Gehalt von 3,5 bis 10 Gew.-%, bezogen auf das Gesamtgewicht der Tintenzusammensetzung, aufweist.

9. Tintenzusammensetzung nach einem der Ansprüche 1 bis 7, wobei das Pigment (A) ein Azopigment ist und das Azopigment einen Gehalt von 7,5 bis 20 Gew.-%, bezogen auf das Gesamtgewicht der Tintenzusammensetzung, aufweist.

10. Tintenzusammensetzung nach einem der Ansprüche 1 bis 7, wobei das Pigment (A) ein Chinacridonpigment ist und das Chinacridonpigment einen Gehalt von 7,5 bis 20 Gew.-%, bezogen auf das Gesamtgewicht der Tintenzusammensetzung, aufweist.

11. Tintenzusammensetzung nach einem der Ansprüche 1 bis 7, wobei das Pigment (A) ein Rußpigment ist und das Rußpigment einen Gehalt von 6,0 bis 10 Gew.-%, bezogen auf das Gesamtgewicht der Tintenzusammensetzung, aufweist.

12. Tintenstrahlaufzeichnungsverfahren umfassend:
(a¹) einen Schritt des Ausstoßens der Tintenzusammensetzung nach einem der Ansprüche 1 bis 11 auf ein Aufzeichnungsmedium; und
(b¹) einen Schritt des Härtens der Tintenzusammensetzung durch Bestrahlen der ausgestoßenen Tintenzusammensetzung mit aktinischer Strahlung.

13. Tintenstrahlaufzeichnungsverfahren nach Anspruch 12, wobei das Ausstoßen unter Verwendung eines Tintenstrahlkopfes erfolgt, welcher eine Tintenzusammensetzung mittels Deformation eines piezoelektrischen Elements ausstößt.

14. Tintenstrahlaufzeichnungsverfahren nach Anspruch 12 oder 13, wobei das Ausstoßen mit einem Flüssigkeitströpfchenvolumen von 1 bis 10 pL und mit 1.200 x 1.200 bis 4.800 x 4.800 dpi erfolgt.

15. Tintenzusammensetzung umfassend:
(A') Titanoxid;
(B) eine kationisch polymerisierbare Verbindung; und
(C) einen Fotosäuregenerator,
wobei das Titanoxid (A') einen Gehalt von 35 bis 45 Gew.-%, bezogen auf das Gesamtgewicht der Tintenzusammensetzung, aufweist,
die kationisch polymerisierbare Verbindung (B) eine Oxiranverbindung, Oxetanverbindung oder Vinyletherverbindung mit einer Viskosität bei 25 °C von nicht mehr als 12 mPa·s umfasst, und
die Oxiranverbindung, Oxetanverbindung und Vinyletherverbindung mit einer Viskosität bei 25 °C von nicht mehr als 12 mPa·s einen Gesamtgehalt von 65 bis 100 Gew.-%, bezogen auf das Gesamtgewicht der kationisch polymerisierbaren Verbindung (B), aufweist, und
wobei die kationisch polymerisierbare Verbindung (B) eine monofunktionelle Oxetanverbindung, eine polyfunktionelle Oxiranverbindung und eine polyfunktionelle Oxetanverbindung umfasst.

16. Tintenzusammensetzung nach Anspruch 15, wobei 60 bis 100 Gew.-% des Gesamtgewichts der Oxiranverbindung, Oxetanverbindung und Vinyletherverbindung mit einer Viskosität bei 25 °C von nicht mehr als 12 mPa·s ein polyfunktionelles Monomer ist.

17. Tintenzusammensetzung nach Anspruch 15 oder 16, wobei die kationisch polymerisierbare Verbindung (B) eine aus Kohlenstoff, Wasserstoff und etherischen Sauerstoffatomen bestehende Verbindung ist.

18. Tintenzusammensetzung nach einem der Ansprüche 15 bis 17, wobei die kationisch polymerisierbare Verbindung (B) aus einer monofunktionellen Oxetanverbindung, einer polyfunktionellen Oxiranverbindung und einer polyfunktionellen Oxetanverbindung besteht.

19. Tintenzusammensetzung nach einem der Ansprüche 15 bis 18, wobei sie eine Viskosität bei 25 °C von 7 bis 35 mPa·s aufweist.

20. Tintenzusammensetzung nach einem der Ansprüche 15 bis 19, wobei sie (D) eine Aminverbindung umfasst.

21. Tintenzusammensetzung nach Anspruch 20, wobei die Aminverbindung (D) eine gehinderte Aminverbindung ist.

22. Tintenzusammensetzung nach einem der Ansprüche 15 bis 20, wobei das Molekulargewicht der Oxiranverbindung, Oxetanverbindung oder Vinyletherverbindung, die eine Viskosität bei 25 °C von nicht mehr als 12 mPa·s aufweist, 98 bis 300 beträgt.

23. Tintenstrahlaufzeichnungsverfahren umfassend:
(a¹) einen Schritt des Ausstoßens der Tintenzusammensetzung nach einem der Ansprüche 15 bis 21 auf ein Aufzeichnungsmedium; und
(b¹) einen Schritt des Härtens der Tintenzusammensetzung durch Bestrahlen der ausgestoßenen Tintenzusammensetzung mit aktinischer Strahlung.

24. Tintenstrahlaufzeichnungsverfahren nach Anspruch 23, wobei das Ausstoßen unter Verwendung eines Tintenstrahlkopfes erfolgt, welcher eine Tintenzusammensetzung mittels Deformation eines piezoelektrischen Elements ausstößt.

25. Tintenstrahlaufzeichnungsverfahren nach Anspruch 23 oder 24, wobei das Ausstoßen mit einem Flüssigkeitströpfchenvolumen von 1 bis 10 pL und mit 1.200 x 1.200 bis 4.800 x 4.800 dpi erfolgt.

## Revendications

1. Composition d'encre comprenant :
(A) un pigment différent de l'oxyde de titane ;
(B) un composé cationiquement polymérisable ; et
(C) un générateur de photo-acide,
le pigment (A) ayant une teneur de 3,5 à 20 % en masse, par rapport à la composition d'encre entière,
le composé cationiquement polymérisable (B) consistant en un composé d'oxétane monofonctionnel, un composé d'oxirane polyfonctionnel et un composé d'oxétane polyfonctionnel,
le composé d'oxétane monofonctionnel, le composé d'oxirane polyfonctionnel et le composé d'oxétane polyfonctionnel comprenant un composé de faible viscosité ayant une viscosité à 25°C d'au plus 12 mPa·s, et
le composé de faible viscosité ayant une teneur totale de 65 à 100 % en masse par rapport à la masse totale du composé cationiquement polymérisable (B),
dans laquelle de 60 à 100 % en masse du composé de faible viscosité sont le composé d'oxirane polyfonctionnel et le composé d'oxétane polyfonctionnel.

2. Composition d'encre selon la revendication 1, dans laquelle la masse moléculaire du composé de faible viscosité est de 98 à 300.

3. Composition d'encre selon la revendication 1 ou 2, dans laquelle le composé cationiquement polymérisable (B) est un composé constitué d'atomes de carbone, d'hydrogène et d'oxygène éthéré.

4. Composition d'encre selon l'une quelconque des revendications 1 à 3, dans laquelle elle présente une viscosité à 25°C de 7 à 35 mPa.s.

5. Composition d'encre selon l'une des revendications 1 à 4, dans laquelle elle comprend (D) un composé d'amine.

6. Composition d'encre selon la revendication 5, dans laquelle le composé d'amine (D) est un composé d'amine encombrée.

7. Composition d'encre selon l'une quelconque des revendications 1 à 6, dans laquelle le pigment (A) est un pigment de phtalocyanine de cuivre, un pigment azo, un pigment de quinacridone, ou un pigment de noir de carbone.

8. Composition d'encre selon l'une quelconque des revendications 1 à 7, dans laquelle le pigment (A) est un pigment de phtalocyanine de cuivre, et le pigment de phtalocyanine de cuivre présente une teneur de 3,5 à 10 % en masse par rapport à la masse totale de la composition d'encre.

9. Composition d'encre selon l'une quelconque des revendications 1 à 7, dans laquelle le pigment (A) est un pigment azo, et le pigment azo présente une teneur de 7,5 à 20 % en masse par rapport à la masse totale de la composition d'encre.

10. Composition d'encre selon l'une quelconque des revendications 1 à 7, dans laquelle le pigment (A) est un pigment de quinacridone, et le pigment de quinacridone présente une teneur de 7,5 à 20 % en masse par rapport à la masse totale de la composition d'encre.

11. Composition d'encre selon l'une quelconque des revendications 1 à 7, dans laquelle le pigment (A) est un pigment de noir de carbone, et le pigment de noir de carbone présente une teneur de 6,0 à 10 % en masse par rapport à la masse totale de la composition d'encre.

12. Procédé d'enregistrement par jet d'encre comprenant :
(a¹) une étape de décharge de la composition d'encre selon l'une quelconque des revendications 1 à 11 sur un support d'enregistrement ; et
(b¹) une étape de durcissement de la composition d'encre par irradiation de la composition d'encre déchargée avec un rayonnement actinique.

13. Procédé d'enregistrement à jet d'encre selon la revendication 12, dans lequel la décharge est réalisée en utilisant une tête de jet d'encre qui décharge une composition d'encre au moyen d'une déformation d'un élément piézoélectrique.

14. Procédé d'enregistrement à jet d'encre selon la revendication 12 ou 13, dans lequel la décharge est réalisée avec un volume de gouttelette de liquide de 1 à 10 pL et à de 1 200 x 1 200 à 4 800 x 4 800 dpi.

15. Composition d'encre comprenant :
(A') de l'oxyde de titane ;
(B) un composé cationiquement polymérisable ; et
(C) un générateur de photoacide,
l'oxyde de titane (A') ayant une teneur de 35 à 45 % en masse par rapport à la masse totale de la composition d'encre,
le composé cationiquement polymérisable (B) comprenant un composé d'oxirane, un composé d'oxétane, ou un composé de vinyléther ayant une viscosité à 25°C d'au plus 12 mPa.s, et
le composé d'oxirane, le composé d'oxétane, et le composé de vinyléther ayant une viscosité à 25°C d'au plus 12 mPa.s présentant une teneur totale de 65 à 100 % en masse par rapport à la masse totale du composé cationiquement polymérisable (B) et
dans laquelle le composé cationiquement polymérisable (B) comprend un composé d'oxétane monofonctionnel, un composé d'oxirane polyfonctionnel et un composé d'oxétane polyfonctionnel.

16. Composition d'encre selon la revendication 15, dans laquelle de 60 à 100 % en masse de la masse totale du composé d'oxirane, du composé d'oxétane, et du composé de vinyléther ayant une viscosité à 25°C d'au plus 12 mPa.s sont un monomère polyfonctionnel.

17. Composition d'encre selon la revendication 15 ou 16, dans laquelle le composé cationiquement polymérisable (B) est un composé constitué d'atomes de carbone, d'hydrogène, et d'oxygène éthéré.

18. Composition d'encre selon l'une quelconque des revendications 15 à 17, dans laquelle le composé cationiquement polymérisable (B) est constitué d'un composé d'oxétane monofonctionnel, d'un composé d'oxirane polyfonctionnel et d'un composé d'oxétane polyfonctionnel.

19. Composition d'encre selon l'une quelconque des revendications 15 à 18, dans laquelle elle présente une viscosité à 25°C de 7 à 35 mPa.s.

20. Composition d'encre selon l'une quelconque des revendications 15 à 19, dans laquelle elle comprend (D) un composé d'amine.

21. Composition d'encre selon la revendication 20, dans laquelle le composé d'amine (D) est un composé d'amine encombrée.

22. Composition d'encre selon l'une quelconque des revendications 15 à 20, dans laquelle la masse moléculaire du composé d'oxirane, du composé d'oxétane où du composé de vinyléther ayant une viscosité à 25°C d'au plus 12 mPa.s est de 98 à 300.

23. Procédé d'enregistrement à jet d'encre comprenant :
(a¹) une étape de décharge de la composition d'encre selon l'une quelconque des revendications 15 à 21 sur un support d'enregistrement ; et
(b¹) une étape de durcissement de la composition d'encre par irradiation de la composition d'encre déchargée avec un rayonnement actinique.

24. Procédé d'enregistrement à jet d'encre selon la revendication 23, dans lequel la décharge est réalisée en utilisant une tête de jet d'encre qui décharge une composition d'encre au moyen d'une déformation d'un élément piézoélectrique.

25. Procédé d'enregistrement à jet d'encre selon la revendication 23 ou 24, dans lequel la décharge est réalisée avec un volume de gouttelette de liquide de 1 à 10 pL et à de 1 200 x 1 200 à 4 800 x 4 800 dpi.
